# EUROPEAN PATENT APPLICATION

(11) **EP 4 279 957 A1**
(43) Date of publication of application: **22.11.2023**
(21) Application number: 21919544.3
(22) Date of filing: 09.11.2021
(51) Int. Cl.: G01S 17/86

(54) **DISTANCE-MEASURING SYSTEM**

(30) Priority: 13.01.2021 JP 2021003203
(71) Applicant: Panasonic Intellectual Property Management Co., Ltd., Osaka-shi, Osaka 540-6207 (JP)
(72) Inventor: KATO, Yumiko, Osaka 571-0057 (JP); MATSUNOBU, Toru, Osaka 571-0057 (JP); INADA Yasuhisa, Osaka 571-0057 (JP)
(74) Representative: Grünecker Patent- und Rechtsanwälte PartG mbB
(86) International application number: PCT/JP2021/041251
(87) International publication number: WO 2022/153653

(57) **Abstract**

A distance measurement system comprises multiple distance measurement devices, including a LiDAR sensor and at least one other distance measurement device, and a storage device storing three-dimensional point cloud data based on distance measurement data acquired by each of the multiple distance measurement devices. The LiDAR sensor comprises a light-emitting device that can change an emission direction of a light beam, a light-receiving device that detects reflected light from the light beam and outputs a signal indicating a detection result, and a processing circuit that controls the light-emitting device and the light-receiving device to generate the distance measurement data on a basis of the signal outputted from the light-receiving device. The processing circuit references the point cloud data to determine at least one empty area in the point cloud data, and measures distance in the empty area by causing the light-emitting device to emit the light beam toward the empty area.

## Description

### Technical Field

The present disclosure relates to a distance measurement system.

### Background Art

In the related art, a variety of devices have been proposed to acquire distance data about an object by irradiating the object with light and detecting reflected light from the object. Distance data for a target scene may be converted into three-dimensional point cloud data and used, for example. Typically, point cloud data is data in which a distribution of points where an object exists in a scene is expressed by three-dimensional coordinates.

Patent Literature 1 discloses a system in which depth information in a first depth map generated by a first camera is complemented on the basis of depth information in a second depth map generated by a second camera. In the system in Patent Literature 1, the depth value of an empty pixel that is missing depth information in the first depth map is complemented on the basis of the depth value of a corresponding pixel in the second depth map. The system generates a 3D model (for example, a point cloud) of an object on the basis of the first depth map in which the depth values of empty pixels have been complemented.

### Citation List

### Patent Literature

PTL 1: Japanese Patent No. 6656549

### Summary of Invention

### Technical Problem

One aspect of the present disclosure provides a novel sensing method for a system including multiple distance measurement devices, in which the sensing method selectively measures the distance in an area where data has not been obtained by another distance measurement device.

### Solution to Problem

A LiDAR sensor according to one aspect of the present disclosure is used in a distance measurement system comprising multiple distance measurement devices, including the LiDAR sensor and at least one other distance measurement device, and a storage device storing three-dimensional point cloud data based on distance measurement data acquired by each of the multiple distance measurement devices. The LiDAR sensor comprises a light-emitting device that can change an emission direction of a light beam, a light-receiving device that detects reflected light from the light beam and outputs a signal indicating a detection result, and a processing circuit that controls the light-emitting device and the light-receiving device to generate the distance measurement data on a basis of the signal outputted from the light-receiving device. The processing circuit references the point cloud data to determine at least one empty area in the point cloud data, and measures distance in the empty area by causing the light-emitting device to emit the light beam toward the empty area.

It should be noted that these general or specific aspects of the present disclosure may also be implemented as a system, a device, a method, an integrated circuit, a computer program, a computer-readable recording medium such as a recording disk, or any selective combination thereof. Computer-readable recording media include volatile recording media as well as non-volatile recording media such as a Compact Disc Read-Only Memory (CD-ROM). A device may also include one or more devices. In the case where a device includes two or more devices, the two or more devices may be disposed inside a single piece of equipment or disposed separately in two or more discrete pieces of equipment. In the specification and claims herein, a "device" may not only refer to a single device, but also to a system including multiple devices.

### Advantageous Effects of Invention

According to one aspect of the present disclosure, it is possible to acquire more distance data by selectively measuring the distance in an area where data has not been obtained by another distance measurement device.

Additional benefits and advantages of the various embodiments included in the present disclosure will become apparent from the specification and drawings. The benefits and/or advantages may be individually obtained by the various embodiments or the features of a portion of the embodiments disclosed in the specification and drawings. Not all of the disclosed features need be provided in order to obtain one or more of such benefits and/or advantages.

### Brief Description of Drawings

[Fig. 1] Fig. 1 is a block diagram schematically illustrating an example of the configuration of a system that controls a moving body according to Embodiment 1.
[Fig. 2] Fig. 2 is a top view schematically illustrating an example of a vehicle provided with multiple distance measurement devices.
[Fig. 3] Fig. 3 is a diagram illustrating an example of the configuration of a beam scanner and a light-receiving device.
[Fig. 4] Fig. 4 is a diagram illustrating another example of the configuration of a beam scanner.
[Fig. 5] Fig. 5 is a diagram illustrating yet another example of the configuration of a beam scanner.
[Fig. 6] Fig. 6 is a diagram illustrating an example of general operations by a distance measurement system.
[Fig. 7A] Fig. 7A is an overhead view schematically illustrating an example of a point cloud of which the distance is measured by a distance measurement system.
[Fig. 7B] Fig. 7B is a diagram for explaining a three-dimensional coordinate system used in Embodiment 1.
[Fig. 7C] Fig. 7C is a schematic diagram in which the point cloud illustrated in Fig. 7A is projected onto a curved surface a distance di away from a reference point.
[Fig. 8] Fig. 8 is a diagram illustrating an example of point cloud data stored by a storage device.
[Fig. 9] Fig. 9 is a diagram illustrating an example of data on empty areas stored by a storage device of a LiDAR sensor.
[Fig. 10] Fig. 10 is a flowchart outlining operations by a LiDAR sensor.
[Fig. 11] Fig. 11 is a flowchart illustrating details of the process for extracting empty areas in step S1400.
[Fig. 12] Fig. 12 is a flowchart illustrating details of the block extraction operations in step S1420.
[Fig. 13] Fig. 13 is a flowchart illustrating details of the empty area distance measurement operations in step S1500.
[Fig. 14] Fig. 14 is a flowchart illustrating details of empty area extraction operations in Embodiment 2.
[Fig. 15] Fig. 15 is a flowchart illustrating detailed operations in step S2410.
[Fig. 16] Fig. 16 is a diagram illustrating an example of a function defining the relationship between an azimuthal angle ϕ and a weight ωϕ.
[Fig. 17] Fig. 17 is a diagram illustrating an example of a function defining the relationship between a polar angle θ and a weight ωθ.
[Fig. 18] Fig. 18 is a diagram illustrating an example of information on empty areas recorded in a storage device of a LiDAR sensor.
[Fig. 19] Fig. 19 is a flowchart illustrating details of empty area distance measurement operations by the LiDAR sensor in Embodiment 2.
[Fig. 20] Fig. 20 is a block diagram illustrating a configuration of Modification 1 of Embodiment 2.
[Fig. 21A] Fig. 21A is a diagram illustrating an example of a recognition result recorded in a storage device of an image recognition device.
[Fig. 21B] Fig. 21B is a diagram illustrating an example of camera information recorded in a storage device of an image recognition device.
[Fig. 22] Fig. 22 is a flowchart illustrating operations by a LiDAR sensor in Modification 1 of Embodiment 2.
[Fig. 23] Fig. 23 is a flowchart illustrating details of operations for extracting empty areas and determining order of priority.
[Fig. 24] Fig. 24 is a diagram illustrating an example of information related to empty areas recorded in a storage device of a LiDAR sensor.
[Fig. 25] Fig. 25 is a flowchart illustrating details of a method for determining relative priority in step S2340.
[Fig. 26] Fig. 26 is a diagram illustrating an example of a correspondence table between recognition results and relative priorities.
[Fig. 27] Fig. 27 is a block diagram illustrating a configuration of Modification 2 of Embodiment 2.
[Fig. 28] Fig. 28 is a diagram illustrating an example of operations by a distance measurement system in Modification 2 of Embodiment 2.
[Fig. 29A] Fig. 29A is a diagram illustrating an example of structure location information which is generated by a matching device and recorded in a storage device.
[Fig. 29B] Fig. 29B is a diagram illustrating an example of structure-related information.
[Fig. 30] Fig. 30 is a diagram illustrating an example of point cloud data in Modification 2 of Embodiment 2.
[Fig. 31] Fig. 31 is a flowchart illustrating details of the operations for extracting empty areas in step S1400.
[Fig. 32] Fig. 32 is a diagram illustrating an example of information stored by a storage device.
[Fig. 33] Fig. 33 is a flowchart illustrating details of the operations in step S2480.
[Fig. 34] Fig. 34 is an example of a function expressing the relationship between the minimum value of d' and a weight ωd.
[Fig. 35] Fig. 35 is a diagram illustrating an example of operations by a distance measurement system in Embodiment 3.
[Fig. 36] Fig. 36 is a flowchart illustrating operations by a LiDAR sensor in Embodiment 3.
[Fig. 37] Fig. 37 is a flowchart illustrating details of the operations in step S3100.
[Fig. 38] Fig. 38 is a flowchart illustrating details of the operations in step S3300.
[Fig. 39] Fig. 39 is a flowchart illustrating details of the operations in step S3500.
[Fig. 40] Fig. 40 is a diagram illustrating an example of operations by a distance measurement system in Modification 1 of Embodiment 3.
[Fig. 41] Fig. 41 is a flowchart illustrating operations by a LiDAR sensor in Modification 1 of Embodiment 3.
[Fig. 42] Fig. 42 is a flowchart illustrating details of the operations in step S4400.
[Fig. 43] Fig. 43 is a block diagram illustrating a configuration of a system according to Embodiment 4.
[Fig. 44] Fig. 44 is a diagram illustrating an overview of operations by a distance measurement system in Embodiment 4.
[Fig. 45] Fig. 45 is a flowchart illustrating a specific example of operations by a stereo camera in Embodiment 4.
[Fig. 46] Fig. 46 is a diagram illustrating an example of information recorded in a storage device.
[Fig. 47] Fig. 47 is a flowchart illustrating operations by a LiDAR sensor in Embodiment 4.
[Fig. 48] Fig. 48 is a flowchart illustrating details of the operations for extracting empty areas in step S7200.
[Fig. 49] Fig. 49 is a diagram illustrating an example of information recorded in a storage device of a LiDAR sensor in Embodiment 4.
[Fig. 50] Fig. 50 is a flowchart illustrating details of operations for calculating relative priority in step S7220.
[Fig. 51] Fig. 51 is a flowchart illustrating details of the distance measurement operations in step S7300.
[Fig. 52] Fig. 52 is a flowchart illustrating operations by a stereo camera in Modification 1 of Embodiment 4.
[Fig. 53] Fig. 53 is a diagram illustrating an example of information stored by a storage device in Modification 1 of Embodiment 4.
[Fig. 54] Fig. 54 is a flowchart illustrating a specific example of operations by a LiDAR sensor in Modification 1 of Embodiment 4.
[Fig. 55] Fig. 55 is a flowchart illustrating details of operations for extracting empty areas and determining order of priority in step S8600.
[Fig. 56] Fig. 56 is a diagram illustrating an example of information stored by a storage device of a LiDAR sensor.
[Fig. 57] Fig. 57 is a flowchart illustrating details of the operations in step S8630.
[Fig. 58] Fig. 58 is a diagram illustrating an example of a table defining a correspondence relationship between closed curve information and weights.
[Fig. 59] Fig. 59 is a diagram illustrating an example of a table defining a correspondence relationship between edge information and weights.
[Fig. 60] Fig. 60 is a flowchart illustrating details of the distance measurement operations in step S8700 illustrated in Fig. 54.
[Fig. 61] Fig. 61 is a first diagram for explaining a three-dimensional measurement method for an edge portion based on a left camera in a stereo camera.
[Fig. 62] Fig. 62 is a second diagram for explaining a three-dimensional measurement method for an edge portion based on a left camera in a stereo camera.
[Fig. 63] Fig. 63 is a third diagram for explaining a three-dimensional measurement method for an edge portion based on a left camera in a stereo camera.
[Fig. 64] Fig. 64 is a diagram illustrating an overview of operations by a distance measurement system in Modification 2 of Embodiment 4.
[Fig. 65] Fig. 65 is a flowchart illustrating operations by a LiDAR sensor in Modification 2 of Embodiment 4.
[Fig. 66] Fig. 66 is a diagram illustrating an example of information indicating camera center coordinates of a stereo camera which are recorded in a storage device.
[Fig. 67] Fig. 67 is a flowchart illustrating details of the operations in step S9200.
[Fig. 68] Fig. 68 is a diagram illustrating an example of information recorded in a storage device.
[Fig. 69] Fig. 69 is a flowchart illustrating details of the empty area distance measurement operations by a LiDAR sensor in step S9300 illustrated in Fig. 65.
[Fig. 70] Fig. 70 is a block diagram illustrating a configuration of a system according to Modification 3 of Embodiment 4.
[Fig. 71] Fig. 71 is an example of a flowchart illustrating operations by a monocular distance measurement camera in Modification 3 of Embodiment 4.
[Fig. 72] Fig. 72 is another example of a flowchart illustrating operations by a monocular distance measurement camera in Modification 3 of Embodiment 4. Description of Embodiments

In the present disclosure, all or part of the circuits, units, devices, members, or sections, or all or part of the function blocks in the block diagrams, may also be executed by one or multiple electronic circuits, including a semiconductor device, a semiconductor integrated circuit (IC), or a large-scale integration (LSI) chip, for example. An LSI chip or IC may be integrated into a single chip, or may be configured by combining multiple chips. For example, function blocks other than memory elements may be integrated into a single chip. Although referred to as an LSI chip or IC herein, such electronic circuits may also be called a system LSI chip, a very large-scale integration (VLSI) chip, or an ultra-large-scale integration (ULSI) chip, depending on the degree of integration. A field-programmable gate array (FPGA) programmed after fabrication of the LSI chip, or a reconfigurable logic device in which interconnection relationships inside the LSI chip may be reconfigured or in which circuit demarcations inside the LSI chip may be set up, may also be used for the same purpose.

Furthermore, the functions or operations of all or part of a circuit, unit, device, member, or section may also be executed by software processing. In this case, the software is recorded onto a non-transitory recording medium, such as one or multiple ROM modules, optical discs, or hard disk drives, and when the software is executed by a processor, the function specified by the software is executed by the processor and peripheral devices. A system or device may also be provided with one or multiple non-transitory recording media on which the software is recorded, a processor, and necessary hardware devices, such as an interface, for example.

Before describing specific embodiments of the present disclosure, an overview of embodiments of the present disclosure will be described.

A distance measurement system according to one aspect of the present disclosure comprises multiple distance measurement devices, including a LiDAR sensor and at least one other distance measurement device, and a storage device storing three-dimensional point cloud data based on distance measurement data acquired by each of the multiple distance measurement devices. The LiDAR sensor comprises a light-emitting device that can change an emission direction of a light beam, a light-receiving device that detects reflected light from the light beam and outputs a signal indicating a detection result, and a processing circuit that controls the light-emitting device and the light-receiving device to generate the distance measurement data on a basis of the signal outputted from the light-receiving device. The processing circuit references the point cloud data to determine at least one empty area in the point cloud data, and measures distance in the empty area by causing the light-emitting device to emit the light beam toward the empty area.

According to the above configuration, the LiDAR sensor selectively measures the distance in empty areas where distance measurement data has not been obtained by another distance measurement device. With this arrangement, more distance data can be acquired efficiently in a system that includes multiple distance measurement devices.

The processing circuit may determine multiple empty areas in the point cloud data, set a priority sequence for the multiple empty areas, and measure distance in the multiple empty areas sequentially according to the set priority sequence by causing the light-emitting device to emit the light beam in a direction of each of the empty areas.
the processing circuit may determine, on the basis of an image acquired by a camera, whether a specific type of object exists in the multiple empty areas and cause an empty area where the specific type of object exists to be higher in the order of priority than another empty area among the multiple empty areas.

The at least one other distance measurement device may include a stereo camera. The camera may be one of two cameras provided in the stereo camera.

The processing circuit may detect at least one closed curve in the image and cause a relative priority of an empty area corresponding to the inside of the closed curve to be higher than the relative priority of another empty area.

The at least one other distance measurement device may include a stereo camera provided with two cameras. The processing circuit may cause a relative priority of an empty area corresponding to a feature from among features identified from a first image acquired by one of the two cameras for which a corresponding point is not detected in a second image acquired by the other of the two cameras to be higher than the relative priority of another empty area.

The processing circuit may acquire map data including structure location information and match the map data to the point cloud data to thereby extract at least one empty area corresponding to a location of a specific structure from the multiple empty areas, and cause a relative priority of the extracted empty area to be higher than a relative priority of another empty area.

The processing circuit may set a higher relative priority with respect to a larger empty area among the multiple empty areas.

The processing circuit may set a representative point inside the empty area and cause the light-emitting device to emit the light beam toward the representative point.

The representative point may be the center of the empty area.

If the empty area is larger than a predetermined size, the processing circuit may divide the empty area into multiple partial areas and cause the light-emitting device to sequentially emit the light beam in a direction of each of the divided partial areas.

The LiDAR sensor may measure distance asynchronously with the at least one other distance measurement device.

The processing circuit may execute the determination of the empty area and the distance measurement in the empty area if the point cloud data in the storage device is updated.

If the point cloud data is updated while the determination of the empty area and/or the distance measurement in the empty area is in operation, the processing circuit may reexecute the determination of the empty area and/or the distance measurement in the empty area.

The storage device may update the point cloud data when new distance measurement data is acquired from the at least one other distance measurement device or if a location and/or an orientation of the distance measurement system changes.

If a location and/or an orientation of the distance measurement system changes, the storage device may update the point cloud data by performing a coordinate conversion. When the storage device updates the point cloud data by performing the coordinate conversion, the processing circuit may re-set a relative priority of the multiple empty areas.

The present disclosure also includes a moving body comprising the distance measurement system according to one of the aspects described above.

A LiDAR sensor according to another aspect of the present disclosure is used in a distance measurement system comprising multiple distance measurement devices, including the LiDAR sensor and at least one other distance measurement device, and a storage device storing three-dimensional point cloud data based on distance measurement data acquired by each of the multiple distance measurement devices. The LiDAR sensor comprises a light-emitting device that can change an emission direction of a light beam, a light-receiving device that detects reflected light from the light beam and outputs a signal indicating a detection result, and a processing circuit that controls the light-emitting device and the light-receiving device to generate the distance measurement data on a basis of the signal outputted from the light-receiving device. The processing circuit references the point cloud data to determine at least one empty area in the point cloud data, and measures distance in the empty area by causing the light-emitting device to emit the light beam toward the empty area.

A method according to another aspect of the present disclosure is a method for controlling a LiDAR sensor used in a distance measurement system comprising multiple distance measurement devices, including the LiDAR sensor and at least one other distance measurement device, and a storage device storing three-dimensional point cloud data based on distance measurement data acquired by each of the multiple distance measurement devices. The method includes referencing the point cloud data to determine at least one empty area in the point cloud data, and causing the LiDAR sensor to execute distance measurement in the empty area by causing a light beam to be emitted toward the empty area.

A computer program according to another aspect of the present disclosure is used in a distance measurement system comprising multiple distance measurement devices, including a LiDAR sensor and at least one other distance measurement device, and a storage device storing three-dimensional point cloud data based on distance measurement data acquired by each of the multiple distance measurement devices. The computer program causes a computer to execute a process comprising referencing the point cloud data to determine at least one empty area in the point cloud data, and causing the LiDAR sensor to execute distance measurement in the empty area by causing a light beam to be emitted toward the empty area.

Hereinafter, exemplary embodiments of the present disclosure will be described specifically. Note that the embodiments described hereinafter all illustrate general or specific examples. Features such as numerical values, shapes, structural elements, placement and connection states of structural elements, steps, and the ordering of steps indicated in the following embodiments are merely examples, and are not intended to limit the present disclosure. In addition, among the structural elements in the following embodiments, structural elements that are not described in the independent claim indicating the broadest concept are described as arbitrary or optional structural elements. Also, each diagram is a schematic diagram, and does not necessarily illustrate a strict representation. Furthermore, in the drawings, identical or similar components are denoted by the same signs. Duplicate description may be omitted or simplified in some cases.

### (Embodiment 1)

A system in an exemplary Embodiment 1 of the present disclosure will be described. The system in the present embodiment is installed in a moving body and controls the operations of the moving body. The moving body may be a vehicle that drives automatically while sensing the surrounding environment, for example. Examples of such a vehicle include an automobile, an automated guided vehicle (AGV), and a service vehicle. The moving body may also be a moving body other than a vehicle. For example, the moving body may also be a multi-copter or other unmanned aerial vehicle (also referred to as a drone), or a bipedal or multi-legged walking robot.

### [1. Configuration]

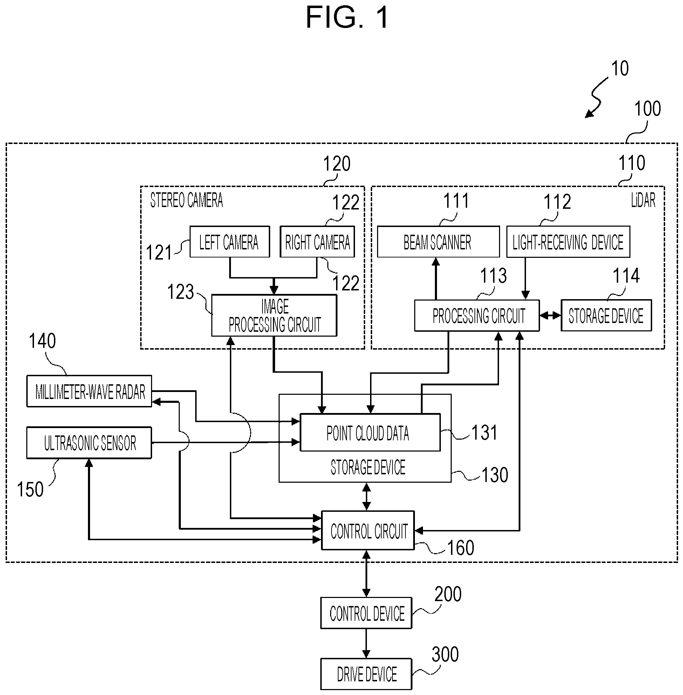

Fig. 1 is a block diagram schematically illustrating an example of the configuration of a moving body control system 10 in the present embodiment. The moving body control system 10 in the present embodiment is provided with a distance measurement system 100, a control device 200, and a drive device 300. The distance measurement system 100 is provided with multiple distance measurement devices that acquire distance data by sensing the environment around a moving body. The distance measurement system 100 may also be referred to as an "environment sensing system". The control device 200 controls the operations of the moving body by controlling the distance measurement system 100 and the drive device 300. The drive device 300 causes the moving body to move according to the control by the control device 200. In the case in which the moving body is a vehicle capable of self-driving, the drive device 300 may various devices necessary for driving, such as an engine or an electric motor for driving, a transmission, a steering device, a power transmission, and multiple wheels. In this case, the control device 200 may be a set of electronic control units (ECUs) that control the operations of the vehicle.

The distance measurement system 100 is provided with multiple types of distance measurement devices with different distance measurement methods, a storage device 130, and a control circuit 160. Each distance measurement device may be, for example, a time-of-flight (ToF) camera, a light detection and ranging (LiDAR) sensor, a millimeter-wave radar, an ultrasonic sensor (or sonar), a stereo camera (or multi-camera), or a monocular camera with a distance measurement function. The distance measurement system 100 illustrated in Fig. 1 is provided with the four distance measurement devices of a LiDAR sensor 110, a stereo camera 120, a millimeter-wave radar 140, and an ultrasonic sensor 150. The number and types of distance measurement devices provided in the distance measurement system 100 are not limited to the above example. For example, the distance measurement system 100 may be provided with only the two distance measurement devices of the LiDAR sensor 110 and the stereo camera 120.

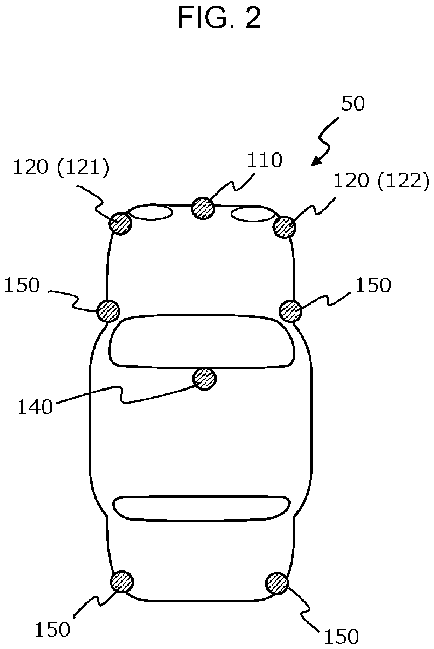

Fig. 2 is a top view schematically illustrating an example of a vehicle 50 provided with multiple distance measurement devices. The vehicle 50 in this example is provided with the LiDAR sensor 110, the stereo camera 120, the millimeter-wave radar 140 and four ultrasonic sensors 150 as distance measurement devices. The stereo camera 120 includes a left camera 121 and a right camera 122. In this way, the multiple distance measurement devices may be disposed in multiple places on the vehicle 50. Each distance measurement device may be disposed on the outside of the vehicle 50 or on the inside of the vehicle 50. With these distance measurement devices, distance data indicating a distribution of objects in the environment surrounding the vehicle 50 is acquired. The distance data is also referred to as "distance measurement data". The arrangement of the distance measurement devices is not limited to the example illustrated in Fig. 2 and is to be determined according to use. Moreover, multiple distance measurement devices may also be disposed in a moving body other than the vehicle 50.

Referring to Fig. 1 again, each component of the distance measurement system 100 will be described in further detail.

The LiDAR sensor 110 illustrated in Fig. 1 is provided with a beam scanner 111, a light-receiving device 112, a processing circuit 113, and a storage device 114. The beam scanner 111 is a light-emitting device that can emit a light beam, such as laser light, in multiple directions contained in a prescribed spatial range. The light-receiving device 112 detects reflected light produced when a light beam emitted by the beam scanner 111 is reflected by an object. The processing circuit 113 calculates the distance from the LiDAR sensor 110 to each reflection point on the basis of a signal generated when the light-receiving device 112 detects reflected light. The storage device 114 stores data indicating directions in which a light beam is to be emitted. The directions in which a light beam is to be emitted are determined on the basis of point cloud data 131 stored in the storage device 130. The point cloud data 131 is data indicating the three-dimensional locations of multiple points measured by the multiple distance measurement device within a certain period. The processing circuit 113 detects, on the basis of the point cloud data 131, empty areas where the distance has not been measured by another distance measurement device, and determines the emission direction of a light beam so that the empty areas are irradiated by the light beam. The processing circuit 113 controls the beam scanner 111 to emit a light beam in the determined direction. Through such operations, more distance data can be acquired for a scene subject to distance measurement.

The beam scanner 111 is a light-emitting device that can change the emission direction of a light beam. The beam scanner 111 is provided with one or more light sources and emits a light beam in a direction designated by the processing circuit 113. Hereinafter, several examples of the configuration of the beam scanner 111 will be described.

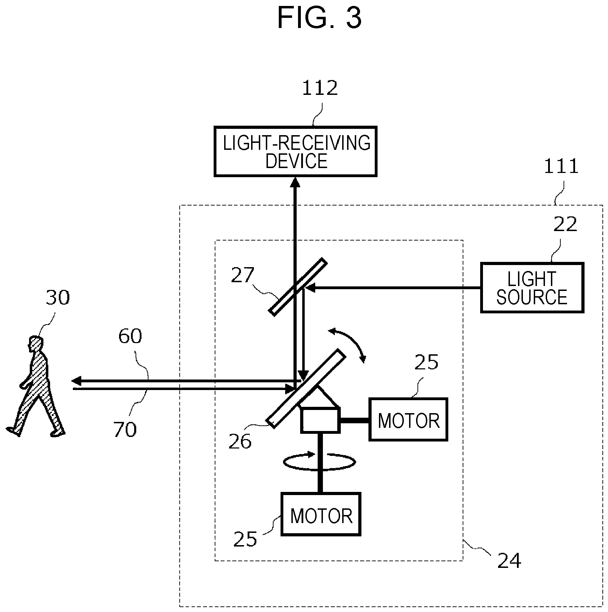

Fig. 3 is a diagram illustrating an example of the configuration of the beam scanner 111 and the light-receiving device 112. The beam scanner 111 in this example is provided with a light source 22 and an actuator 24. The actuator 24 is provided with a movable mirror 26.
The beam scanner 111 can rotate the mirror 26 by the action of the actuator 24 to change the emission direction of a light beam.

The light source 22 is, for example, a laser light source that emits a laser beam. The spot shape of the laser beam may be a near-circular shape or a line. The light source 22 may include a semiconductor laser element and a lens that collimates a laser beam emitted from the semiconductor laser element.

The wavelength of the laser beam emitted from the light source 22 may be a wavelength included in the near-infrared wavelength range (approximately 700 nm to 2.5 µm), for example. The wavelength to be used depends on the material of a photoelectric conversion element used in the light-receiving device 112. For example, if silicon (Si) is used as the material of the photoelectric conversion element, a wavelength of around 900 nm may be used mainly. If indium gallium arsenide (InGaAs) is used as the material of the photoelectric conversion element, a wavelength equal to or greater than 1000 nm and less than or equal to 1650 nm may be used, for example. Note that the wavelength of the laser beam is not limited to the near-infrared wavelength range. In uses where ambient light does not pose a problem (such as at night, for example), a wavelength included in the visible range (approximately 400 nm to 700 nm) may also be used. It is also possible to use the ultraviolet wavelength range, depending on the use. In this specification, radiation in general in the wavelength ranges of ultraviolet rays, visible light, and infrared rays is referred to as "light".

The actuator 24 in the example illustrated in Fig. 3 is provided with multiple motors 25, a rotating mirror 26 connected to the motors 25, and a half mirror 27.
The mirror 26 can be rotated about two axes by two motors 25. The half mirror 27 is disposed on the optical path of a laser beam emitted from the light source 22 to reflect the laser beam and cause the laser beam to be incident on the mirror 26. The laser beam reflected by the mirror 26 serves as a light beam 60 to irradiate an object 30. The light beam 60 reflected by the object 30 serves as reflected light 70 that returns to the mirror 26, is reflected, and proceeds toward the half mirror 27. The half mirror 27 transmits the reflected light 70 reflected by the mirror 26, causing the reflected light 70 to be incident on the light-receiving device 112. The actuator 24 varies the angle of the mirror 26 in response to a control signal inputted from the processing circuit 113. With this arrangement, the emission direction of the light beam 60 can be varied within a prescribed range.

The actuator 24 may also be provided with a structure different from the one in Fig. 2. For example, the actuator 24 may be provided with a galvo mirror or a MEMS mirror configured to achieve functions similar to the above.

The beam scanner 111 may also be provided with an optical device that can change the emission direction of a light beam without being provided with mechanical moving parts, such as a light scanning device provided with a slow light structure or a phased array, instead of the actuator 24. An optical device with no mechanical moving parts is unaffected by inertia, and thus has the advantage of reducing the influence of vibrations if any occur.

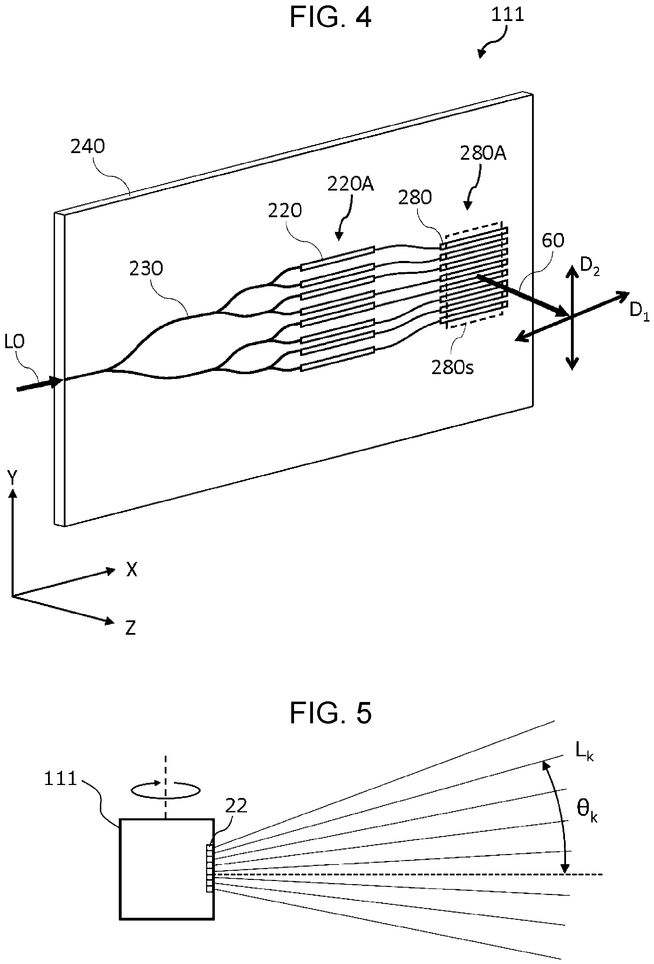

Fig. 4 is a perspective view schematically illustrating a configuration example for the case in which the beam scanner 111 is a light scanning device provided with a slow light structure. In Fig. 4, mutually orthogonal axes X, Y, and Z are illustrated. The beam scanner 111 is provided with an optical waveguide array 280A, a phase shifter array 220A, a beam splitter 230, and a substrate 240 on which the above are integrated. The optical waveguide array 280A includes multiple optical waveguide elements 280 arranged in the Y direction. Each of the optical waveguide elements 280 has a structure extending the X direction. The phase shifter array 220A includes multiple phase shifters 220 arranged in the Y direction. Each of the phase shifters 220 is provided with an optical waveguide extending in the X direction. The multiple optical waveguide elements 280 in the optical waveguide array 280A are connected in a one-to-one manner to the multiple phase shifters 220 in the phase shifter array 220A. The beam splitter 230 is connected to the phase shifter array 220A.

Laser light L0 emitted from a light source is inputted into the multiple phase shifters 220 through the beam splitter 230. The light passing through the multiple phase shifters 220 is inputted into each of the multiple optical waveguide elements 280 with the phase shifted by a certain amount in the Y direction. The light inputted into each of the multiple optical waveguide elements 280 is emitted in a direction intersecting a light emission plane 280s parallel to the XY plane while propagating through the optical waveguide elements 280 in the X direction.

Each of the optical waveguide elements 280 is provided with a pair of mirrors that face each other and a liquid crystal layer positioned between the mirrors. The liquid crystal layer lies between a pair of electrodes parallel to the mirrors, for example. Each of the mirrors is a multilayer reflective film and at least the mirror on the light emission plane 280s side is translucent. Light inputted into the liquid crystal layer propagates through the liquid crystal layer in the X direction while being reflected by the pair of mirrors. Some of the light propagating through the liquid crystal layer passes through the translucent mirror on the light emission plane 280s side and is emitted to the outside. By changing the voltage applied to the pair of electrodes, the refractive index of the liquid crystal layer changes and the direction of the light emitted from the optical waveguide elements 280 to the outside changes. The direction of the light beam 60 emitted from the optical waveguide array 280A can be changed along a direction D1 parallel to the X axis in response to a change in voltage.

Each of the phase shifters 220 includes a total internal reflection waveguide containing a thermo-optical material of which the refractive index changes in response to heat, for example, a heater that thermally contacts the total internal reflection waveguide, and a pair of electrodes for applying a drive voltage to the heater. Light inputted into the total internal reflection waveguide propagates in the X direction while being totally reflected inside the total internal reflection waveguide. Applying a voltage to the pair of electrodes causes the total internal reflection waveguide to be heated by the heater. As a result, the refractive index of the total internal reflection waveguide changes, and the phase of the light outputted from the end of the total internal reflection waveguide changes. By changing the phase difference of the light outputted from two adjacent phase shifters 220, the emission direction of the light beam 60 can be changed in a direction D2 parallel to the Y axis.

With the above configuration, the beam scanner 111 can change the emission direction of the light beam 60 two-dimensionally. Details of the operating principle, operation method, and the like of such a beam scanner 111 are disclosed in the specification of United States Unexamined Patent Application Publication No. 2018/0217258, for example. The entire disclosure of the above document is incorporated herein by reference.

In each of the above examples, beam scanning is achieved by changing, in two mutually orthogonal directions, the emission direction of the light beam 60 to be emitted from a single light source. The configuration is not limited thereto, and a similar function may also be achieved using multiple light sources. For example, a beam scanner 111 like the one illustrated in Fig. 5 may also be used.

Fig. 5 is a diagram schematically illustrating an example of a beam scanner 111 provided with multiple laser light sources 22 arranged vertically. The radially extending straight lines illustrated in Fig. 5 schematically represent the central axis of the laser beams emitted from each of the light sources 22. For simplicity, the spread of the laser beams is ignored and only the central axis of each laser beam is illustrated in the diagram. In this example, laser beams are emitted at respectively different elevation angles from the multiple laser light sources 22 arranged vertically. In Fig. 5, the elevation angle θk of the k-th laser beam Lk is illustrated as an example. The beam scanner 111 in this example is provided with multiple light detectors that each detect the reflected light from the laser beams emitted from the multiple light sources 22. These light sources 22 and light detectors are connected to a motor and are configured to rotate about the rotation axis indicated by the dashed line in Fig. 5. The processing circuit 113 can select which light source 22 is to emit a laser beam from among the multiple light sources 22. By switching the light source 22 that is to emit a laser beam, the processing circuit 113 can change the elevation angle of the emission direction of the laser beam. In addition, by driving the motor, the processing circuit 113 can rotate the beam scanner 111 about the rotation axis to change the azimuthal angle of the emission direction of the laser beam.

The light-receiving device 112 illustrated in Fig. 1 detects reflected light produced by a light beam emitted from the beam scanner 111. The reflected light is the portion of the light included in the light beam that is reflected by an object in the scene and returns to the LiDAR sensor 110. The light-receiving device 112 may be provided with one or more light-receiving elements including a photoelectric conversion element, such as an avalanche photodiode (APD), for example. The light-receiving device 112 may also be a sensor provided with an array of multiple light-receiving elements, such as an image sensor, for example. The image sensor is provided with multiple light-receiving elements arranged one-dimensionally or two-dimensionally. Each light-receiving element outputs an electrical signal that corresponds to the amount of light received. By using an image sensor, distance image data expressing a two-dimensional distribution of distance can be generated. In the following description, image data may simply be referred to as an "image". The light-receiving device 112 is not limited to an image sensor. For example, a light-receiving device provided with a single light-receiving element or an array of a small number of light-receiving elements may also be used.

The LiDAR sensor 110 can measure the distance to an object by using time-of-flight (ToF) technology, for example. ToF technology includes methods such as direct ToF and indirect ToF. In the case in which the LiDAR sensor 110 measures distance according to the direct ToF method, for each light-receiving element, the processing circuit 113 directly measures the time of flight of light, that is, the time between the emission and reception of the light, and calculates the distance from the time and the speed of light. In the case in which the LiDAR sensor 110 measures distance according to the indirect ToF method, the processing circuit 113 sets multiple exposure periods for each light-receiving element, calculates the time from when the emission of a light beam starts to when reflected light arrives at the light-receiving element on the basis of the ratio of the light intensity detected in each of the exposure periods, and calculates the distance from the time and the speed of light. The method of distance measurement is not limited to a ToF method and may also be another method, such as the frequency-modulated continuous wave (FMCW) method, for example. In the case in which the LiDAR sensor 110 measures distance according to the FMCW method, the light-receiving device 112 includes an optical system that creates interference between the emitted light and the reflected light. The processing circuit 113 can estimate the distance on the basis of the frequency of a beat signal generated by periodically modulating the wavelength of the light beam emitted from the beam scanner 111 and detecting the light resulting from the interference between the emitted light and the reflected light.

The processing circuit 113 is a circuit that controls the operations of the beam scanner 111 and the light-receiving device 112 and calculates distance on the basis of a signal outputted from the light-receiving device 112. The processing circuit 113 may be achieved by an integrated circuit including a processor, such as a digital signal processor (DSP) or a microcontroller unit (MCU), for example. While the moving body is moving, the processing circuit 113 identifies an area where the distance has not been measured fully by another distance measurement device, and controls the beam scanner 111 and the light-receiving device 112 to measure distance in the identified area. The processing circuit 113 generates, on the basis of a signal outputted from the light-receiving device 112, distance data indicating the distance to one or more reflection points existing in the scene subject to distance measurement. The processing circuit 113 may also convert and output the generated distance data as point cloud data expressed in a three-dimensional coordinate system fixed to the distance measurement system 100 or the moving body control system 10.

The storage device 114 includes a storage medium or multiple storage media. The storage medium may be a memory such as RAM or ROM, an optical storage medium, or a magnetic storage medium, for example. The storage device 114 stores data of various types, such as data defining areas or directions subject to distance measurement by the LiDAR sensor 110, data generated in the course of the processing by the processing circuit 113, and a computer program to be executed by the processing circuit 113.

The stereo camera 120 is provided with two cameras (namely the left camera 121 and the right camera 122) disposed along a single axis parallel to the road surface, and an image processing circuit 123. As exemplified in Fig. 2, the left camera 121 is installed on the left side when facing the scene to be captured and the right camera 122 is installed on the right side when facing the scene to be captured. The stereo camera 120 is further provided with the image processing circuit 123 that calculates the distance to one or more objects in the scene on the basis of images acquired by the two cameras. The image processing circuit 123 detects one or more corresponding points from two images acquired at the same time by the two cameras, and calculates the difference in the locations of the corresponding points in the images, or in other words, the disparity. The image processing circuit 123 calculates the distance from the stereo camera 120 to the points on the basis of the calculated disparity and the distance between the two cameras.

The millimeter-wave radar 140 is a device that measures the distance and direction to an object in a scene according to the FMCW method, for example. The millimeter-wave radar 140 is provided with a transmitter that emits an electromagnetic wave in the millimeter-wave band, a receiver that detects a reflected wave from an object, and a signal processing circuit. The transmitter is provided with a synthesizer and a transmitting antenna. The synthesizer generates a modulated wave of which the frequency is modulated in time. The transmitting antenna emits the modulated wave as a transmitted wave. The receiver is provided with a receiving antenna, a mixer, and an analog-to-digital (AD) converter. The receiving antenna receives a reflected wave produced due to the transmitted wave being reflected by an object. The mixer mixes the transmitted wave and the received wave to generate an intermediate frequency (IF) signal.
The AD converter converts the IF signal into digital data. The signal processing circuit calculates the distance and direction to the object by executing various types of signal processing based on the digital data. The signal processing circuit can also measure the speed of the object.

The ultrasonic sensor 150 is a device that emits a sound wave in the ultrasonic band and measures the distance from the length of time it takes to receive a reflected wave. The ultrasonic sensor 150 is provided with an emitter that generates the ultrasonic wave, a receiver that detects the ultrasonic wave reflected by an object, and a circuit that calculates the distance.

The control circuit 160 is a circuit that controls the operations of the distance measurement system 100 as a whole. The control circuit 160 may be achieved by an integrated circuit provided with a processor, such as a microcontroller unit (MCU), for example.

The storage device 130 is a device that includes a storage medium or multiple storage media. The storage medium may be a memory such as RAM or ROM, an optical storage medium, or a magnetic storage medium, for example. The storage device 130 stores data, such as data outputted from each distance measurement device and a computer program to be executed by the control circuit 160. The storage device 130 in the present embodiment is also provided with a processor that records the data outputted from each distance measurement device to a storage medium as point cloud data 131. The processor also performs operations for sending a signal indicating an update of the point cloud data 131 to the LiDAR sensor 110 when the point cloud data 131 is updated.

### [2. Operations by distance measurement system]

Next, operations by the distance measurement system 100 in the present embodiment will be described.

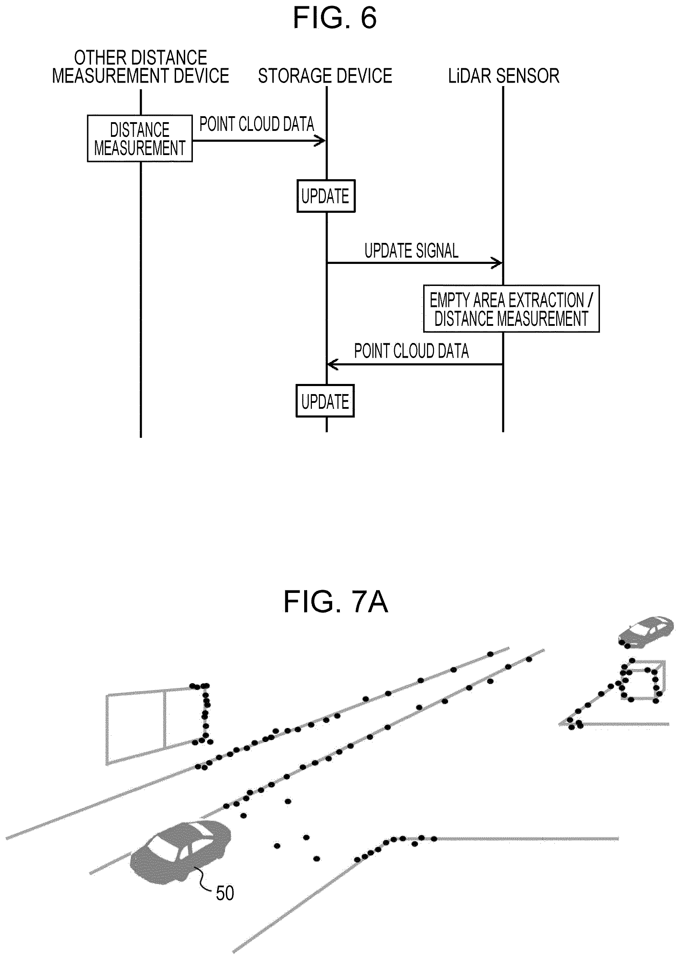

Fig. 6 is a diagram illustrating an example of general operations by the distance measurement system 100. Fig. 6 illustrates the relationship of operations by the LiDAR sensor 110 and another distance measurement device such as the stereo camera 120. The distance measurement system 100 in the present embodiment is provided with multiple types of distance measurement devices with different distance measurement methods. Each of the distance measurement devices successively measures distance in accordance with the characteristics of the distance measurement method of each, and outputs distance measurement data indicating a distance measurement result. In Fig. 6, only the LiDAR sensor 110 and one other distance measurement device other than the LiDAR sensor 110 from among these distance measurement devices are illustrated by way of example.

In the example illustrated in Fig. 6, each distance measurement device generates distance data, including information on the distance and direction from a preset reference point, for one or more points in a scene. Each distance measurement device converts the distance data into coordinate values in a three-dimensional space fixed to the system 10 with the origin at a reference point set for the system 10 (for example, the center or the center of gravity of the moving body), and outputs the converted coordinate values as point cloud data. The storage device 130 consolidates and stores the point cloud data inputted from each distance measurement device. When the storage device 130 acquires data from one of the distance measurement devices and updates the point cloud data, the storage device 130 outputs an update signal. The LiDAR sensor 110, upon acquiring the update signal outputted by the storage device 130, references the point cloud data stored in the storage device 130, extracts empty areas where valid data does not exist or where valid data is relatively sparse in the three-dimensional space, and measures the distance in the empty area. The LiDAR sensor 110 converts data obtained as a result of the distance measurement into point cloud data in the three-dimensional coordinate system fixed to the system 10, and transmits the converted point cloud data to the storage device 130. The storage device 130 updates the point cloud data by consolidating the point cloud data inputted from the LiDAR sensor 110 with the point cloud already stored.

In the present embodiment, the LiDAR sensor 110 measures the distance in empty areas in response to the update signal outputted from the storage device 130. Distance measurement on an individual cycle of the LiDAR sensor 110 and distance measurement synchronized with another distance measurement device are not performed.
The LiDAR sensor 110 is not limited to such operations and may also perform distance measurement on an individual cycle or distance measurement synchronized with another distance measurement device. In the present embodiment, the important point is that the LiDAR sensor 110 selectively measures the distance in empty areas where distance measurement has not been performed adequately by another distance measurement device.

Figs. 7A to 7C will be referenced to describe an example of point cloud data and an empty area in the present embodiment.

Fig. 7A is an overhead view schematically illustrating an example of multiple points, or in other words a point cloud, of which the distance is measured by the distance measurement system 100 installed in the vehicle 50. The black dots in the diagram represent examples of reflection points where the distance is measured by one of the distance measurement devices within a certain period. In the example in Fig. 7A, multiple distance measurement devices measure the distances to various objects existing in the surrounding environment as the vehicle 50, namely an automobile, travels on a road. With this arrangement, distance data expressing the distances to the points representing objects (such as the road, other vehicles, pedestrians, and buildings, for example) existing around the vehicle 50 can be acquired. Each distance measurement device in the present embodiment converts the distance data at each point where the distance is measured into the data of coordinate values in a three-dimensional coordinate system fixed to the vehicle 50, and outputs the converted data as point cloud data. The storage device 130 consolidates and stores the point cloud data outputted from each distance measurement device. Note that the conversion from distance data to point cloud data may also be performed by the processor in the control circuit 160 or the storage device 130 rather than in each distance measurement device. As illustrated in Fig. 7A, the points where the distance is to be measured are not distributed uniformly, but are distributed more densely at the locations of objects that are easily detected according to the characteristics of each distance measurement device.

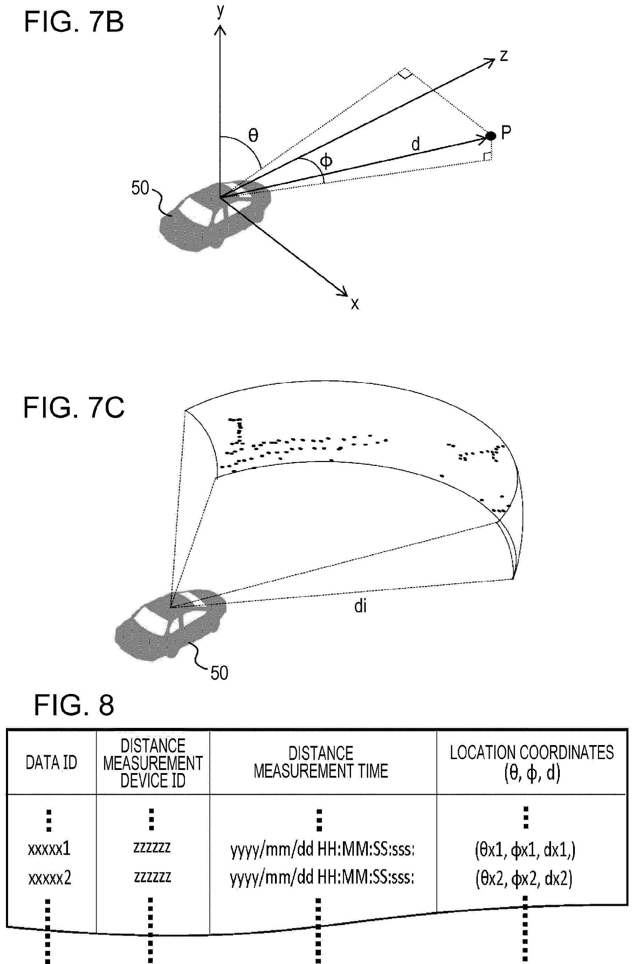

Fig. 7B is a diagram for explaining the three-dimensional coordinate system used in the present embodiment. The three-dimensional coordinate system illustrated in Fig. 7B is defined by an x axis extending to the right relative to the direction of travel (that is, the forward direction) of the vehicle 50, a y axis extending upward from the vehicle 50, and a z axis extending in the forward direction of the vehicle 50. The origin is set to a preset reference point in the vehicle 50 (the center of gravity or the center, for example). The terms front, back, left, right, up, and down in the present embodiment refers to the directions going front, back, left, right, up, and down, respectively, based on a state in which a user is sitting in the driver's seat of the vehicle 50 and facing the steering wheel. In the present embodiment, for convenience the rightward direction is designated the x direction and the upward direction is designated the y direction to match the coordinate system set for a camera disposed pointing in the direction of travel of the vehicle 50. The coordinate system is not limited to the above example and may be defined in any way.

Fig. 7B illustrates the example of a single point P of which the distance is to be measured. The location of the point P may be expressed by a distance d, a polar angle θ, and an azimuthal angle ϕ from the origin. The polar angle θ is the angle between the y axis and the projection, onto the yz plane, of a vector from the origin to the point P. The azimuthal angle ϕ is the angle between the z axis and the projection, onto the xz plane, of a vector from the origin to the point P. The azimuthal angle ϕ takes a positive value when the point P is on the right side of the z axis and a negative value when the point P is on the left side of the z axis. In the present embodiment, the location of each point in the point cloud is recorded by the combination (θ, ϕ, d).

Fig. 7C is a schematic diagram in which the point cloud illustrated in Fig. 7A is projected onto a curved surface a distance di away from the reference point. An empty area is an area on the curved surface of the distance di where there are no points or where the density of the points is low. In the present embodiment, an empty area is expressed by ranges of the angles ϕ and θ. Note that the method of expressing an area is not limited to a representation in terms of ϕ and θ, that is, the azimuthal angle and polar angle of a polar coordinate system. For example, a representation in terms of blocks defined by ranges of values for each of the coordinates x, y, and z in a Cartesian coordinate system may also be used.

Fig. 8 is a diagram illustrating an example of point cloud data stored by the storage device 130. In this example, for each point in the point cloud, a data ID for identifying the point, a distance measurement device ID for identifying the distance measurement device that measured the distance to the point, a distance measurement time which is the time (also including date information in the example in Fig. 8) when the distance to the point was measured, and location coordinates (θ, ϕ, d) expressing the spatial location of the point in a polar coordinate system with the origin at the reference point of the system 10 are recorded. The data on each point in the point cloud is successively generated by each distance measurement device included in the distance measurement system 100. The processor of the storage device 130 may successively acquire information related to the movement, such as the translation and rotation, of the system 10, and use this information as a basis for coordinate conversion and consolidation of the data acquired from each distance measurement system as necessary. Through such operations, the storage device 130 can update the point cloud data and output an update signal in the event of an update.

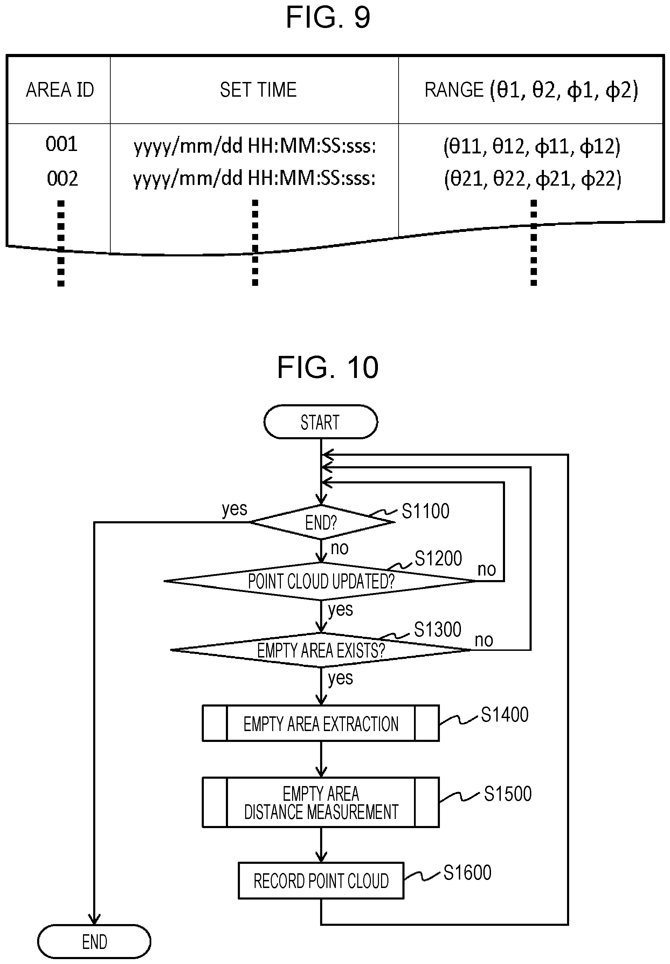

Fig. 9 is a diagram illustrating an example of data indicating empty areas stored by the storage device 114 of the LiDAR sensor 110. This data defines the emission direction of a light beam emitted from the beam scanner 111. In this example, the storage device 114 stores an area ID, which is an identification number of an empty area of which the distance is to be measured by the LiDAR sensor 110, the time (also including date information in the example in Fig. 9) when the area was set, and the range of the area. The range of an area is expressed in the polar coordinate system described above, and may be defined in terms of a range of the polar angle θ and a range of the azimuthal angle cp. In Fig. 9, θ1 and θ2 represent values for the lower and upper limits, respectively, of the range of the polar angle, and ϕ1 and ϕ2 represent values for the lower and upper limits, respectively, of the range of the azimuthal angle. The LiDAR sensor 110 sequentially measures the distance in each empty area according to this data.

Hereinafter, Figs. 10 to 13 will be referenced to describe operations by the LiDAR sensor 110 in further detail.

Fig. 10 is a flowchart outlining operations by the LiDAR sensor 110. The LiDAR sensor 110, upon receiving from the control circuit 160 a signal giving an instruction to start operations, executes the operations in steps S1100 to S1600 illustrated in Fig. 10. Hereinafter, the operations in each step will be described.

### <Step S1100>

The processing circuit 113 of the LiDAR sensor 110 determines whether a signal giving an instruction to end operations is received from the control circuit 160. If the signal is not received, the flow proceeds to step S1200. If the signal is received, the operations are ended.

### <Step S1200>

The processing circuit 113 determines whether an update signal indicating that the point cloud data has been updated is outputted from the storage device 130 of the distance measurement system 100. If the update signal is outputted, the flow proceeds to step S1300. If the update signal is not outputted, the flow returns to step S1100.

Note that in this example, the storage device 130 outputs the update signal when the point cloud data 131 is updated but is not limited to such an operation. The processing circuit 113 may also look up and compare the point cloud data 131 recorded in the storage device 130 to the most recent point cloud data recorded in the storage device 114 of the distance measurement system 100 to determine whether there is an update to the point cloud data 131. For example, the processing circuit 113 may determine the presence or absence of an update by looking up the point cloud data 131 recorded in the storage device 130 and determining whether the point cloud data 131 contains data on points measured at a time after the lookup time of the most recent point cloud data stored in the storage device 114 of the LiDAR sensor 110.

### <Step S1300>

The processing circuit 113 references the storage device 130 and determines whether there is an empty area in the point cloud data 131. As described above, an empty area is an area where there are no valid data points in the three-dimensional space. If an empty area exists, the flow proceeds to step S1400. If an empty area does not exist, the flow returns to step S I 100.

### <Step S1400>

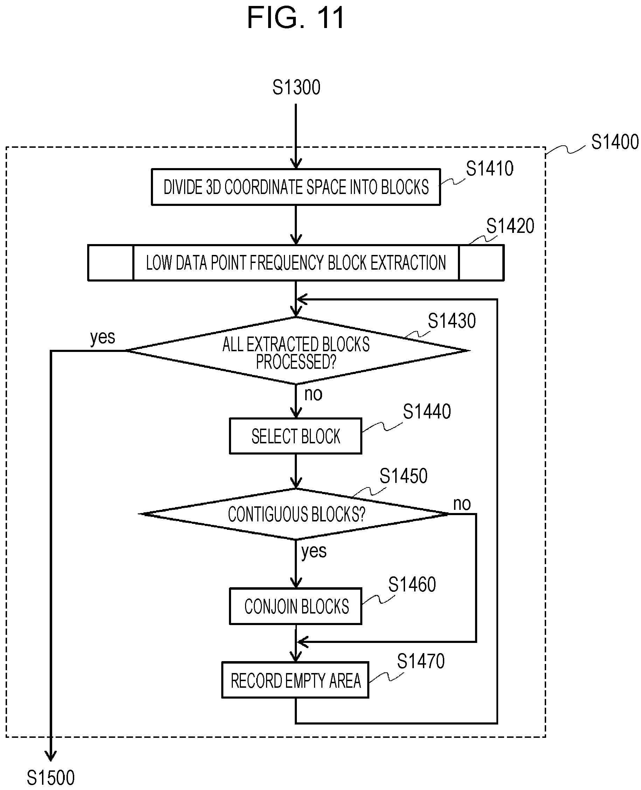

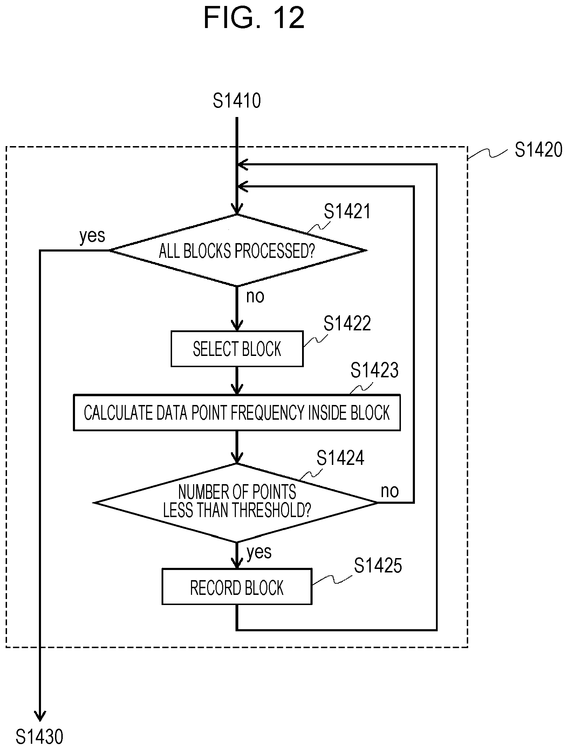

The processing circuit 113 references the point cloud data 131 recorded in the storage device 130, extracts one or more empty areas, and records information about the empty area in the storage device 114. Details of the method of extracting empty areas will be described later with reference to Figs. 11 and 12.

### <Step S1500>

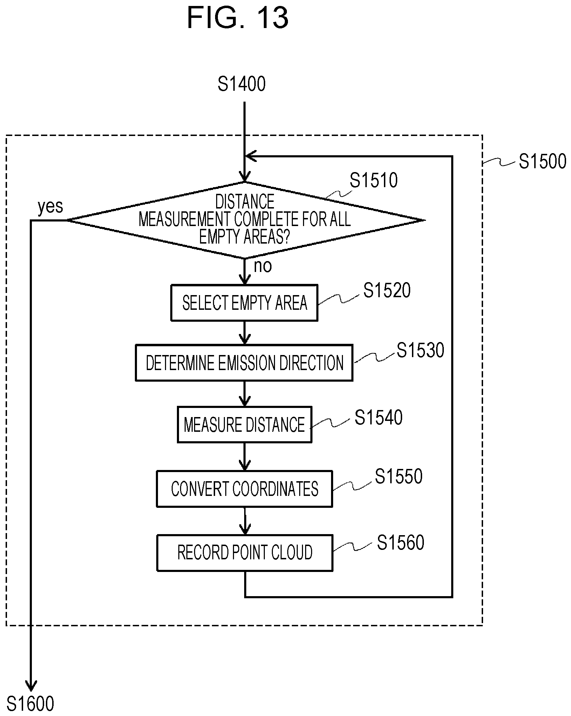

The processing circuit 113 measures the distance in each empty area that was extracted and recorded in the storage device 114 in step S1400. The processing circuit 113 determines the emission direction of a light beam for each empty area and controls the beam scanner 111 and the light-receiving device 112 to measure the distance. Details of the distance measurement method will be described later with reference to Fig. 13.

### <Step S1600>

The processing circuit 113 converts the coordinates of each point measured in each area in step S1500 into a representation in the same coordinate system as the point cloud data 131 stored by the storage device 130, and transmits the converted coordinates to the storage device 130. At this time, the processing circuit 113 deletes the information on each empty area recorded in the storage device 114. After the operations in step S1600, the flow returns to step S I 100.

The LiDAR sensor 110 repeats the operations in steps S 1100 to S1600 until an instruction to end operations is given in step S1100. With this configuration, every time the point cloud data 131 recorded in the storage device 130 is updated, the LiDAR sensor 110 measures the distance in an empty area where there are no valid data points and complements the information in the point cloud data 131.

Next, details of the process for extracting empty areas in step S1400 will be described while referring to Figs. 11 and 12.

Fig. 11 is a flowchart illustrating details of the process for extracting empty areas in step S1400. Step S1400 includes the operations in steps S1410 to S1470 illustrated in Fig. 11. Hereinafter, the operations in each step will be described.

### <Step S1410>

The processing circuit 113 divides the polar coordinate space where the point cloud data 131 is acquired into multiple blocks. Each of the blocks defines a range of directions from the origin, indicated by an azimuthal angle range of specific width and a polar angle range of specific width. The blocks may be set to equal angular widths or the angular widths of the space contained in each block may be varied according to the values of the azimuthal and polar angles.

### <Step S1420>

For each of the blocks divided in step S1410, the processing circuit 113 detects valid data points within the block and extracts blocks in which the number of data points per a unit angle range is less than a predetermined threshold value. The extracted blocks may be referred to as "low data point frequency blocks" or "extracted blocks" in the following description. Detailed operations in step S1420 will be described later with reference to Fig. 12.

### <Step S1430>

The processing circuit 113 determines whether processing for grouping blocks as an empty area has finished for all of the blocks extracted in step S1420. If the processing of all of the blocks is complete, the flow proceeds to step S 1500. If an unprocessed block remains, the flow proceeds to step S1440.

### <Step S1440>

The processing circuit 113 selects one block from the blocks for which the processing for grouping blocks as an empty area is not finished among the blocks extracted in step S1420.

### <Step S1450>

The processing circuit 113 determines whether a block adjacent to the block selected in step S1440 exists among the blocks extracted in step S1420. In other words, the processing circuit 113 determines whether the block selected in step S1440 is one of multiple blocks forming a contiguous area. If a block adjacent to the block selected in step S1440 exists among the blocks extracted in step S1420, the flow proceeds to step S1460, and if not, the flow proceeds to step S1470.

### <Step S1460>

The processing circuit 113 conjoins the selected block with the adjacent extracted block or an area containing the adjacent extracted block to form a single unified area.

### <Step S1470>

The processing circuit 113 records the contiguous area formed from one or more blocks in the storage device 114 as an empty area. As illustrated in Fig. 9, for example, data on the empty area to be recorded includes an area ID, the time when the area was set, and information representing the angular range of the area in polar coordinates. After step S1470, the flow returns to step S1430.

The processing circuit 113 repeats the operations in steps S1430 to S1470 until determining in step S1430 that the processing is complete for all of the extracted blocks. With this configuration, the determination of whether an adjacent block exists is made for all of the blocks extracted in step S1420, adjacent blocks are combined into a single empty area, and information about each empty area is stored. For a block without an adjacent block among the blocks extracted in step S1420, the block is recorded individually as an empty area.

In the present embodiment, in step S1410, the entire polar coordinate space where the point cloud data 131 is acquired is divided into blocks, and in step S1420, blocks in which the frequency of data points is less than a certain number are extracted from all of the blocks. Instead of such operations, the point cloud data 131 may also perform the above processing only within the range of overlap between the range measurable by the LiDAR sensor 110 and the polar coordinate space where the point cloud data 131 is acquired. In other words, the processing circuit 113 may perform the operations in steps S1400, S1500, and S1600 only with respect to the range measurable by the LiDAR sensor 110.

Fig. 12 is a flowchart illustrating details of the block extraction operations in step S1420. Step S1420 includes the operations in steps S1421 to S1425 illustrated in Fig. 12. Hereinafter, the operations in each step will be described.

### <Step S1421>

For all of the blocks divided in step S1410, the processing circuit 113 determines whether processing for determining whether the block is a low-frequency block has been performed. If all of the blocks have been processed, the flow proceeds to step S1430. If there is a block for which the processing for determining whether the block is a low-frequency block has not been performed, the flow proceeds to step S1422.

### <Step S1422>

The processing circuit 113 selects one block from among the blocks for which the determination of the frequency of data points inside the block has not been performed.

### <Step S1423>

The processing circuit 113 references the point cloud data 131 recorded in the storage device 130 and extracts the valid data points inside the block. The block is the space of a certain angle range extending from the origin, defined by an azimuthal angle range and a polar angle range. In the example illustrated in Fig. 8, the location coordinates of a data point are expressed by the azimuthal angle ϕ, the polar angle θ, and the distance d from the origin. The processing circuit 113 extracts and counts the data points of which the azimuthal angle ϕ and the polar angle θ fall inside the range of the selected block.

### <Step S1424>

The processing circuit 113 determines whether the number of valid data points inside the block obtained in step S1423 is less than a predetermined threshold value. If the number of valid data points inside the block is less than the threshold value, the flow proceeds to step S1425. If the number of valid data points inside the block is equal to or greater than the threshold value, the flow returns to step S1421.

### <Step S1425>

The processing circuit 113 records the block as an extracted block in the storage device 114. The information to be recorded is similar to the information illustrated in Fig. 9, for example. That is, a block ID, an extraction time, and the range of the block may be recorded in the storage device 114. After step S1425, the flow returns to step S1421.

The processing circuit 113 repeats steps S1421 to S1425 until the processing is complete for all of the blocks. With this configuration, the frequency of valid data points can be counted for all of the blocks obtained from the division of the coordinate space where the point cloud data 131 is acquired, and any and all blocks in which the frequency of valid data points is less than the threshold value can be extracted.

Next, Fig. 13 will be referenced to describe details of the distance measurement operations by the LiDAR sensor 110. Fig. 13 is a flowchart illustrating details of the empty area distance measurement operations in step S1500. Step S1500 includes the operations in steps S1510 to S1560 illustrated in Fig. 13. Hereinafter, the operations in each step will be described.

### <Step S1510>

The processing circuit 113 determines whether distance measurement is complete for all of the empty areas recorded in the storage device 114. If the distance measurement operations are finished for all of the empty areas, the flow proceeds to step S1600. If an unmeasured empty area remains, the flow proceeds to step S1520.

### <Step S1520>

The processing circuit 113 selects one of the unmeasured areas from among the empty areas recorded in the storage device 114.

### <Step S1530>

The processing circuit 113 determines the center of the range of the empty area selected in step S1520 as the emission direction of a beam. In the example illustrated in Fig. 9, the range of the empty area is indicated by the directions (ϕ1, θ1) and (ϕ2, θ2). The empty area is the area enclosed by the four vectors (ϕ1, θ1), (ϕ1, θ2), (ϕ2, θ1), and (ϕ2, θ2). The vectors indicating the direction to the center of the area is the vector ((ϕ1+ϕ2)/2, (θ1+θ1)/2) with an azimuthal angle of (ϕ1+ϕ2)/2 and a polar angle of (θ1+θ1)/2. In the example illustrated in Fig. 9, the empty area is expressed using the same polar coordinate notation as the notation for the point cloud data 131. The processing circuit 113 uses a predetermined conversion formula to convert the notation of the empty area into a notation in the coordinate system set in the LiDAR sensor 110. For example, the notation of the empty area is converted into a notation expressed in a coordinate system indicating the scanning range of the beam scanner 111 or a coordinate system indicating the light-receiving range of the light-receiving device 112.

### <Step S1540>

The processing circuit 113 outputs control signals causing the beam scanner 111 and the light-receiving device 112 to execute distance measurement. The control signal to the beam scanner 111 includes a signal designating the emission direction. If the emission direction of a beam determined in step S1530 is expressed in a different coordinate system from the coordinate system of the beam scanner 111, such as the coordinate system set in the light-receiving device 112, for example, the processing circuit 113 converts values indicating the determined emission direction into values expressed in the coordinate system of the beam scanner 111, includes the converted values in the control signal, and sends the control signal to the beam scanner 111. As described above, the distance measurement method may be any of direct ToF, indirect ToF, FMCW, or some other method. The processing circuit 113 measures or estimates the time it takes for a beam emitted from the beam scanner 111 to be reflected by an object and received by the light-receiving device 112. The processing circuit 113 measures or estimates the time from the emission to the reception of a beam on the basis of a signal indicating the emission timing acquired from the beam scanner 111 and a signal indicating a measurement result acquired from the light-receiving device 112. The processing circuit 113 obtains the distance to the object existing in the emission direction of the beam from the time and the speed of light. If the light-receiving device 112 does not successfully receive reflected light, the distance may be processed as infinity.

### <Step S1550>

The processing circuit 113 converts the three-dimensional coordinates of the data points obtained from the distance data acquired in step S1540 and the information on the emission direction of the beam from values in the coordinate system of the LiDAR sensor 110 into values in the coordinate system of the point cloud data 131.

### <Step S1560>

The processing circuit 113 outputs information on the data points of which the coordinates were converted in step S1550 to the storage device 130. The storage device 130 stores the information on the data points in addition to the existing point cloud data 131. After the operations in step S1560, the flow returns to step S1510.

The processing circuit 113 repeats the operations in steps S1510 to S1560 until distance measurement is complete for all of the empty areas. With this configuration, the distance of a representative point is measured for all of the empty areas recorded in the storage device 114, and the distance measurement results are added to the point cloud data 131 in the storage device 130.

In the present embodiment, the processing circuit 113 determines the emission direction of the beam from the range of an empty area recorded in the storage device 114 when the LiDAR sensor 110 measures distance in step S1500. Instead of such operations, the processing circuit 113 may also determine the emission direction of the beam when an empty area is extracted in step S1400. In this case, the information on an empty area to be recorded in the storage device 114 may include vector information about the emission direction instead of coordinate information indicating the range of the empty area.

### [3. Effects]

According to the present embodiment, empty areas in a point cloud measured by another distance measurement device are extracted and data points are complemented by a LiDAR sensor that can measure distance in any direction inside a predetermined area. Every time the point cloud data acquired by another distance measurement device is updated, the LiDAR sensor extracts empty areas in the point cloud and selectively measures the distance in the empty areas where there are no (or few) data points. With this arrangement, data in areas where the distance could not be measured by the other distance measurement device can be acquired, the point cloud data can be complemented, and more complete point cloud data can be generated. Accordingly, the operating accuracy and operating efficiency can be improved in a system such as a moving body that operates on the basis of point cloud data.

Note that at least some of the processing executed by the processing circuit 113 of the LiDAR sensor 110 may also be executed by another device, such as the control circuit 160. For example, the control circuit 160 may also reference the point cloud data 131 to determine one or more empty areas and instruct the processing circuit 113 to measure the distance in the determined empty area(s).

### (Embodiment 2)

In Embodiment 1, the coordinate space where the point cloud data 131 is acquired is divided into blocks and empty areas are extracted on the basis of only the number of valid data points inside the blocks. In contrast, in Embodiment 2, empty areas are weighted on the basis of the locations of the blocks in the coordinate space and the sizes of the blocks, and an order of priority for distance measurement is set with respect to the empty areas. With this configuration, distance measurement information on more important locations can be obtained with priority, and the operating accuracy and operating efficiency of the system 10 can be improved further.

The configuration of the system 10 in Embodiment 2 is similar to Embodiment 1. In the present embodiment, some of the operations for extracting empty areas in step S1400 and some of the operations for measuring the distance in the empty areas in step S1500 illustrated in Fig. 10 differ from Embodiment 1. Hereinafter, the operations that differ from Embodiment 1 will be described.

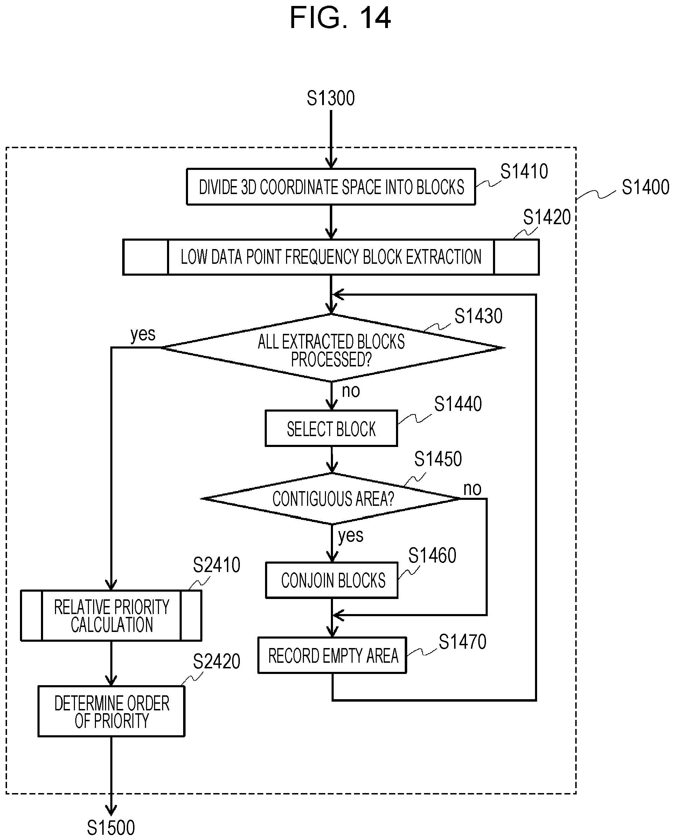

Fig. 14 is a flowchart illustrating details of the operations for extracting empty areas in step S1400 illustrated in Fig. 10 from among the operations by the LiDAR sensor 110 in Embodiment 2. This flowchart differs from the flowchart illustrated in Fig. 11 in that if yes is determined in step S1430 illustrated in Fig. 11, the operations in steps S2410 and S2420 are executed. The operations in steps S1410 to S1470 are the same as the operations illustrated in Fig. 11. Hereinafter, the operations in steps S2410 and S2420 will be described.

### <Step S2410>

For each of the one or more empty areas recorded in the storage device 114, the processing circuit 113 applies weights depending on the azimuthal and polar angles of the coordinates in the point cloud data 131 and the size of the area, and calculates a relative priority on the basis of the weights.

### <Step S2420>

The processing circuit 113 compares the relative priorities of the one or more empty areas recorded in the storage device 114, sets an order of priority by highest relative priority, and records information thereon in the storage device 114.

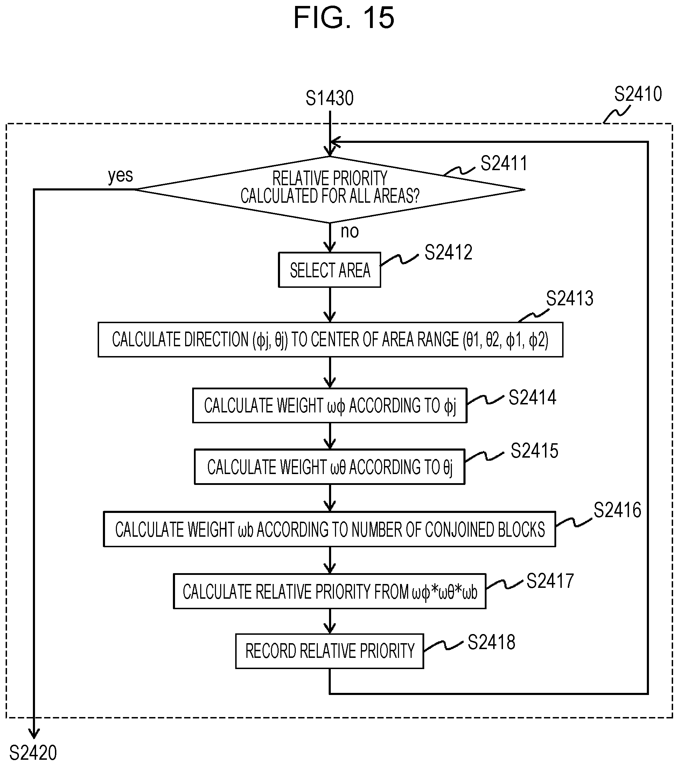

Fig. 15 is a flowchart illustrating detailed operations in step S2410. Step S2410 includes the operations in steps S2411 to S2418 illustrated in Fig. 15. Hereinafter, the operations in each step will be described.

### <Step S2411>

The processing circuit 113 determines whether the relative priority has been calculated for all of the one or more empty areas recorded in the storage device 114 in step S1470. If the calculation of the relative priority is complete for all of the empty areas, the flow proceeds to step S2420. If there is an empty area for which the relative priority has not been calculated, the flow proceeds to step S2412.

### <Step S2412>

The processing circuit 113 selects one empty area for which the relative priority has not been calculated from among the recorded empty areas.

### <Step S2413>

The processing circuit 113 calculates the direction (cpj, θj) to the center of the range of the empty area selected in step S2412. If the range of an area is defined by (ϕ1, θ1) and (ϕ2, θ2), the direction (cpj, θj) to the center is ((ϕ1+ϕ2)/2, (θ1+θ1)/2).

### <Step S2414>

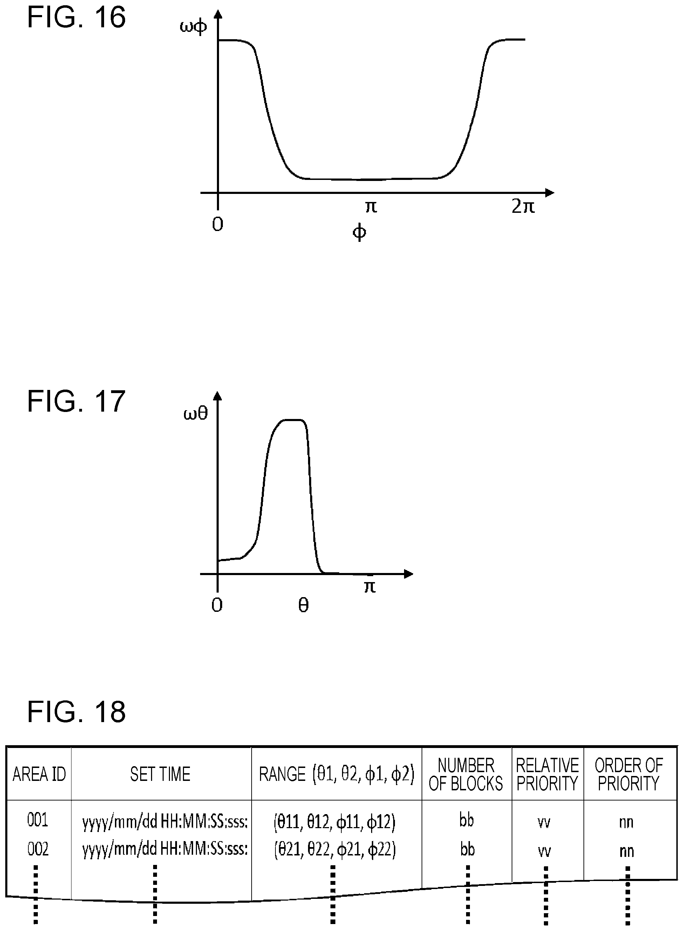

The processing circuit 113 obtains a weight ωϕ corresponding to the value of cpj obtained in step S2413. The weight ωϕ is determined according to the value of the azimuthal angle cpj. The weight ωϕ is determined so as to be at a maximum in the z-axis direction, that is, the direction of travel of the moving body, and to be smaller the further away from the direction of travel. Fig. 16 illustrates an example of a function defining the relationship between the azimuthal angle ϕ and the weight ωϕ. The processing circuit 113 determines the weight ωϕ corresponding to the azimuthal angle cpj of the area according to a function like the one illustrated in Fig. 16, for example.

### <Step S2415>

The processing circuit 113 obtains a weight ωθ corresponding to the value of θj obtained in step S2413. The weight ωθ is determined according to the value of the polar angle θj. The weight ωθ is determined so as to be at a maximum in the z-axis direction, that is, the direction of travel of the moving body, and to be smaller the further away from the direction of travel. Furthermore, the weight ωθ is determined so as to be 0 in most of the range in the direction of polar angles beyond the xz plane, that is, polar angles exceeding π/2. Fig. 17 is a diagram illustrating an example of a function defining the relationship between the polar angle θ and the weight ωθ. The processing circuit 113 determines the weight ωθ corresponding to the polar angle θj of the area according to a function like the one illustrated in Fig. 17, for example.

### <Step S2416>

The processing circuit 113 obtains a weight ωb corresponding to the number of blocks conjoined by the iterative processing in steps S1430 to S1470. For example, the higher the number of blocks is, the larger is the value to which the weight ωb is set. The weight ωb may be the number of blocks itself, for example.

### <Step S2417>

The processing circuit 113 calculates the relative priority by multiplying together each of the weights calculated in steps S2414, S2415, and S2416. In other words, in the present embodiment, the product of ωϕ, ωθ, and ωb is set as the relative priority.

### <Step S2418>

The processing circuit 113 records the relative priority calculated in step S2417 in the storage device 114, in association with the empty area. After the operations in step S2418, the flow returns to step S2411.

Fig. 18 is a diagram illustrating an example of information on empty areas recorded in the storage device 114 in step S2418. In this example, the area ID, the set time, the range, and in addition, information on the number of conjoined blocks in the area, the relative priority, and the order of priority for distance measurement determined in accordance with the relative priority are recorded. The order of priority is the information determined in step S2420, and is recorded in step S2420.

By repeating the operations in steps S2411 to S2418, the processing circuit 115 calculates the relative priority for all of the empty areas recorded in step S1470.

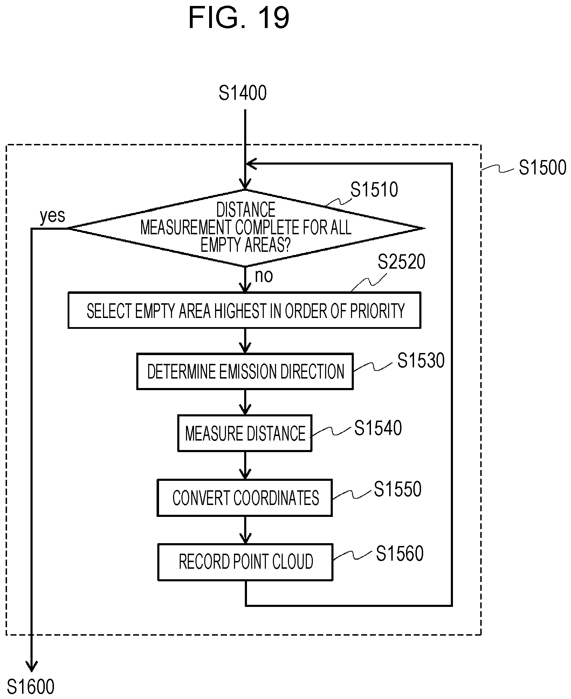

Fig. 19 is a flowchart illustrating details of empty area distance measurement operations by the LiDAR sensor 110 in Embodiment 2. The operations illustrated in Fig. 19 are the same as the operations illustrated in Fig. 13, except that step S1520 in the operations in Embodiment 1 illustrated in Fig. 13 is replaced with step S2520.

In step S2520, the processing circuit 113 selects the empty area highest in the order of priority from among the empty areas in which the distance has not been measured. The operations in the subsequent steps S1530 to S1560 are the same as the operations in the corresponding steps illustrated in Fig. 13.

By repeating the operations in steps S1510 to S1560, the processing circuit 113 can measure the distances to representative points of the empty areas sequentially by highest order of priority and add the measurement results to the point cloud data 131 in the storage device 130.

As above, according to the present embodiment, distance can be measured by determining relative priorities depending on conditions pertaining to the empty areas and setting an order of priority according to the relative priorities. By measuring distance according to the order of priority, data points that are more important to the system can be complemented sooner, thereby improving the efficiency of updating point cloud data.

Note that in the present embodiment, the relative priority is determined on the basis of location in three-dimensional space and the size of the empty area, but as described later, the relative priority may also be determined on the basis of other conditions. Moreover, the weight ωb corresponding to the size of the empty area may also be determined on the basis of the sizes of the azimuthal angle range and the polar angle range of the area instead of the number of conjoined blocks in the area.

### (Modification 1 of Embodiment 2)

In Embodiment 2, the order of priority for distance measurement is determined on the basis of relative priorities calculated from the locations and sizes of the empty areas. In contrast, in Modification 1, the order of priority for distance measurement is determined on the basis of a recognition result from an image acquired by a camera. With this arrangement, the order of priority can be lowered for an empty area corresponding to an object of which the distance is unmeasurable, such as the sky or a mountain in the distant background, for example. Hereinafter, the configuration and operations of the present modification will be described mainly in terms of the points that differ from Embodiment 2.

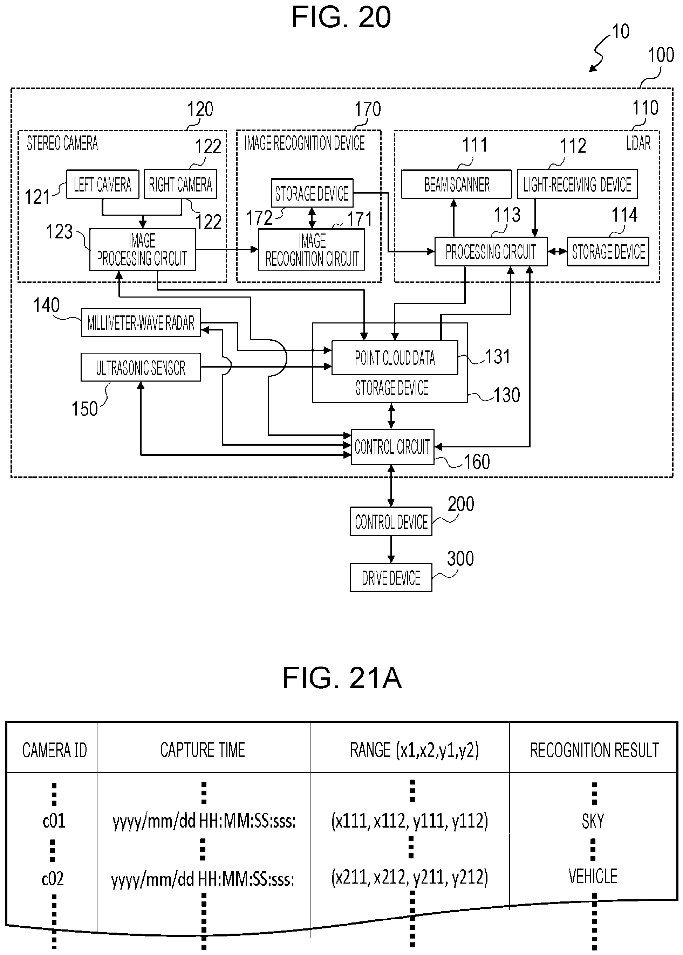

Fig. 20 is a block diagram illustrating a configuration of Modification 1 of Embodiment 2. The configuration of the present modification is the same as the configuration illustrated in Fig. 1 except that the distance measurement system 100 is further provided with an image recognition device 170.

The image recognition device 170 is provided with an image recognition circuit 171 and a storage device 172. The image recognition circuit 171 includes a processor such as a GPU and is connected to the image processing circuit 123 in the stereo camera 120. The image recognition circuit 171 acquires an image captured by the left camera 121 or the right camera 122 in the stereo camera 120 and recognizes specific objects, such as structures and moving bodies, in the image. A known image recognition algorithm may be used for the recognition. For example, a machine learning algorithm can be used to recognize specific objects from the image on the basis of a pre-trained model. The objects to be recognized may be any objects existing in the surroundings of the moving body, such as pedestrians, vehicles, structures, roads, the sky, or mountains, for example.

In the example in Fig. 20, the image recognition circuit 171 acquires an image generated by one of the two cameras 121 and 122 provided in the stereo camera 120. The image recognition circuit 171 may also acquire an image from a camera other than the stereo camera 120. For example, if the distance measurement system 100 is provided with a camera dedicated to image recognition, an image may be acquired from that camera. The distance measurement system 100 may also be provided with multiple cameras separately from the stereo camera 120. In this case, the cameras may be installed at different locations on the moving body and at different angles. The cameras may be configured to successively transmit images acquired by image capture to the image recognition circuit 171. The stereo camera 120 may also be replaced with a monocular camera with a distance measurement function. The image recognition circuit 171 acquires an image from the monocular camera with a distance measurement function and recognizes specific objects, such as structures and moving bodies, in the image. The monocular camera with a distance measurement function estimates the distance using the blur of the edges of objects in the image, for example. The monocular camera with a distance measurement function stores points on the edges where the distance is successfully estimated as point cloud data in the storage device 130.

In the storage device 172, information indicating the result of the recognition performed by the image recognition circuit 171 is stored in association with the locations of pixels. The storage device 172 also stores information on the direction and the angle of view of the camera that acquired the image.

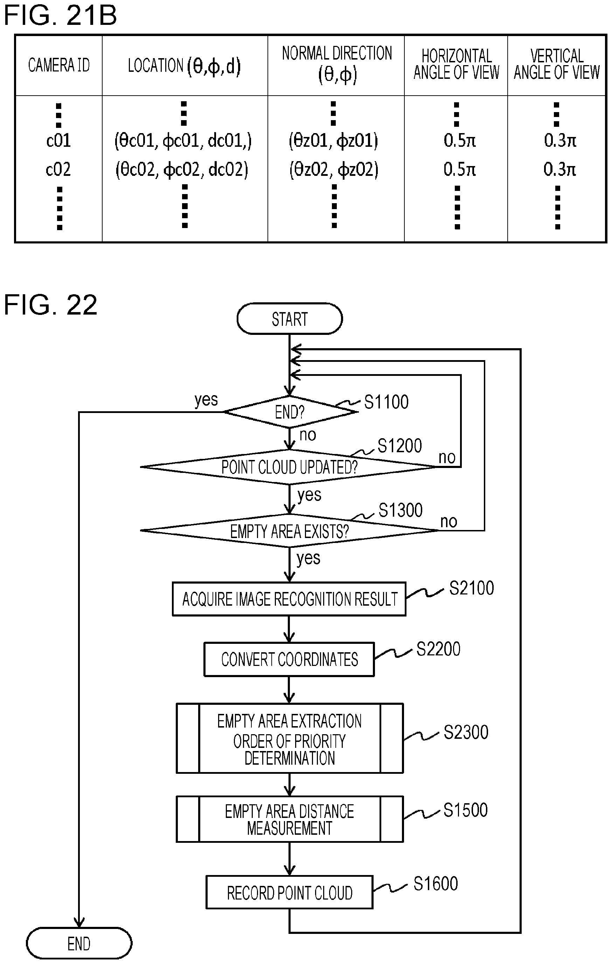

Figs. 21A and 21B illustrate examples of information recorded in the storage device 172. Fig. 21A illustrates an example of recorded recognition results. In this example, an ID for identifying the camera, the capture time, and in addition, a range of pixels in the image and the identified object of recognition are recorded. The recognition result field corresponds to the relative priority, as described later. Fig. 21B illustrates an example of camera information recorded in the storage device 172. In this example, for each camera, an ID and information on the installation location, direction (that is, the normal direction of the imaging plane), horizontal angle of view, and vertical angle of view are recorded. The location and direction are expressed in a three-dimensional coordinate system shared with the point cloud data 131.

In this example, the storage device 172 stores information on the direction and angle of view of each camera, but may instead store a conversion formula or a conversion table for converting pixel locations in the image into vector information in the three-dimensional coordinate system of the point cloud data 131.

Fig. 22 is a flowchart illustrating operations by the LiDAR sensor 110 in the present modification. In this flowchart, step S1400 in the flowchart illustrated in Fig. 10 is replaced with steps S2100, S2200, and S2300. The operations in steps S1100 to S1300, S1500, and S1600 are the same as the operations in the corresponding steps illustrated in Fig. 10. Hereinafter, the operations that differ from the operations illustrated in Fig. 10 will be described.

### <Step S2100>

The processing circuit 113 acquires the most recent image recognition results from the storage device 172 of the image recognition device 170. The LiDAR sensor 110 may select a camera having a capture range that overlaps with the scanning range of the beam scanner 111 and acquire only an image recognition results from that camera.

### <Step S2200>

The processing circuit 113 converts, on the basis of the information on the camera direction and angle of view (see Fig. 21B) recorded in the storage device 172, the pixel range (see Fig. 21A) of each object of recognition recorded in the storage device 172 into a vector range in the three-dimensional coordinate system shared with the point cloud data 131.

### <Step S2300>

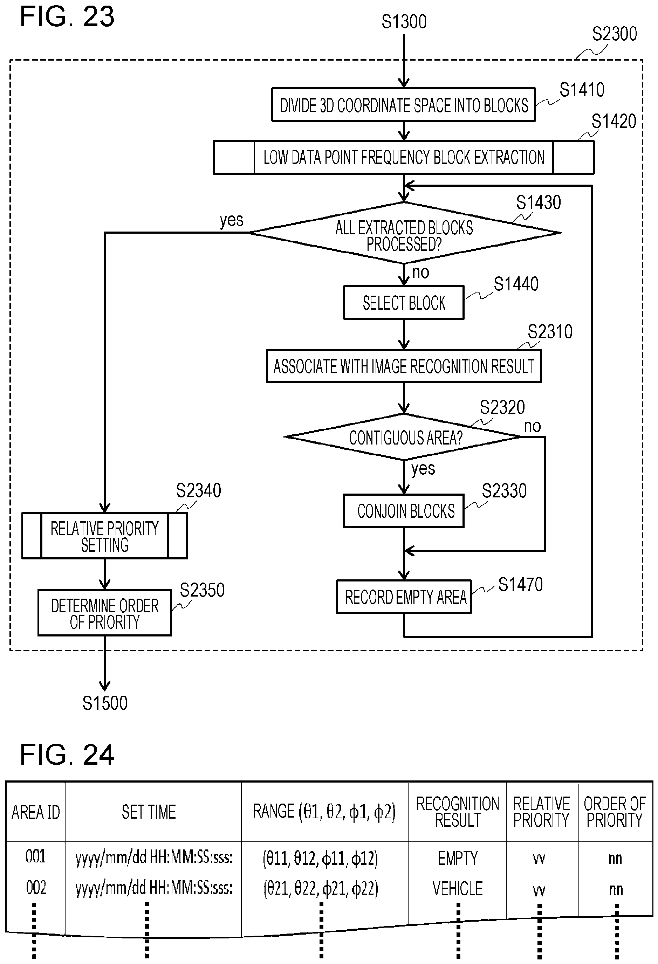

The processing circuit 113 references the point cloud data 131 recorded in the storage device 130, extracts one or more empty areas, determines the order of priority for distance measurement, and records information thereon in the storage device 114. To extract empty areas and determine the order of priority, the recognition results acquired in step S2100 are used. Details of the method of extracting empty areas and determining the order of priority will be described later with reference to Fig. 23.

The operations in steps S1500 and S1600 are the same as the operations illustrated in Fig. 10. By repeating steps S1100 to S1600, every time the point cloud data 131 recorded in the storage device 130 is updated, the LiDAR sensor 110 can measures the distances in empty areas where there are no valid data points according to the order of priority based on the image recognition results, and complement the information in the point cloud data 131.

Fig. 23 is a flowchart illustrating details of operations for extracting empty areas and determining order of priority in step S2300. In this flowchart, steps S1400 and S1460 in the flowchart illustrated in Fig. 14 are replaced with steps S2310, S2320, and S2330, and steps S2410 and S2420 are replaced with steps S2340 and S2350. The operations in steps S1410 to S1440 and S1470 are the same as the operations in the corresponding steps illustrated in Fig. 14. Hereinafter, the points that differ from the operations illustrated in Fig. 14 will be described.

### <Step S2310>

The processing circuit 113 references the vector range of each object of recognition determined in step S2200 and extracts an object of recognition having a range that overlaps with the block selected in step S1440. If there is no object of recognition having a range that overlaps with the selected block, no association is made.

### <Step S2320>

The processing circuit 113 determines whether the selected block is one of multiple neighboring blocks that overlap with the vector range of a single object of recognition. If the selected block overlaps with the vector range of any object of recognition and the object of recognition also overlaps with other extracted blocks neighboring the selected block, the flow proceeds to step S2330. In other words, if multiple neighboring, low data point frequency blocks overlap with the vector range of a single object of recognition, the flow proceeds to step S2330. If the selected block does not overlap with the range of any object of recognition, or if an object of recognition exists in the range of the selected block but the object of recognition does not exist in other extracted blocks adjacent to the selected block, the flow proceeds to step S1470.

### <Step S2330>

The processing circuit 113 conjoins the selected block with all of the other extracted blocks that overlap with the range of the single object of recognition to form a single unified area. Through this process, the blocks that overlap with the range of a single object of recognition can be conjoined as a single contiguous area. Note that in the present modification, unlike step S1460 in the examples illustrated in Figs. 11 and 14, the conjoining process is not performed on low-frequency blocks that do not overlap with the range of any object of recognition.

If no is determined in step S2320, or after step S2330 is performed, the flow proceeds to step S1470. In step S1470, the processing circuit 113 records the empty area and the object of recognition in association with each other in the storage device 114. An empty area where an object of recognition does not exist is recorded without making an association with an object of recognition.

<Step S2340>

If the processing is complete for all of the extracted blocks, the processing circuit 113 determines the relative priority for each empty area recorded in step S1470, on the basis of the object of recognition associated with the empty area. Details of the method for determining the relative priority in step S2340 will be described later.

### <Step S2350>

The processing circuit 113 compares the relative priorities of the one or more empty areas recorded in the storage device 114, sets an order of priority by highest relative priority, and causes the storage device 114 to store information thereon.

Fig. 24 is a diagram illustrating an example of information related to empty areas recorded in the storage device 114 in the present modification. In this example, an area ID for identifying an empty area, the set time, the range of the empty area, and in addition, information on the recognition result, relative priority, and order of priority are stored. Note that information on the recognition result is not recorded for an empty area that is not associated with any object of recognition.

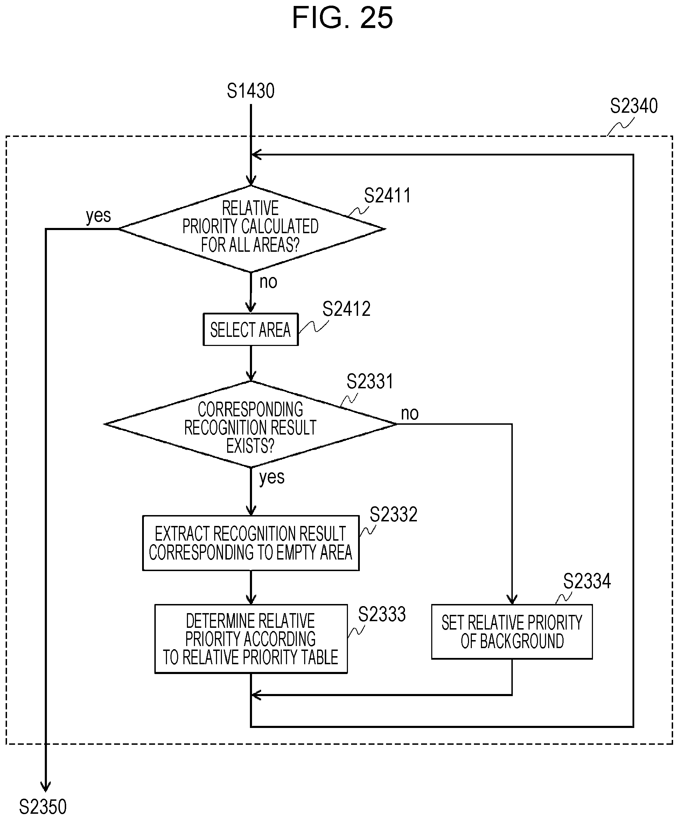

Fig. 25 is a flowchart illustrating details of a method for determining the relative priority in step S2340. The operations in steps S2411 and S2412 in Fig. 25 are the same as the operations in the corresponding steps illustrated in Fig. 15. In the present modification, after an area is selected in step S2412, the processing in steps S2331 to S2333 is performed.

### <Step S2331>

The processing circuit 113 references the recognition result corresponding to the empty area recorded in the storage device 114 and determines whether a corresponding recognition result exists. If a recognition result corresponding to the empty area does not exist, the flow proceeds to step S2332. If a recognition result corresponding to the empty area exists, the flow proceeds to step S2333.

### <Step S2332>

The processing circuit 113 extracts the recognition result corresponding to the empty area recorded in the storage device 114.

### <Step S2333>

The processing circuit 113 determines the relative priority in accordance with a correspondence table of recognition results and relative priorities recorded in the storage device 114.

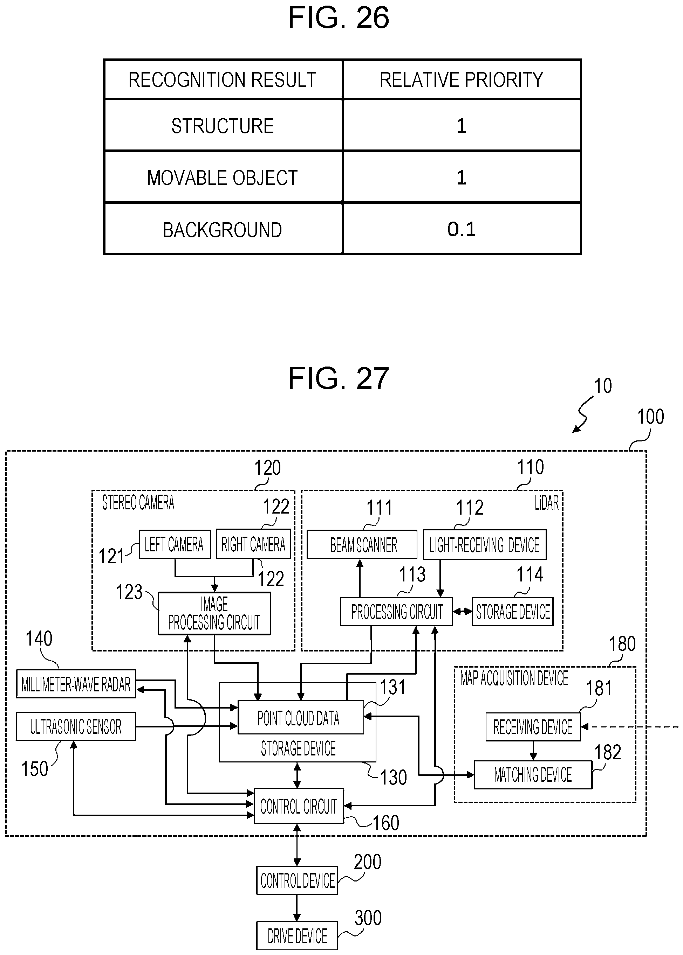

Fig. 26 is a diagram illustrating an example of the correspondence table between recognition results and relative priorities. In this example, a relative priority of "1" is assigned to structures and mobile objects, and a relative priority of "0.1" is assigned to the distant background. Structures are non-moving objects located a relatively short distance away, such as buildings and bridges, for example. Mobile objects are moving objects or people, such as automobiles and pedestrians, for example. The distant background refers to objects off in the distance, such as mountains and the sky, for example. For structures, more fine-grained relative priorities may also be set depending on size and the like. For mobile objects, more fine-grained relative priorities may also be set depending on size, potential speed of movement, estimated direction of travel, and the like. After step S2333, the flow returns to step S2411.

### <Step S2334>

The processing circuit 113 sets the relative priority for the case of recognizing "distant background" illustrated in Fig. 26 as the relative priority of the empty area. After step S2334, the flow returns to step S2411.

By repeating steps S2411 to S2333 or S2333, the processing circuit 113 determines the relative priority for all areas.

As above, in Modification 1 of Embodiment 2, empty areas are set and an order of priority for distance measurement is determined on the basis of the results of image recognition. With this arrangement, distance measurement can be prioritized for empty areas where there is a high probability that an important object is being overlooked, rather than the distant background such as the sky that contains many empty areas. As a result, more accurate point cloud data can be generated.

Note that in the present modification, the relative priorities are determined on the basis of the recognition results only, but the determination may also be combined with other methods. For example, weights based on recognition results may be used in addition to the weights based on the directions and sizes of areas in Embodiment 2, and relative priorities may be determined by summing or multiplying these weights.

### (Modification 2 of Embodiment 2)

In Embodiment 2, the order of priority for distance measurement is determined on the basis of relative priorities calculated from the coordinate locations and sizes of the empty areas. Also, in Modification 1 of Embodiment 2, the order of priority is determined on the basis of image recognition results. In contrast, in the present modification, the order of priority for distance measurement is determined by utilizing map information acquired from an external device, such as information on road maps and blueprints or layout plans for building interiors, for example. With this arrangement, distance measurement can be prioritized in areas extracted as empty areas even though specific objects clearly exist according to an external map, and the point cloud can be complemented efficiently.

Fig. 27 is a block diagram illustrating a configuration of the moving body control system 10 according to Modification 2 of Embodiment 2. The configuration illustrated in Fig. 27 is the same as the configuration illustrated in Fig. 1 except that the distance measurement system 100 is further provided with a map acquisition device 180. Hereinafter, the points that differ from the configuration illustrated in Fig. 1 will be described mainly. In the example in Fig. 27, the stereo camera 120 may also be replaced with a monocular camera with a distance measurement function.

The map acquisition device 180 is provided with a receiving device 181 and a matching device 182. The receiving device 181 communicates wirelessly with a device external to the system 10. The receiving device 181 receives map information distributed over an external network. The distribution over an external network may be a road map distribution network for a navigation system, for example. The map information may be a road map, for example. The receiving device 181 acquires, from the external device, map information for the area around a current location identified by a positioning device, such as a GPS receiver, provided in the moving body equipped with the system 10.

The matching device 182 is an information processing device provided with one or more processors. The matching device 182 performs processing to match the map information received by the receiving device 181 with the point cloud data 131 stored by the storage device 130 and thereby match the information on the acquired external map with the three-dimensional coordinates of the point cloud data 131.

Note that in the present modification, the receiving device 181 in the map acquisition device 180 receives map information from an external device, but the map information may also be recorded in the storage device 130 in advance. The map information may also be received by another device in the system 10, such as the control device 200, for example, and may be recorded in a referable state.

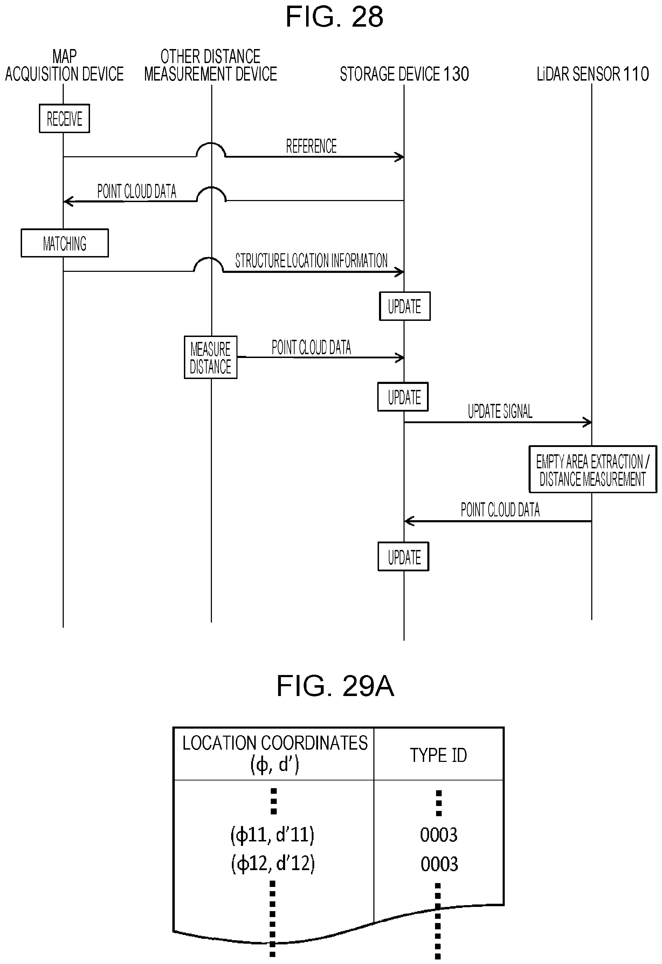

Fig. 28 is a diagram illustrating an example of operations by the distance measurement system 100 in the present modification. Fig. 28 illustrates the relationship of operations by the LiDAR sensor 110, another distance measurement device, the storage device 130, and the map acquisition device 180. The receiving device 181 of the map acquisition device 180 communicates with an external computer such as a map server over a distribution network, and acquires map information. The matching device 182 references the point cloud data 131 stored in the storage device 130, matches the point cloud with the map, and identifies structures on the map that correspond to the locations of points in the point cloud data 131. At this time, the matching device 182 projects the three-dimensional coordinates of the point cloud expressed in polar coordinates onto the xz plane and makes scaling adjustments, and then matches the point cloud with road boundaries and the boundaries of structures on the external map. With this arrangement, the matching device 182 extracts structures existing in the scene where the point cloud data 131 is acquired. At this time, the matching device 182 sets the origin to the current localized position identified by a positioning device, such as a GPS receiver, provided in the moving body, and extracts structures in the vicinity (such as within a 300 m square, for example) of the localized position on the external map. The matching device 182 causes the storage device 130 to store structure location information in which the locations of the extracted structures are expressed in the coordinate system shared with the point cloud data 131.

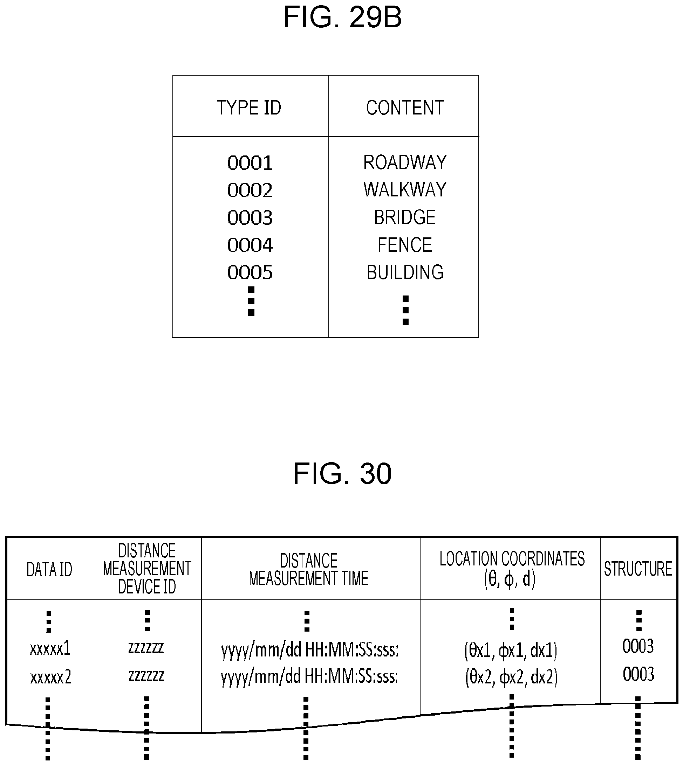

Fig. 29A is a diagram illustrating an example of structure location information which is generated by the matching device 182 and recorded in the storage device 130. The information illustrated in Fig. 29A is recorded in the storage device 130. Since the map information is planar information, a location is recorded for each structure on the xz plane in the three-dimensional coordinate system of the point cloud data 131. The location of a structure on the map is determined by the azimuthal angle ϕ and a distance d' projected onto the xz plane. In the example illustrated in Fig. 29A, the location coordinates (ϕ, d') of each structure included in the map information and a type ID for identifying the structure are recorded. The relationship between the type ID and the type of structure is recorded in the table illustrated in Fig. 29B, for example. The table illustrated in Fig. 29B is recorded in the storage device 130 in advance. As illustrated in Fig. 29B, the structures are roadways, sidewalks, bridges, and buildings, for example.

In the present modification, the timing at which the point cloud data 131 receives map information is synchronized with the timing at which the distance measurement devices, including the LiDAR sensor 110, perform distance measurement. The receiving device 181 successively receives map information in accordance with the movement of the moving body equipped with the system 10. The matching device 182 executes the above operations every time map information is received.

Meanwhile, each of the distance measurement devices successively measures distance in accordance with the characteristics of the distance measurement method of each, and outputs data indicating a distance measurement result. In the storage device 130, the point cloud data inputted from each distance measurement device is consolidated into a single collection of point cloud data 131 and stored. When the storage device 130 acquires data from one of the distance measurement devices and updates the point cloud data 131, the storage device 130 sends an update signal to the LiDAR sensor 110. The storage device 130 in the present modification updates the point cloud data 131 with the inclusion of location information on structures successively extracted by the map acquisition device 180.

Fig. 30 is a diagram illustrating an example of the point cloud data 131 stored by the storage device 130 in the present modification. The point cloud data 131 in this example includes an ID for each point, a distance measurement device ID, a distance measurement time, the location coordinates of each point, and in addition, information on a structure corresponding to the location of the point. The association between a structure and the location of a point is executed by the processor of the storage device 130 on the basis of the information illustrated in Fig. 29A.

The LiDAR sensor 110, upon acquiring the update signal from the storage device 130, references the point cloud data 131 and the structure location information stored in the storage device 130 and extracts empty areas where a valid number of data points does not exist in the three-dimensional space. The LiDAR sensor 110 in the present modification prioritizes distance measurement in an area designated as an empty area even though a structure exists at that location. With this arrangement, distance measurement can be prioritized in areas where structures likely exist.
The LiDAR sensor 110 converts the point cloud data acquired by distance measurement into a representation in the coordinate system of the point cloud data 131, and transmits the converted point cloud data to the storage device 130. The storage device 130 updates the point cloud data 131 by adding the transmitted point cloud data to the existing point cloud data 131.

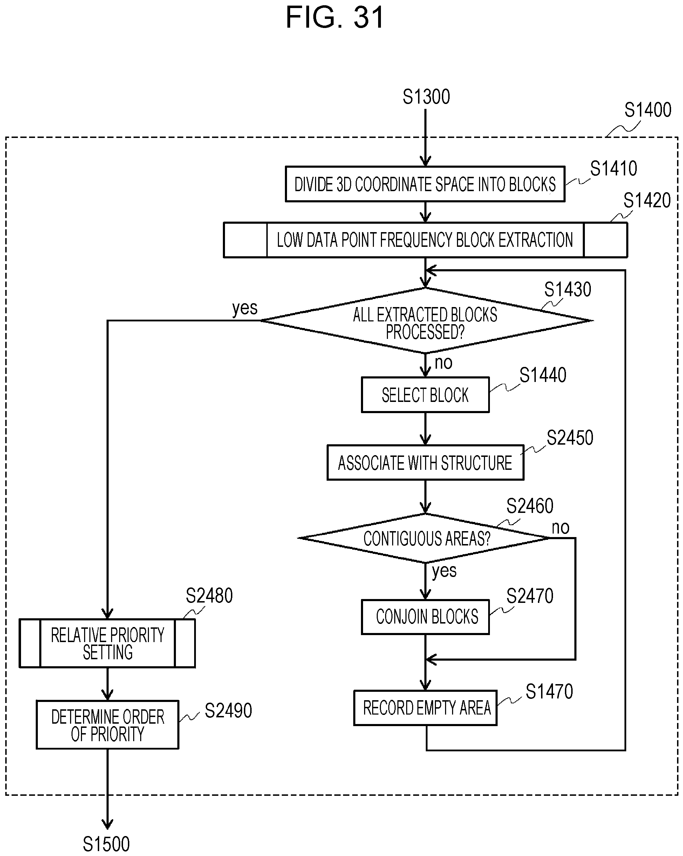

Next, operations by the LiDAR sensor 110 in the present modification will be described in further detail. The overall operations by the LiDAR sensor 110 in the present modification are similar to the operations illustrated in Fig. 10. In the present modification, the operations illustrated in Fig. 31 are executed in step S1400 of Fig. 10.

Fig. 31 is a flowchart illustrating details of the operations for extracting empty areas in step S1400. In the flowchart illustrated in Fig. 31, steps S2310 to S2330 in the flowchart illustrated in Fig. 23 are replaced with steps S2450 to S2470, and steps S2340 and S2350 are replaced with steps S2480 and S2490. Hereinafter, the points that differ from the operations illustrated in Fig. 23 will be described mainly.

### <Step S2450>

The processing circuit 113 references the locations of structures based on the external map information recorded in the storage device 130 and identifies a structure that shares an area with the block selected in step S1440. The following method is one example of the method for determining area overlap. First, the range of the vector area of the block projected onto the xz plane, that is, the vector area between the azimuthal angles ϕ1 and ϕ2 on the xz plane, is determined.
A structure is associated with the block if the location coordinates of the structure recorded in the format in Fig. 29A, for example, are included within the area.

### <Step S2460>

The processing circuit 113 determines whether the selected block is one of multiple neighboring blocks that overlap with the range of the location coordinates of a single structure. If the range of the selected block when projected onto the xz plane overlaps with the range of any structure and the range of the structure also overlaps with the range of another extracted block neighboring the selected block, the flow proceeds to step S2330. In other words, if multiple neighboring low data point frequency blocks projected onto the xz plane overlap with the range of a single structure, the flow proceeds to step S2330. If the selected block does not overlap with the range of any structure on the xz plane, or if the selected block and the range of a structure overlap on the xz plane but the range of the structure does not overlap with another extracted block adjacent to the selected block, the flow proceeds to step S1470.

### <Step S2470>

The processing circuit 113 conjoins the selected block with all of the other extracted blocks that overlap with the range of the single structure to form a single unified area. Through this process, the blocks that overlap with the range of a single structure can be conjoined as a single contiguous area.

If no is determined in step S2460, or after step S2330 is performed, the flow proceeds to step S1470. In step S1470, the processing circuit 113 records the empty area and the structure in association with each other in the storage device 114. An empty area where a structure does not exist is recorded without making an association with an object of recognition.

### <Step S2480>

If the processing is complete for all of the extracted blocks, the processing circuit 113 determines the relative priority for each empty area recorded in step S1470, on the basis of the location of the structure associated with the empty area. Details of the method for determining the relative priority will be described later.

### <Step S2490>

The processing circuit 113 compares the relative priorities of the one or more empty areas recorded in the storage device 114, sets an order of priority by highest relative priority, and causes the storage device 114 to store information thereon.

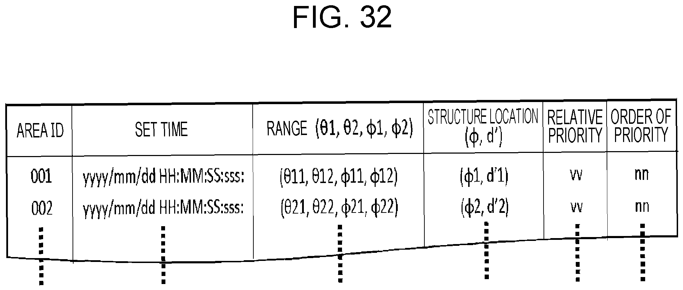

Fig. 32 is a diagram illustrating an example of information stored by the storage device 114 in the present modification. In this example, an area ID for identifying an empty area, the set time, the range of the empty area, and in addition, information on the location of a structure, the relative priority, and the order of priority are stored. Note that information on the recognition result is not recorded for an empty area that is not associated with any structure.

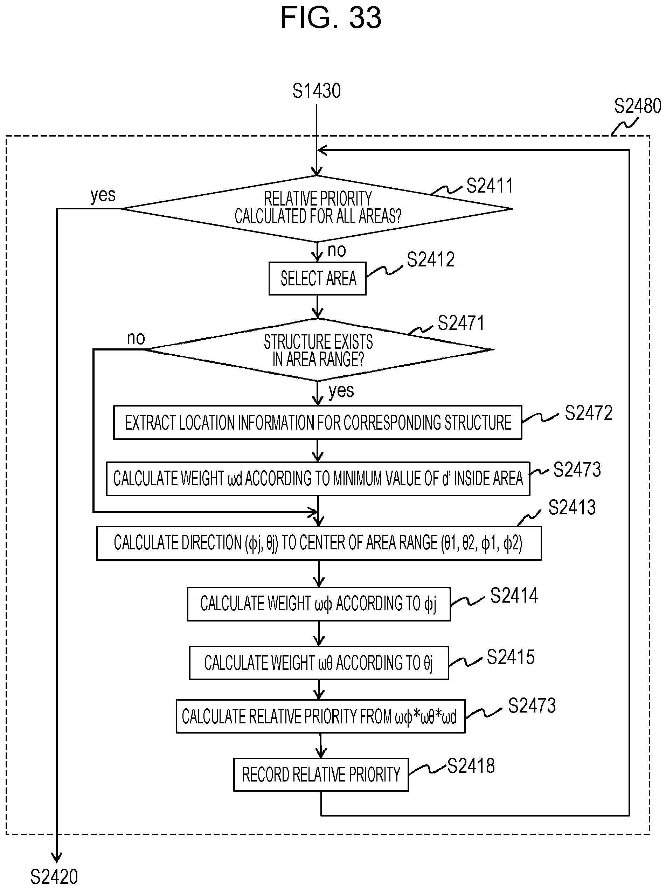

Fig. 33 is a flowchart illustrating details of the operations in step S2480. In the flowchart illustrated in Fig. 33, steps S2471, S2472, and S2473 are inserted between steps S2412 and S2413 in the flowchart illustrated in Fig. 15, and steps S2416 and S2417 are replaced with step S2473. Hereinafter, the operations that differ from the operations illustrated in Fig. 15 will be described mainly.

### <Step S2471>

The processing circuit 113 references the storage device 130 in regard to the empty area selected in step S2412 and determines whether a structure corresponding to the area exists. If a structure corresponding to the area exists, the flow proceeds to step S2472. If a structure corresponding to the area does not exist, the flow proceeds to step S2413.

### <Step S2472>

The processing circuit 113 references the storage device 130 and extracts the location information on the structure corresponding to the empty area.

### <Step S2473>

The processing circuit 113 sets a weight on the basis of the location information on the structure extracted in step S2472. For example, a weight ωd is set on the basis of the smallest of the values for the distance d' projected onto the xz plane recorded in Fig. 29A. In the example illustrated in Fig. 29A, the location information on the structure is recorded as the azimuthal angle ϕ and d' for multiple points inside the range occupied by the structure in the xz plane. The weight ωd can be determined according to a prescribed function from the minimum value of the location coordinate d' of the structure inside the empty area, for example.

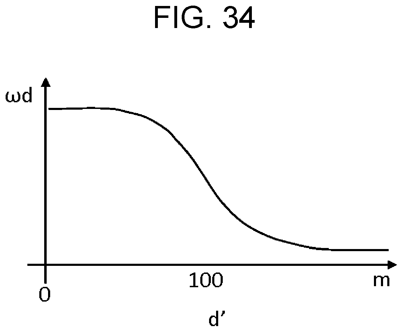

Fig. 34 is an example of a function expressing the relationship between the minimum value of d' and the weight ωd. In this function, the smaller the minimum value of d' is, that is, the smaller the shortest distance between the system 10 and the structure is, the larger the weight is, and if the minimum value of d' exceeds a certain value, the larger the minimum value of d' is, the smaller the weight is.

The processing in steps S2413, S2414, and S2415 that follow are the same as the processing in the corresponding steps illustrated in Fig. 15.

### <Step S2473>

The processing circuit 113 calculates the relative priority by multiplying together the weights ωd, ωϕ, and ωθ calculated in steps S2473, S2414, and S2415. In other words, in the present embodiment, the product of ωd, ωϕ, and ωθ is set as the relative priority.

In step S2418 that follows, the processing circuit 113 records the relative priority calculated in step S2473 in the storage device 114, in association with the empty area. For example, the relative priority is recorded for each empty area in the format illustrated in Fig. 32.

By repeating steps S2411 to S2418, the relative priority is calculated for all of the empty areas recorded in the storage device 114.

As above, in Modification 2 of Embodiment 2, external map information is acquired to match point cloud data with map information, empty areas are identified where valid distance measurement data was not acquired even though a structure is recorded at that location on the map, and the LiDAR sensor 110 prioritizes distance measurement in the identified areas. Weights are applied according to the locations of structures, and distance measurement is prioritized in areas where there is supposed to be a structure at locations closer to the distance measurement system. With this arrangement, distance measurement can be prioritized and the point cloud can be complemented in areas where structures likely exist at short range, which is important for the safe operation of the moving body.

### (Embodiment 3)

In Embodiment 1, Embodiment 2 and the modifications thereof, after the point cloud data 131 in the storage device 130 is updated, the LiDAR sensor 110 is described as completing distance measurement in all of the empty areas by the time the point cloud data 131 is updated next. However, if distance measurement is performed by multiple distance measurement devices on respectively different periods or aperiodically, the update interval of the point cloud data 131 may be short, and in some cases, the next update may occur before distance measurement operations are completed by the LiDAR sensor 110. Embodiment 3 describes a method of controlling the LiDAR sensor 110 that is suitable for the case in which an update of the point cloud data 131 occurs before distance measurement operations are completed by the LiDAR sensor 110.

The configuration of the system 10 in Embodiment 3 is the same as the configuration in Embodiment 1 illustrated in Fig. 1. In the present embodiment, the operations by the LiDAR sensor 110 are different from Embodiment 1. Hereinafter, the points that differ from Embodiment 1 will be described mainly.

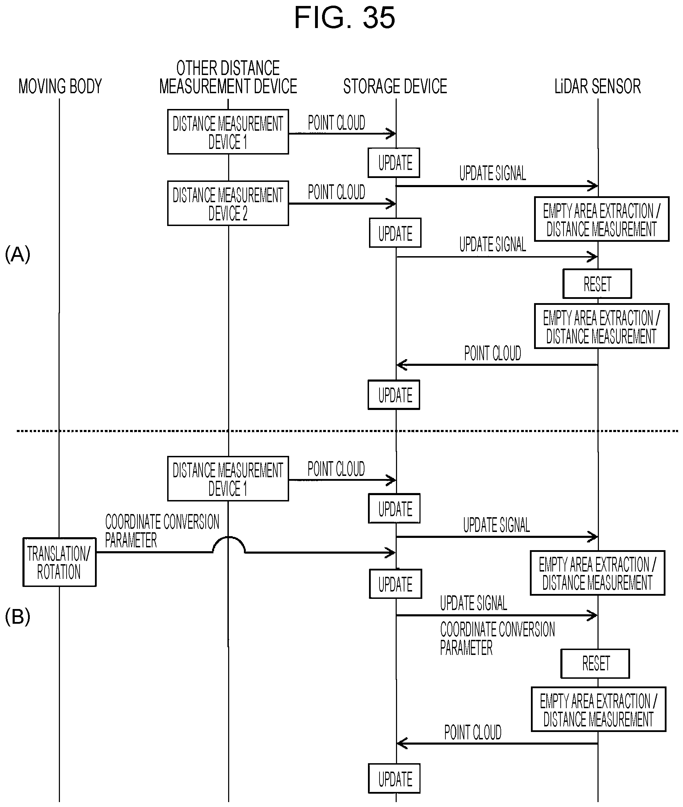

Fig. 35 is a diagram illustrating an example of operations by the distance measurement system 100 in Embodiment 3. In the present embodiment, in some cases, the point cloud data may be updated due to distance measurement being performed by another distance measurement device while the LiDAR sensor 110 is in the middle of performing the series of operations for empty area extraction and distance measurement. In such cases, the LiDAR sensor 110 records data on the points measured so far in the storage device 130, and deletes the extracted empty areas. Thereafter, the LiDAR sensor 110 references the most recently updated point cloud data, re-extracts empty areas, and measures the distance in the extracted empty areas. The storage device 130 updates the point cloud data by adding the data on the newly acquired points to the point cloud data.

Fig. 35(A) illustrates an example of operations in the case in which the updating of point cloud data is due to the input of data points by two distance measurement devices other than the LiDAR sensor 110. Fig. 35(B) illustrates an example of operations in the case in which the updating of point cloud data is due to coordinate conversion in association with translation or rotation of the moving body equipped with the system 10. In the example in Fig. 35(B), when translation or rotation of the moving body occurs, a coordinate conversion parameter is sent from the control device 200 of the system 10 to the storage device 130. When translation or rotation of the moving body occurs, the processor of the storage device 130 updates the point cloud data 131 by converting the coordinates of the point cloud data 131 on the basis of the coordinate conversion parameter. In this case, the storage device 130 sends an update signal together with the coordinate conversion parameter to the LiDAR sensor 110. In the case in which empty area distance measurement operations are interrupted by an update of the point cloud data 131, the LiDAR sensor 110 records the results already measured in the storage device 130. At this time, if the location or direction of the moving body changes like in Fig. 35(B), the coordinates are converted to the re-updated coordinate system.

Hereinafter, operations by the LiDAR sensor 110 in the present embodiment will be described in further detail.

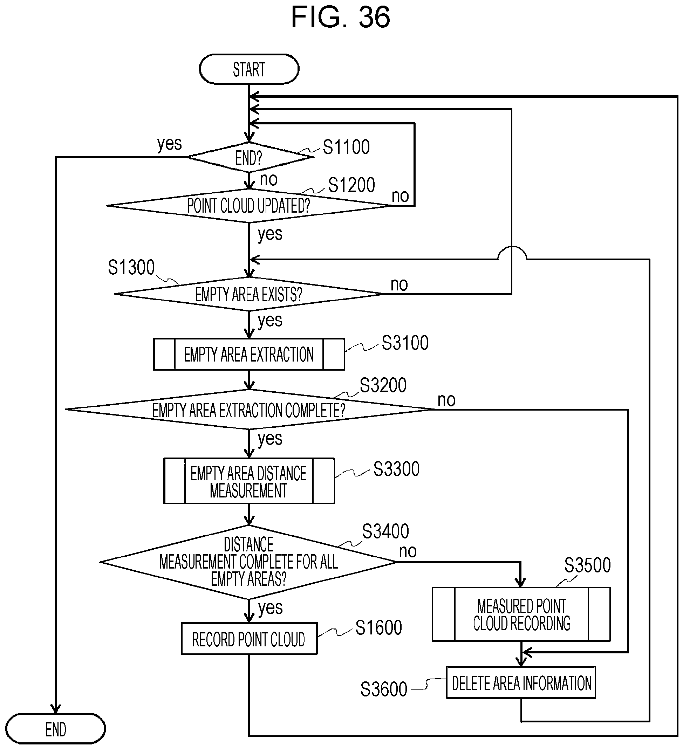

Fig. 36 is a flowchart illustrating operations by the LiDAR sensor 110 in the present embodiment. Fig. 36 includes operations in common with Fig. 10. Hereinafter, the points that differ from Fig. 10 will be described mainly.

The operations in steps S1100 to S1300 are the same as the operations in the corresponding steps illustrated in Fig. 10. If an empty area is determined to exist in step S1300, the flow proceeds to step S3100.

### <Step S3100>

The processing circuit 113 references the point cloud data 131 recorded in the storage device 130, divides the three-dimensional space into blocks, extracts blocks with a low frequency of data points, determines whether to conjoin each block with one or more adjacent blocks to form a unified area, and extracts empty areas. In the present embodiment, if an update signal is received from the storage device 130 in the course of the processing for extracting empty areas, the processing circuit 113 stops the operations in step S3100 and proceeds to step S3200. Details of the operations for extracting empty areas in S3100 will be described later.

### <Step S3200>

The processing circuit 113 determines whether the operations for extracting empty areas in step S3100 were completed or stopped during the operations. In other words, it is determined whether the determination processing was finished for all blocks and the generation and extraction of empty areas is complete.
If the extraction of empty areas is complete, the flow proceeds to step S3300. If the extraction of empty areas is incomplete, the flow proceeds to step S3600.

### <Step S3300>

The processing circuit 113 measures the distance in the empty areas extracted in step S3100. In the present embodiment, if an update signal is received from the storage device 130 during the operations in step S3300, the processing circuit 113 stops the operations in step S3300. Details of the operations in step S3300 will be described later.

### <Step S3400>

The processing circuit 113 determines whether distance measurement is complete for all empty areas or whether distance measurement was stopped during the operations. If distance measurement is complete for all of the empty areas, the flow proceeds to step S 1600. If there is an empty area for which distance measurement is incomplete, the flow proceeds to step S3500.

### <Step S3500>

The processing circuit 113 converts the distance measurement results for empty areas that were already recorded in the storage device 114 at the time point when the operations in step S3400 were stopped into a representation in the same coordinate system as the point cloud data 131 recorded in the storage device 130, and transmits the converted coordinates to the storage device 130. Details of the operations in step S3500 will be described later.

### <Step S3600>

The processing circuit 113 deletes all information on empty areas recorded in the storage device 114 and returns to step S1300.

### <Step S1600>

The processing circuit 113 converts the coordinates of the data points measured in each empty area in step S3300 into a representation in the same coordinate system as the point cloud data recorded in the storage device 130, and transmits the converted coordinates to the storage device 130. At this time, the empty areas in the storage device 114 are deleted. After the operations in step S1600, the flow returns to step S1100.

By repeating the operations in steps S1300 to S3600, even if the point cloud data 131 recorded in the storage device 130 is updated consecutively in a short period of time, the LiDAR sensor 110 can identify, and measure the distance in, empty areas where a valid number of data points does not exist in the most recent point cloud data and complement the information in the point cloud data 131.

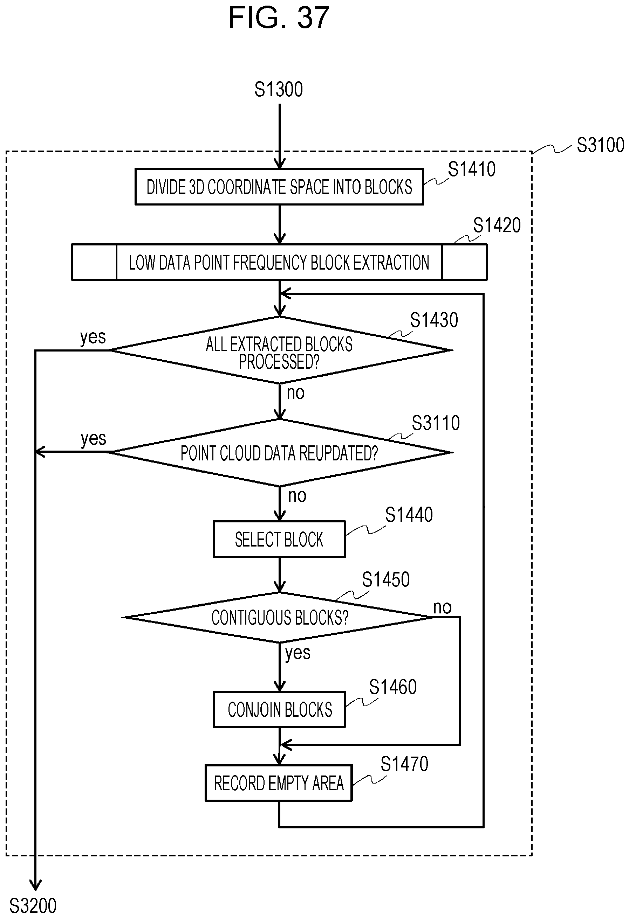

Fig. 37 is a flowchart illustrating details of the operations in step S3100. In the flowchart illustrated in Fig. 37, step S3110 is added between steps S1430 and S1440 in the flowchart illustrated in Fig. 11. The operations other than step S3110 are the same as the operations illustrated in Fig. 11. Hereinafter, the operations in step S3110 will be described.

### <Step S3110>

The processing circuit 113 determines whether a point cloud data update signal is outputted from the storage device 130 again after the determination in step S1200. In other words, the processing circuit 113 determines whether an update signal is acquired at a time later than the time of the operations in step S1200. If the point cloud data 131 is reupdated, step S3100 is stopped and the flow proceeds to step S3200. If there is no reupdate, the

### flow proceeds to step S1440.

In this way, in the present embodiment, if the point cloud data is reupdated in the course of the operations for extracting empty areas, the processing circuit 113 discontinues the operations for extracting empty areas.

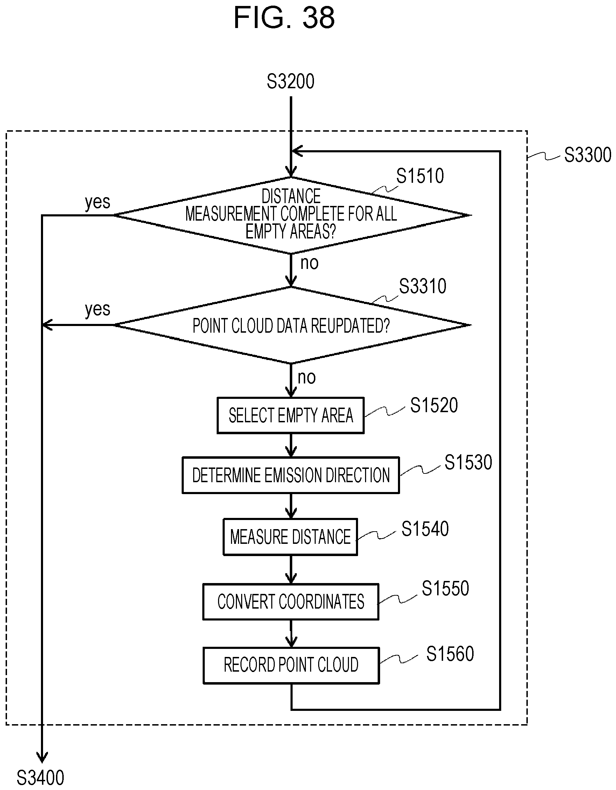

Fig. 38 is a flowchart illustrating details of the operations in step S3300. In the flowchart illustrated in Fig. 38, step S3310 is added between steps S1510 and S1520 in the flowchart illustrated in Fig. 13. The operations other than step S3310 are the same as the operations illustrated in Fig. 13. Hereinafter, the operations in step S3310 will be described.

### <Step S3310>

The processing circuit 113 determines whether a point cloud data update signal is outputted from the storage device 130 again after the determination in step S1200. In other words, the processing circuit 113 determines whether an update signal is acquired at a time later than the time of the operations in step S1200. If the point cloud data 131 is reupdated, step S3300 is stopped and the flow proceeds to step S3400. If there is no reupdate, the flow proceeds to step S1520.

In this way, in the present embodiment, if the point cloud data is reupdated in the course of the distance measurement operations, the processing circuit 113 discontinues the distance measurement operations.

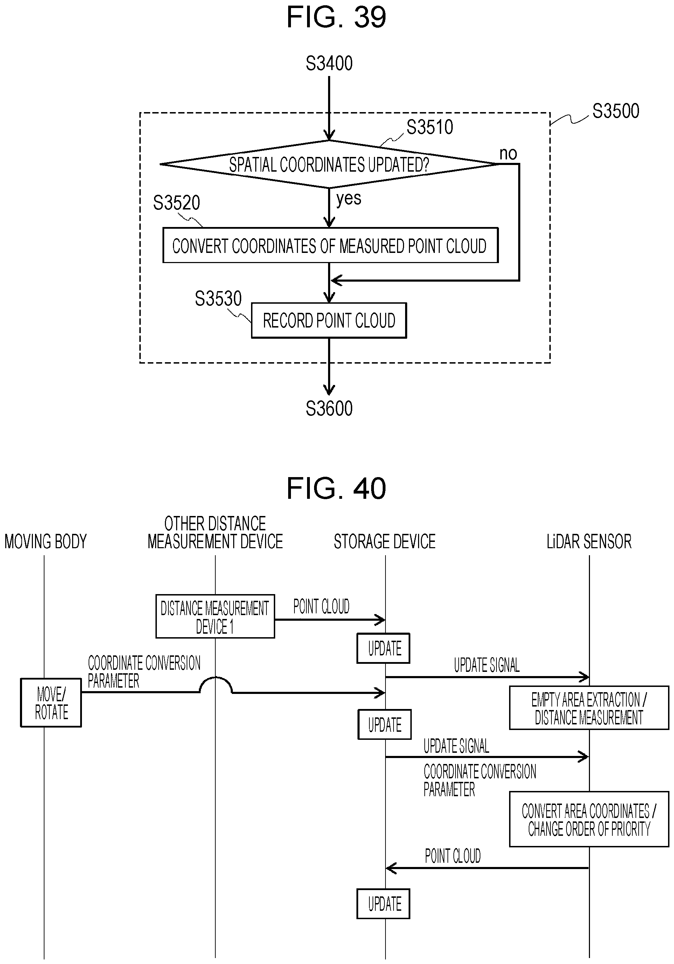

Fig. 39 is a flowchart illustrating details of the operations for recording, in the storage device 130, point cloud data for the empty areas already measured in step S3500. Step S3500 includes steps S3510 to S3530 illustrated in Fig. 39. Hereinafter, the operations in each step will be described.

### <Step S3510>

The processing circuit 113 determines whether the coordinates of the point cloud data 131 have been updated. The determination of whether coordinate conversion is up to date can be made according to whether a valid coordinate conversion parameter is included in the update signal acquired during the operations in step S3300, for example. Alternatively, the storage device 130 may be referenced to compare the coordinates in the storage device 130 with the coordinates in the storage device 114. Coordinates are updated when there is a change in the location or orientation of the moving body equipped with the system 10. Every time the location or orientation of the moving body changes by a certain amount or greater, the storage device 130 converts the coordinates of the point cloud data 131. The location and orientation of the moving body may be measured by sensors such as a GPS receiver and an inertial measurement unit (IMU) installed in the moving body. If the coordinates of the point cloud data 131 have been updated, the flow proceeds to step S3520. If the coordinates of the point cloud data 131 have not been updated, the flow proceeds to step S3530.

### <Step S3520>

The processing circuit 113 converts the coordinates of the point cloud data in the already-measured empty areas recorded in the storage device 114, according to the coordinate conversion parameter included in the update signal. The coordinate conversion may be performed by a three-dimensional affine transformation or by processing for translation and rotation in the xz plane.

### <Step S3530>

The processing circuit 113 outputs, to the storage device 130, information on the data points that were measured before the discontinuation of the distance measurement operations in step S3310, and updates the point cloud data 131.

Note that in the present embodiment, in step S3500, the data of the point cloud measured before the update of the point cloud data 131 is recorded, but the information on empty areas may also be deleted without recording the data and the flow may return to step S1300.

As above, according to the present embodiment, the point cloud data 131 may be updated consecutively in a short period of time. Even if the point cloud data 131 is updated while the LiDAR sensor 110 is in the middle of performing the operations for extracting empty areas or measuring the distance in the empty areas, the LiDAR sensor 110 can handle the updated point cloud data 131 immediately.
In addition, the data points measured prior to the update can be utilized.

Note that the LiDAR sensor 110 may also set an order of priority for the empty areas and measure the distance in empty areas sequentially by highest order of priority, like in Embodiment 2 and the modifications thereof. According to such a configuration, when the point cloud data 131 is reupdated, there is a high probability that distance measurement will be performed in an empty area having a high relative priority, and therefore the empty areas can be complemented with data points efficiently, even when the point cloud data is updated frequently.

### (Modification 1 of Embodiment 3)

In Embodiment 3, the LiDAR sensor 110 acquires an update signal outputted by the storage device 130 and removes all data other than the already-measured data from the storage device 114 both in the case in which the update is due to the addition of distance measurement data by another distance measurement device and in the case in which the coordinates are updated in association with translation or rotation of the moving body. That is, the information on empty areas where distance measurement is not performed by the time the reupdate occurs is deleted without being processed. In contrast, in Modification 1 of Embodiment 3, if the content of an update is an update of coordinates, the LiDAR sensor 110 retains the information on the extracted empty areas and performs distance measurement by converting the information on the empty areas to match the conversion of coordinates. Hereinafter, the operations that differ from Embodiment 3 will be described.

Fig. 40 is a diagram illustrating an example of operations by the distance measurement system 100 in Modification 1 of Embodiment 3. The operations illustrated in Fig. 40 are similar to the operations illustrated in Fig. 35(B), but the operations by the LiDAR sensor 110 after an update due to coordinate conversion of the point cloud data 131 occurs in association with translation or rotation of the moving body differ from the operations illustrated in Fig. 35(B). In the present modification, if an update signal acquired before the LiDAR sensor 110 completes the series of operations for extracting and measuring the distance in empty areas is due to coordinate conversion, the LiDAR sensor 110 converts the coordinates of the data points measured so far and the coordinates of the empty areas not yet measured into updated coordinates. Thereafter, an order of priority is redetermined on the basis of the updated coordinates of the empty areas where distance measurement is incomplete, and distance measurement is performed.

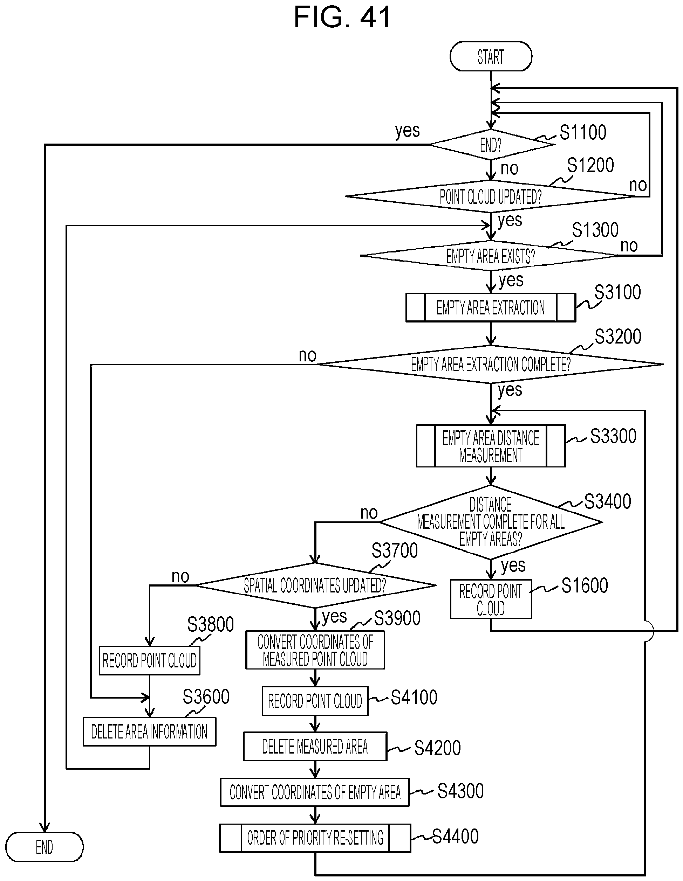

Fig. 41 is a flowchart illustrating operations by the LiDAR sensor 110 in Modification 1 of Embodiment 3. In the example in Fig. 41, the operations are different from the example illustrated in Fig. 36 if it is determined in step S3400 that distance measurement is not complete for all of the empty areas. In the present modification, if it is determined in step S3400 that distance measurement is not complete for all of the empty areas, the processing from step S3700 is executed. Hereinafter, the processing from step S3700 will be described.

### <Step S3700>

The processing circuit 113 determines whether the update of the point cloud data 131 is due to an update of coordinates. If the coordinates of the point cloud data 131 have been updated, the flow proceeds to step S3900. If the coordinates have not been updated, the flow proceeds to step S3800.

### <Step S3800>

The processing circuit 113 outputs, to the storage device 130, information on the data points that were measured before the discontinuation of the distance measurement operations, and updates the point cloud data 131.

### <Step S3600>

The processing circuit 113 deletes all information on empty areas recorded in the storage device 114 and returns to step S1300.

### <Step S3900>

The processing circuit 113 converts, according to the coordinate conversion parameter included in the update signal, the coordinates of the data points measured before the discontinuation of the distance measurement operations.

### <Step S4100>

The processing circuit 113 outputs information on the data points of which the coordinates were converted in step S3900 to the storage device 130 and updates the point cloud data 131.

### <Step S4200>

The processing circuit 113 deletes, from the storage device 114, information on the empty areas corresponding to the data points recorded in step S4100.

### <Step S4300>

The processing circuit 113 converts the coordinates of the vector range of the remaining empty areas still recorded in the storage device 114. Specifically, the processing circuit 113 converts, according to the coordinate conversion parameter, the vector range of the empty areas in which the distance has not been measured into a vector range expressed in the coordinate system of the updated point cloud data 131.

### <Step S4400>

The processing circuit 113 re-sets the relative priority for each area and determines the order of priority of the areas on the basis of the ranges of the empty areas converted in step S4300. The method for determining the order of priority will be described later. After step S4400, the flow returns to step S3300.

By repeating the operations from steps S3200 to S4400, if the point cloud data 131 is updated due to translation or rotation of the moving body in the course of measuring the distance in each of the extracted empty areas, the coordinates of the acquired point cloud data can be converted and recorded for the already-measured empty areas, whereas for the empty areas in which distance measurement is incomplete, the coordinates of the remaining empty areas can be converted and the order of priority can be re-set to perform distance measurement.

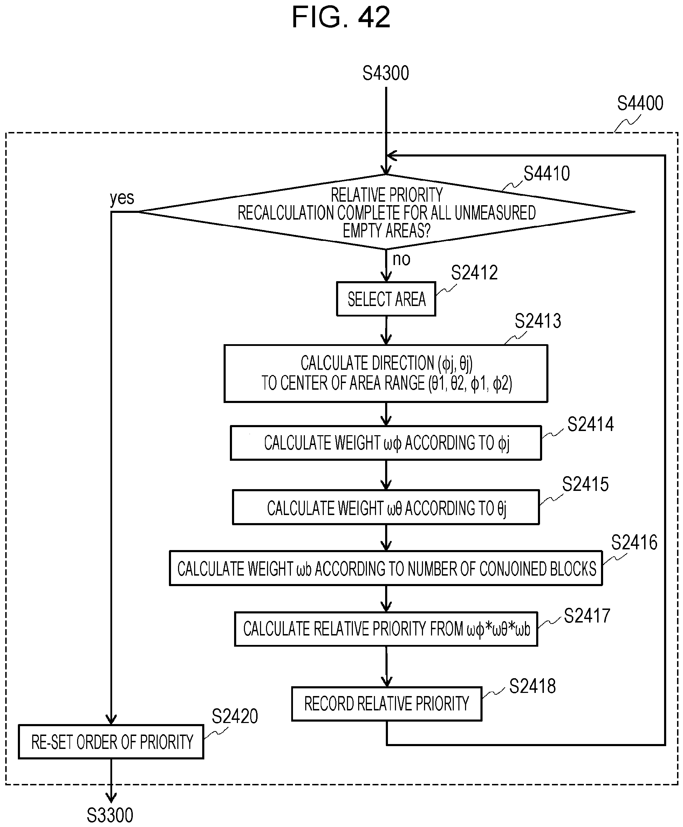

Fig. 42 is a flowchart illustrating details of the operations in step S4400. The flowchart in Fig. 42 includes operations similar to the operations illustrated in Fig. 15. Similar operations are denoted with the same signs and duplicate description is omitted. Hereinafter, the operations in each step will be described.

### <Step S4410>

The processing circuit 113 determines whether the calculation of the relative priority is complete for all of the empty areas of which the coordinates were converted in step S4300. If the calculation of the relative priority is complete for all of the empty areas, the flow proceeds to step S2420. If there is an empty area for which the relative priority has not been calculated, the flow proceeds to step S2412.

### <Step S2412>

The processing circuit 113 selects one empty area for which the relative priority has not been calculated.

### <Step S2413>

The processing circuit 113 calculates the direction (cpj, θj) to the center of the vector range of the empty area selected in step S2412.

### <Step S2414>

The processing circuit 113 calculates the weight ωϕ corresponding to the value of ϕj obtained in step S2413.

### <Step S2415>

In step 2415, the processing circuit 113 calculates the weight ωθ corresponding to the value of θj obtained in step S2413.

### <Step S2416>

The processing circuit 113 determines the weight ωb according to the number of blocks recorded in the storage device 114.

Note that the weight ωb based on the number of blocks is recalculated at this point, but if the weight ωb of each block calculated previously is stored in the storage device 114, the processing circuit 113 may also look up the weight from before the coordinate conversion recorded in the storage device 114 and determine ωb to use in the recalculation.

### <Step S2417>

The processing circuit 113 calculates the relative priority by multiplying together each of the weights calculated in steps S2414, S2415, and S2416.

### <Step S2418>

The processing circuit 113 records the relative priority calculated in step S2417 in the storage device 114. After the operations in step S2418, the flow returns to step S4410.

By repeating steps S2411 to S2418, the relative priority is calculated for all of the empty areas recorded in the storage device 114.

### <Step S2420>

When the recalculation of the relative priority for all of the empty areas is complete, the processing circuit 113 compares the relative priorities of the empty areas recorded in the storage device 114, sets an order of priority by greatest relative priority, and records information thereon in the storage device 114.

As above, according to the present modification, when at least one of the location or orientation of the moving body changes, the coordinates of the point cloud data 131 are converted. In the case in which an update is performed due to coordinate conversion of the point cloud data 131, the LiDAR sensor 110 converts the coordinates of the already-extracted empty areas according to the inputted coordinate conversion parameter, re-sets the order of priority, and then measures the distance in each empty area. Through such operations, processing to re-extract empty areas can be skipped, and even if the point cloud data is updated in a short period of time, the distance can be measured with respect to empty areas in the most recent point cloud data and the point cloud data can be complemented efficiently.

### (Embodiment 4)

In Embodiments 1 to 3 and the modifications thereof, the distance measurement method used by distance measurement devices other than the LiDAR sensor is not particularly limited, and the LiDAR sensor operates adaptively in response to the updating of the point cloud data caused by the acquisition of distance measurement data by distance measurement devices using all possible methods. In contrast, Embodiment 4 and modifications thereof describe a method of controlling the LiDAR sensor suited to the case in which the distance measurement sensor other than the LiDAR sensor is a distance measurement device, namely a stereo camera, that performs distance measurement according to a multi-camera method or the case in which the distance measurement sensor other than the LiDAR sensor is a monocular camera with a distance measurement function.

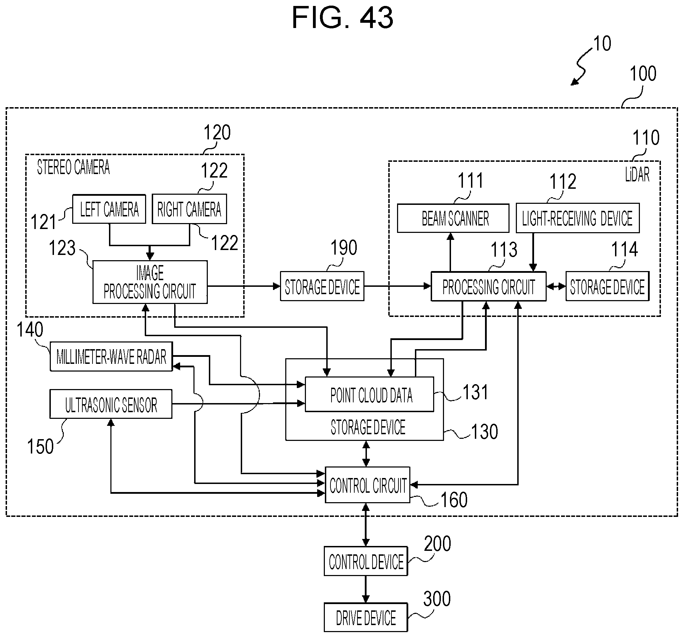

Fig. 43 is a block diagram illustrating a configuration of the system 10 according to Embodiment 4. In the configuration illustrated in Fig. 43, a storage device 190 is added to the configuration illustrated in Fig. 1.
Otherwise, the configuration is the same as in Fig. 1.

The storage device 190 stores the pixel locations of non-corresponding points on an image captured by a camera that serves as a reference for distance calculation, such as the left camera 121, for example, from among the two cameras 121 and 122 in the stereo camera 120, the non-corresponding points not corresponding to points on an image captured at the same time by the right camera 122. In the present embodiment, the storage device 190 a separate device from the storage device 130, but the functions of these devices may also be achieved by a single storage device.

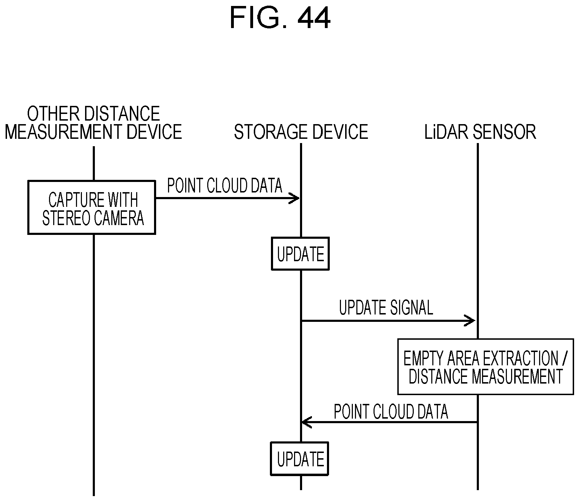

Fig. 44 is a diagram illustrating an overview of operations by the distance measurement system 100 in the present embodiment. The stereo camera 120 of the distance measurement system 100 captures images with each of the left camera 121 and the right camera 122 and matches the acquired two images. The image processing circuit 123 divides the image from the left camera 121, that is, the reference image, into small blocks, and extracts areas in the image from the right camera 122 that match the images inside the small blocks. At this time, the image processing circuit 123 records, in the storage device 190, information on the pixels of small blocks that were not matched successfully. For the pixels inside the matched blocks, the image processing circuit 123 calculates the distance from the stereo camera 120 to a captured object on the basis of the difference between the pixel location on the image captured by the left camera 121 and the pixel location on the image captured by the right camera 122, and the location and angle of each of the left camera 121 and the right camera 122. The image processing circuit 123 converts the locations of the point cloud indicating an identified object in the coordinate system of the stereo camera 120 to the coordinate system of the point cloud data 131, and transmits the converted point cloud location data to the storage device 130.

The storage device 130 obtains the point cloud data from the stereo camera 120 and updates the point cloud data 131. The storage device 130 updates the point cloud data 131 and outputs an update signal.

The LiDAR sensor 110, upon acquiring the update signal outputted by the storage device 130, references the point cloud data 131 recorded in the storage device 130, extracts empty areas, and measures the distance in the empty areas. The LiDAR sensor 110 transmits a distance measurement result to the storage device 130 and the storage device 130 updates the point cloud data 131.

Next, a specific example of operations by the stereo camera 120 will be described.

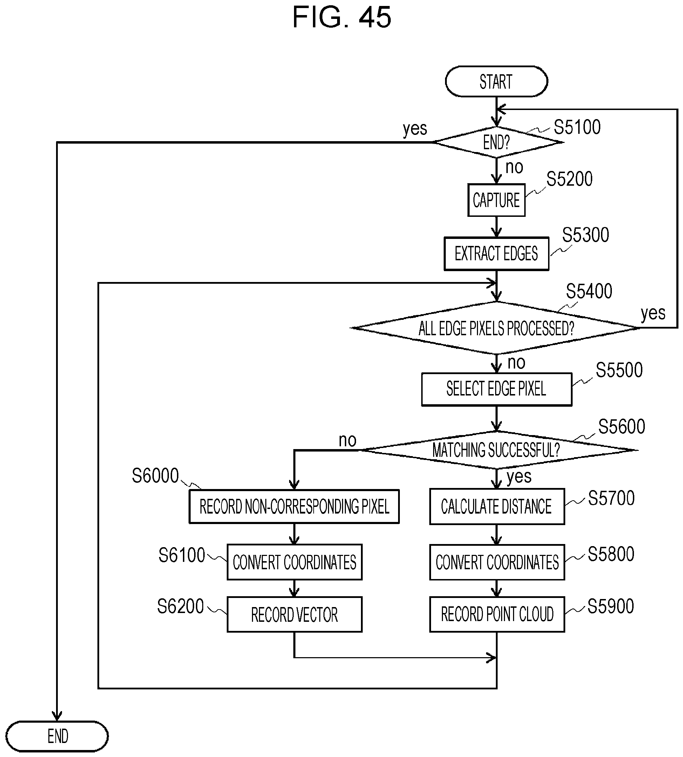

Fig. 45 is a flowchart illustrating a specific example of operations by the stereo camera 120. The stereo camera 120 starts operations on the basis of a start signal from the control circuit 160 and executes the operations in steps S5100 to S6200 illustrated in Fig. 45. Hereinafter, the operations in each step will be described.

### <Step S5100>

The image processing circuit 123 determines whether an end signal giving an instruction to end the operations is acquired from the control circuit 160. If the end signal is acquired, the operations are ended. If the end signal is not acquired, the flow proceeds to step S5200.

### <Step S5200>

The left camera 121 and the right camera 122 capture images of a scene at the same time on the basis of an image capture control signal outputted by the image processing circuit 123.

### <Step S5300>

The image processing circuit 123 performs edge detection processing on each of the right image captured by the left camera 121 and the left image captured by the right camera 122. Edge detection may be performed by a common method, such as the Canny algorithm, for example.

### <Step S5400>

The image processing circuit 123 determines whether the process of matching with a pixel in the right images has been performed for all pixels on an edge in the left image that serves as the reference image. If the matching process has been performed for all of the pixels on an edge in the left image, the flow returns to step S5100. If there is a pixel on an edge in the left image for which the matching process has not been performed, the flow proceeds to step S5500.

### <Step S5500>

The image processing circuit 123 selects, from among the pixels in the left image that serves as the reference image, a pixel which is on an edge detected in step S5300 and for which the process of matching with a pixel in the right image has not been performed.

### <Step S5600>

The image processing circuit 123 matches the pixel on an edge in the left image selected in step S5500 with a pixel in the right image. The image processing circuit 123 determines whether the pixel is associated with a pixel in the right image as a result of the matching process. If the pixel in the left image is associated with a pixel in the right image, the flow proceeds to step S5700. If the pixel in the left image is not associated with a pixel in the right image, the flow proceeds to step S6000.

The matching process may be performed according to a general image pattern matching method, such as the sum of squared differences (SSD) method or the sum of absolute differences (SAD) method, for example.

### <Step S5700>

The image processing circuit 123 calculates the distance to the object, or in other words the depth, on the basis of the difference (that is, the disparity) between the pixel locations on the left and right images matched in step S5600 and the location and angle of each of the left camera 121 and the right camera 122. The distance calculation may be performed according to a common method of triangulation, for example.

### <Step S5800>

The image processing circuit 123 converts points in three-dimensional coordinate system expressed by the depth obtained in step S5700 and the pixel location on the reference image into the coordinate system of the point cloud data 131 recorded in the storage device 130. A conversion parameter is recorded in advance in the memory of the image processing circuit 123.

### <Step S5900>

The image processing circuit 123 transmits information on the data points of which the coordinates were converted in step S5800 to the storage device 130 and updates the information in the point cloud data 131. After the operations in step S5900, the flow returns to step S5400.

### <Step S6000>

The image processing circuit 123 records, in the storage device 190, the pixel that is on an edge in the left image and not matched to a pixel in the right image in step S5500.

### <Step S6100>

The image processing circuit 123 converts the coordinates of the pixel recorded in the storage device 190 in step S6000 into a vector in the coordinate system of the point cloud data 131. A conversion parameter is stored in advance in the memory of the image processing circuit 123.

### <Step S6200>

The vector of which the coordinates were converted in step S6100 is recorded in the storage device 190. After the operations in step S6200, the flow returns to step S5400.

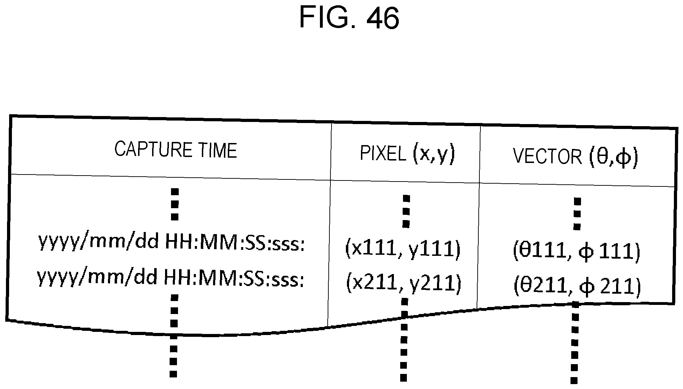

Fig. 46 is a diagram illustrating an example of information recorded in the storage device 190. In the example in Fig. 46, a capture time and location information for each pixel are recorded. Coordinates (x, y) on the reference image and a vector (θ, ϕ) indicating the direction of the pixel converted into the coordinate system of the point cloud data 131 are recorded as the location information for a pixel.

Through the operations illustrated in Fig. 45, a process can be performed in which all of the pixels on an edge detected in the reference image of the stereo camera 120 are matched to pixels in the other image, and for corresponding pixels, the distance is calculated, whereas for non-corresponding pixels, information thereon is recorded in the storage device 190.

Next, a specific example of operations by the LiDAR sensor 110 will be described.

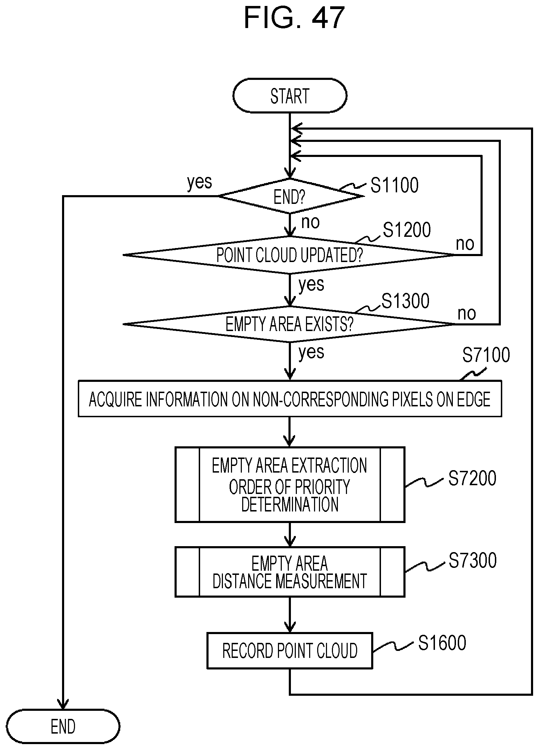

Fig. 47 is a flowchart illustrating operations by the LiDAR sensor 110 in the present embodiment. In the flowchart illustrated in Fig. 47, the operations in steps S2100, S2200, S2300, and S1500 in the flowchart in Embodiment 2 illustrated in Fig. 22 are replaced with steps S7100, S7200, and S7300. Hereinafter, the operations that differ from the operations illustrated in Fig. 22 will be described. In the present embodiment, if an empty area is determined to exist in step S1300, the flow proceeds to step S7100.

### <Step S7100>

The processing circuit 113 acquires the most recent information on pixel locations on an edge from the storage device 190. The pixels recorded in the storage device 190 are the pixels where an edge on the reference image was extracted but no correspondence with a pixel in the other image was found in the processing by the stereo camera 120.

### <Step S7200>

The processing circuit 113 references the point cloud data 131 recorded in the storage device 130, extracts one or more empty areas, and determines an order of priority for the empty areas on the basis of the location information on pixels on an edge recorded in the storage device 190. Details of the method for determining the order of priority will be described later.

### <Step S7300>

The processing circuit 113 measures the distance in each empty area that was extracted and recorded in the storage device 114 in step S7200. The processing circuit 113 set the emission direction of a beam to the direction of the vector corresponding to a pixel on an edge included in the empty area and controls the beam scanner 111 and the light-receiving device 112 to measure the distance. Details of the operations in step S7300 will be described later.

### <Step S1600>

The processing circuit 113 converts the coordinates of the data points measured in each empty area in step S7300 into a representation in the same coordinate system as the point cloud data recorded in the storage device 130, and transmits the converted coordinates to the storage device 130. At this time, information on the empty areas in the storage device 114 are deleted. After the operations in step S1600, the flow returns to step S1100.

By repeating steps S1 100 to S 1600, if the point cloud data 131 is updated on the basis of a distance measurement result from the stereo camera 120, the LiDAR sensor 110 can prioritize distance measurement in empty areas where a correspondence was not found between the two images acquired by the stereo camera 120 even though edges were detected from the two images, and complement the information in the point cloud data 131.

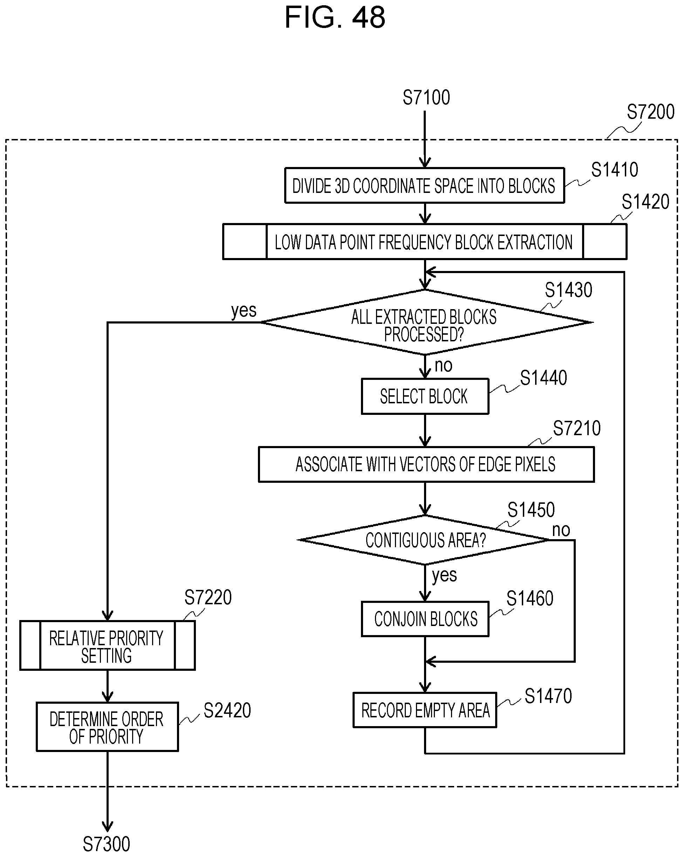

Fig. 48 is a flowchart illustrating details of the operations for extracting empty areas in step S7200. In the flowchart, step S7210 is inserted between steps S1440 and S1450 in the flowchart illustrated in Fig. 14, and step S2410 is replaced with step S7220. Hereinafter, the operations that differ from the operations illustrated in Fig. 14 will be described.

### <Step S7210>

The processing circuit 113 references the vector information of pixels on an edge for which a correspondence was not found between the two images acquired in step S7100, and associates the selected block and the vectors of the on-edge pixels by extracting the vectors of the on-edge pixels included in the selected block. If the selected block does not contain any vectors of on-edge pixels, no association is made.

The operations in steps S1450 to S1470 that follow are the same as the operations in the corresponding steps illustrated in Fig. 14.

### <Step S7220>

In step S1430, if it is determined that processing is complete of all of the extracted blocks, the processing circuit 113 determines the relative priority for each of the empty areas recorded in the storage device 114 on the basis of the number of vectors on an edge inside the area. Details of the method for determining the relative priority will be described later.

### <Step S2420>

The processing circuit 113 compares the relative priorities of the one or more empty areas recorded in the storage device 114, sets an order of priority by greatest relative priority, and records information thereon in the storage device 114.

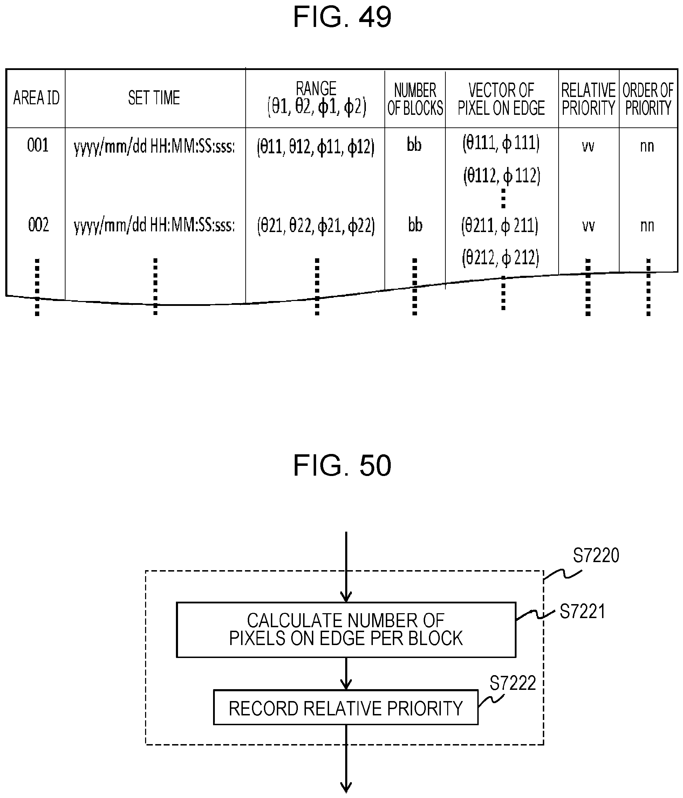

Fig. 49 is a diagram illustrating an example of information recorded in the storage device 114 in the present embodiment. In this example, for each empty area, an area ID, the set time, the range of the area, and in addition, the number of blocks forming the area, the vectors of on-edge pixels included in the area, the relative priority, and the order of priority are recorded. Note that a single empty area may contain multiple vectors of on-edge pixels.

Fig. 50 is a flowchart illustrating details of operations for calculating the relative priority in step S7220. Step S7220 includes steps S7221 and S7222. The operations in each step are as follows.

### <Step S7221>

The processing circuit 113 counts the number of on-edge pixels which are associated with an empty area and for which a correspondence was not found between the two images acquired by the stereo camera 120, and calculates the number of pixels per block.

### <Step S7222>

The processing circuit 113 records a relative priority in the storage device 114 for each empty area, taking the relative priority to be the number of edges per unit block obtained in step S7221.

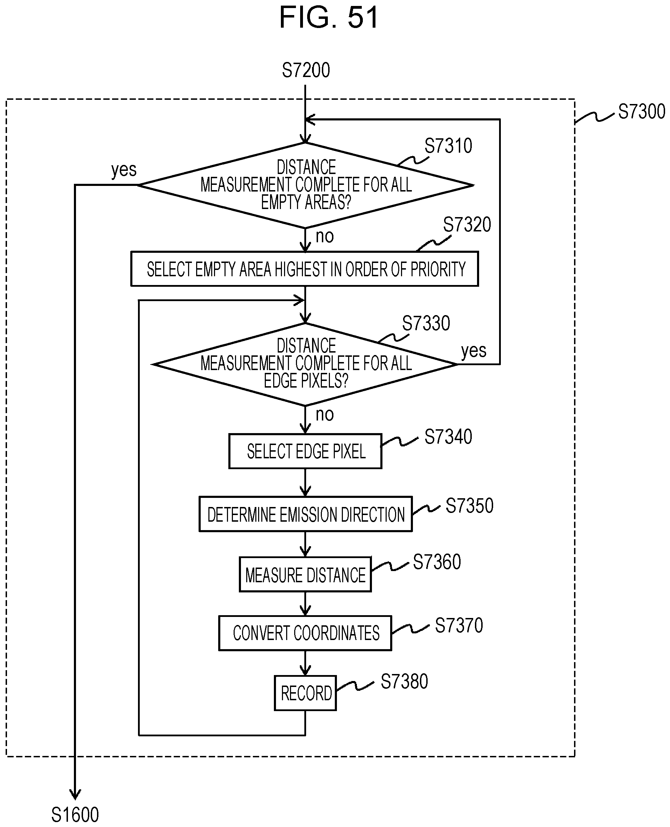

Fig. 51 is a flowchart illustrating details of the distance measurement operations in step S7300. Step S7300 includes steps S7310 to S7380. Hereinafter, the operations in each step will be described.

### <Step S7310>

The processing circuit 113 determines whether distance measurement is complete for all of the empty areas recorded in the storage device 114. If distance measurement is complete for all of the empty areas, the flow proceeds to step S1600. If there is an empty area for which distance measurement is still incomplete, the flow proceeds to step S7320.

### <Step S7320>

The processing circuit 113 selects the empty area highest in the order of priority from among the empty areas in which the distance measurement process is not finished.

### <Step S7330>

The processing circuit 113 references the storage device 114 and determines whether distance measurement is finished for all of the vectors (that is, directions) of the on-edge pixels associated with the selected empty area. If distance measurement is finished for the directions of all of the pixels, the flow returns to step S7310. If there is a direction of a pixel for which distance measurement is not finished, the flow proceeds to step S7340.

### <Step S7340>

The processing circuit 113 references the storage device 114 and selects, from among the on-edge pixels associated with the empty area selected in step S7320, a pixel for which distance measurement in the direction of the pixel is not finished.

### <Step S7350>

The processing circuit 113 determines the vector direction of the on-edge pixel selected in step S7340 as the emission direction of a beam, and converts the set direction to the value of a direction in three-dimensional coordinates based on the location and orientation of the LiDAR sensor 110.

### <Step S7360>

In step 7360, the processing circuit 113 transmits control signals to the beam scanner 111 and the light-receiving device 112. The LiDAR sensor 110 measures distance by emitting a beam in the direction determined in step S7350.

### <Step S7370>

The processing circuit 113 converts location information on the data point measured as a point in the coordinate system set in the LiDAR sensor 110 to the coordinate system of the point cloud data 131.

### <Step S7380>

The processing circuit 113 transmits the data point of which the coordinates were converted in step S7370 to the storage device 130 and updates the point cloud data 131. After the operations in step S7380, the flow returns to step S7330.

By repeating the operations in steps S7330 to S7380, distance measurement in the directions of the edges can be completed for all of the on-edge points which are associated with an empty area and of which the distance was not measured by the stereo camera 120.

In the present embodiment, the LiDAR sensor 110 measures the distance in all of the directions of the on-edge pixels. The operations are not limited to such operations, and may also determine a representative pixel among multiple adjacent pixels and measure the distance in the direction of the representative pixel only, for example.

In the operations in step S7300 in the present embodiment, if an empty area does not contain an edge for which no association was found by the stereo camera, the loop ends without measuring the distance in that empty area. The operations are not limited to such operations and may also be combined with the method of setting a direction in an empty area to measure the distance like in Embodiment 1, for example, such that the distance is also measured for empty areas that do not contain any edges.

In the case in which the distance measurement system is provided with the stereo camera as the distance measurement device other than the LiDAR sensor, among the features (edges, for example) in the image captured by one of the two cameras included in the stereo camera, the distance cannot be calculated and a data point cannot be generated for a feature with no corresponding point in the image captured by the other camera. Since there is a high probability that features in an image are the contours or the like of objects, it is important to generate data points corresponding to the features. According to the present embodiment, the LiDAR sensor 110 can prioritize distance measurement in areas where no data points were generated even though an edge exists. Through such operations, the distance can also be measured for objects at locations where distance measurement is difficult due to the characteristics of the stereo camera, and the point cloud data can be complemented.

### (Modification 1 of Embodiment 4)

In Embodiment 4, the order of priority for distance measurement is determined on the basis of the number of pixels on an edge associated with an empty area. In contrast, in this Modification 1, distance measurement is prioritized for areas enclosed by edges by raising the relative priority of an empty area inside a closed curve detected from an image captured by the stereo camera 120.

The configuration in the present embodiment is the same as Embodiment 4. In the present modification, the operations by the stereo camera 120 and the LiDAR sensor 110 differ from Embodiment 4. Hereinafter, the operations that differ from Embodiment 4 will be described mainly.

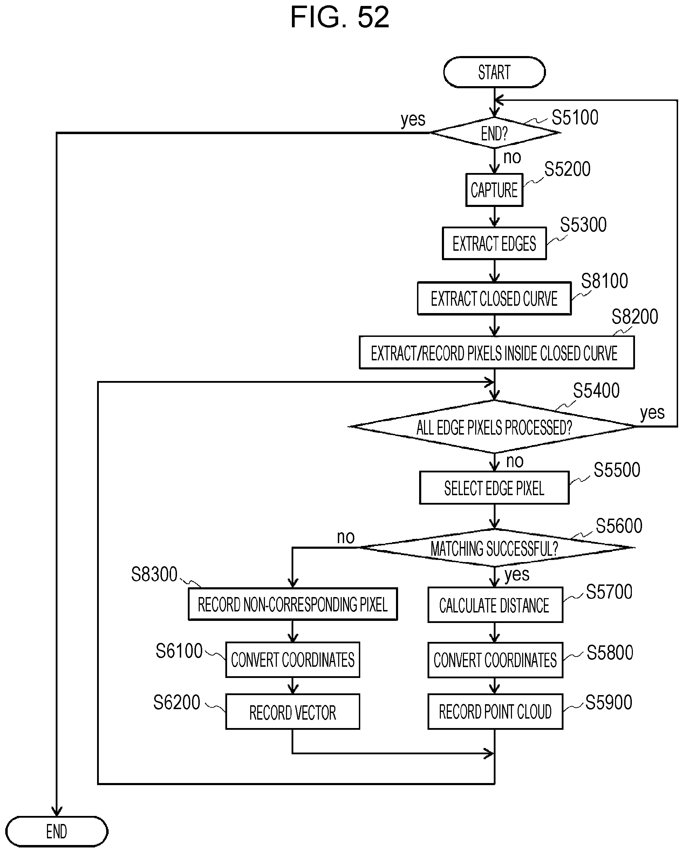

Fig. 52 is a flowchart illustrating operations by the stereo camera 120 in the present modification. In the flowchart, steps S8100 and S8200 are inserted between steps S5300 and S5400 in the flowchart illustrated in Fig. 45, and step S6000 is replaced with step S8300. Hereinafter, the operations in these steps will be described.

### <Step S8100>

The image processing circuit 123 extracts edges forming a closed curve from the edges extracted in step S5300, and assigns an ID to the extracted closed curve.
The method for determining a closed curve is, for example, a method of fitting a closed curve model or connecting edge endpoints that are close in distance.

### <Step S8200>

The image processing circuit 123 uses the closed curve extracted in step S8100 to extract pixels inside the closed curve, and records information on the extracted pixels in the storage device 190, in association with the ID of the closed curve. A method of using the complex function theorem, a method involving the number of intersections with a closed curve from a specific point, or the like may be used as the method for identifying the pixels inside a closed curve, for example.

The operations in steps S5400 to S5900 are the same as the operations in the corresponding steps illustrated in Fig. 45.

### <Step S8300>

The image processing circuit 123 records, in the storage device 190, information on the pixels on an edge that were not matched successfully between the left and right images.

The operations in steps S6100 and S6200 that follow are the same as the operations in the corresponding steps illustrated in Fig. 45.

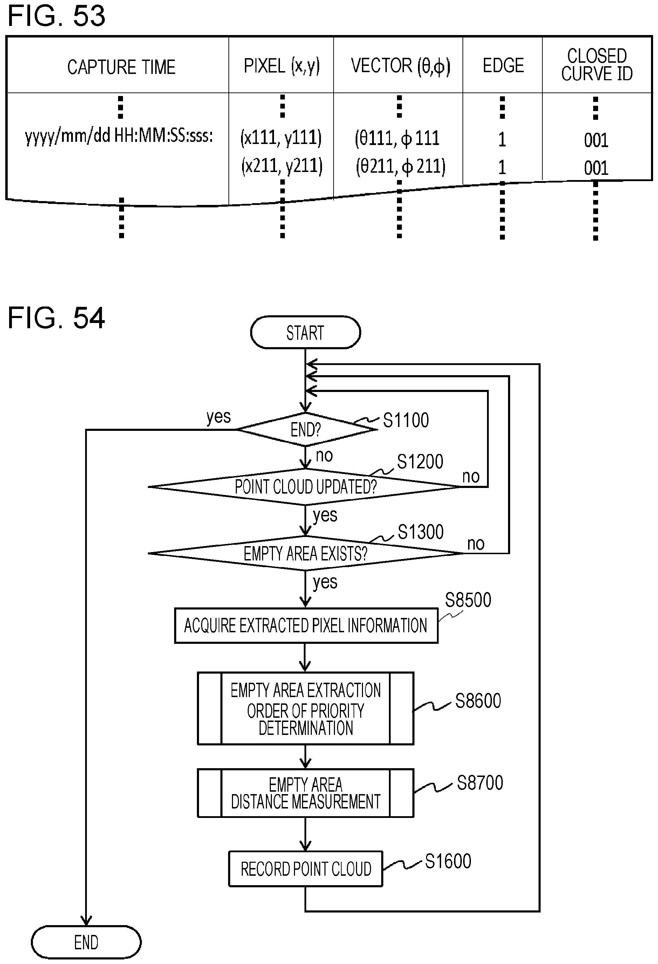

Fig. 53 is a diagram illustrating an example of information stored by the storage device 190 in the present modification. In this example, for each pixel, the capture time, the coordinates of the pixel, a vector after coordinate conversion, an indication of an edge or not, and if the pixel is included in a closed curve, the closed curve ID, are recorded. For pixels on an edge, a code indicating that the pixel is an edge is assigned. In the case of a pixel not inside a closed curve, a code indicating that the pixel is not inside, such as "00" for example, is recorded.

Through the operations illustrated in Fig. 52, all of the edges detected in the reference image of the stereo camera 120 can be matched to the other image, and for corresponding edges, the distance can be calculated, whereas non-corresponding edges can be recorded in the storage device 190 together with information indicating the inside of a closed curve or not.

Note that in the present modification, information about edges is used to identify the pixels inside a closed curve, but another method, such as machine learning, may also be used instead of using information about edges. For example, pixels inside areas divided using a deep learning algorithm such as semantic segmentation or instance segmentation may be identified as pixels inside a closed curve.

Next, details of the operations by the LiDAR sensor 110 in the present modification will be described.

Fig. 54 is a flowchart illustrating a specific example of operations by the LiDAR sensor 110 in the present modification. In this flowchart, steps S7100 to S7300 in the flowchart illustrated in Fig. 47 are replaced with steps S8500 to S8700. Hereinafter, the operations in these steps will be described.

### <Step S8500>

The processing circuit 113 acquires the most recent information on extracted pixels from the storage device 190.

### <Step S8600>

The processing circuit 113 references the point cloud data 131 recorded in the storage device 130, extracts one or more empty areas, and determines an order of priority for the empty areas on the basis of the information recorded in the storage device 190. Details of the method for determining the order of priority will be described later.

<Step S8700>

The processing circuit 113 measures the distance in each empty area recorded in the storage device 114. Details of the method for determining the distance measurement direction will be described later.

Through the operations illustrated in Fig. 54, if the point cloud data 131 in the storage device 130 is updated on the basis of a distance measurement result from the stereo camera 120, the LiDAR sensor 110 can prioritize distance measurement in the area inside a closed curve indicating edges in an image acquired by the stereo camera 120, and complement the information in the point cloud data 131.

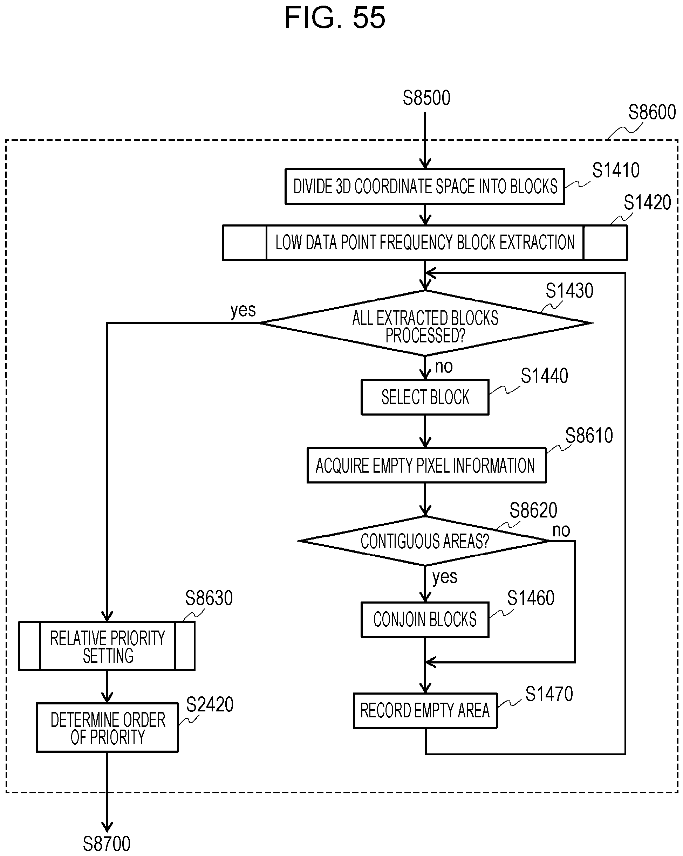

Fig. 55 is a flowchart illustrating details of operations for extracting empty areas and determining order of priority in step S8600. In this flowchart, steps S7210 and S1450 in the flowchart illustrated in Fig. 48 are replaced with steps S8610 and S8620, and step S7220 is replaced with step S8630. Hereinafter, the operations in the steps that differ from Fig. 48 will be described.

### <Step S8610>

The processing circuit 113 references the pixel information acquired in step S8500 and extracts information on pixels included in the selected block.

### <Step S8620>

The processing circuit 113 determines whether the block is included in multiple adjacent blocks. The conditions on conjoining adjacent blocks are that the data points in the adjacent blocks are of lower frequency than a threshold value and that the closed curve ID is the same for the pixel information included in the adjacent blocks. If the adjacent blocks meet the above conditions, the flow proceeds to step S1460. If the adjacent blocks do not meet the above conditions, the flow proceeds to step S1470.

The operations in steps S1460 and S1470 are the same as the operations in the corresponding steps illustrated in Fig. 48.

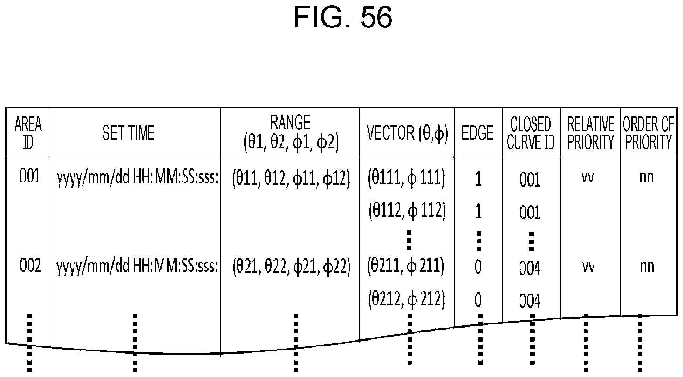

Fig. 56 is a diagram illustrating an example of information stored by the storage device 114. In this example, for each empty area, an area ID, the set time of the area, the range of the area, the relative priority, the order of priority, and in addition, for each pixel included in the empty area, the direction of the corresponding pixel, an indication of whether the pixel is on an edge or not, and if the pixel is inside a closed curve, the closed curve ID, are recorded.

### <Step S8630>

The processing circuit 113 determines the relative priority for each of the empty areas recorded in the storage device 114 on the basis of the edge information about vectors inside the area and the closed curve information. Details of the method for determining the relative priority in step S8630 will be described later.

In the following step S2420, the processing circuit 113 compares the relative priorities of each of the empty areas recorded in the storage device 114, sets an order of priority by greatest relative priority, and records information thereon in the storage device 114.

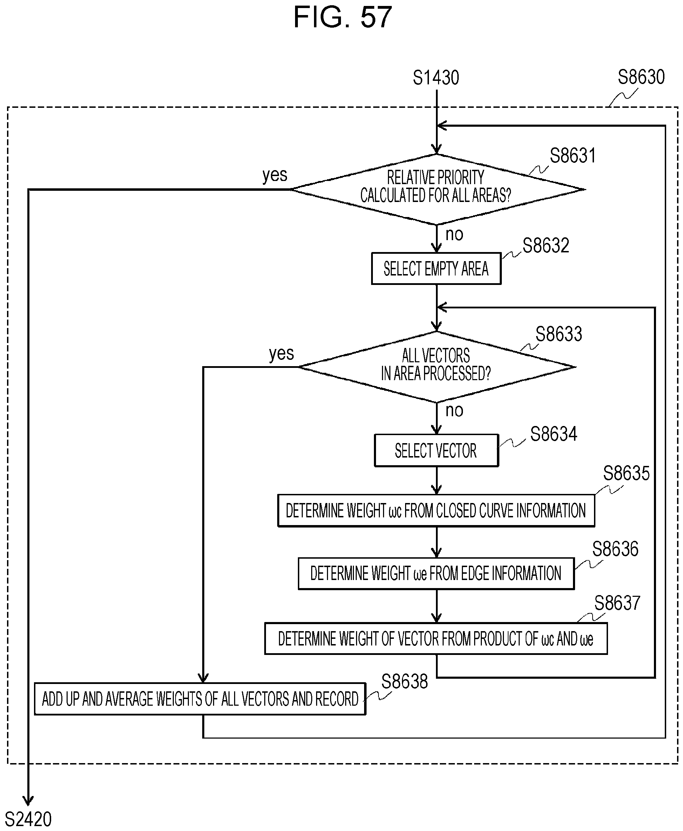

Fig. 57 is a flowchart illustrating details of the operations in step S8630. Step S8630 includes steps S8631 to S8638 illustrated in Fig. 57. Hereinafter, the operations in each step will be described.

### <Step S8631>

The processing circuit 113 determines whether the calculation of the relative priority is complete for all of the empty areas recorded in the storage device 114. If the calculation of the relative priority is complete for all of the empty areas, the flow proceeds to step S2420. If an empty area remains for which the calculation of the relative priority is incomplete, the flow proceeds to step S8632.

### <Step S8632>

The processing circuit 113 selects one empty area for which the relative priority has not been calculated from among the empty areas recorded in the storage device 114.

### <Step S8633>

The processing circuit 113 determines whether the calculation of a weight is complete for all vectors inside the empty area selected in step S8632. If the calculation of a weight is complete for all vectors inside the empty area, the flow proceeds to step S8638. If a vector remains for which the calculation of a weight is not finished, the flow proceeds to step S8634.

### <Step S8634>

The processing circuit 113 selects a vector for which the calculation of a weight is not finished from among the vectors inside the selected empty area.

### <Step S8635>

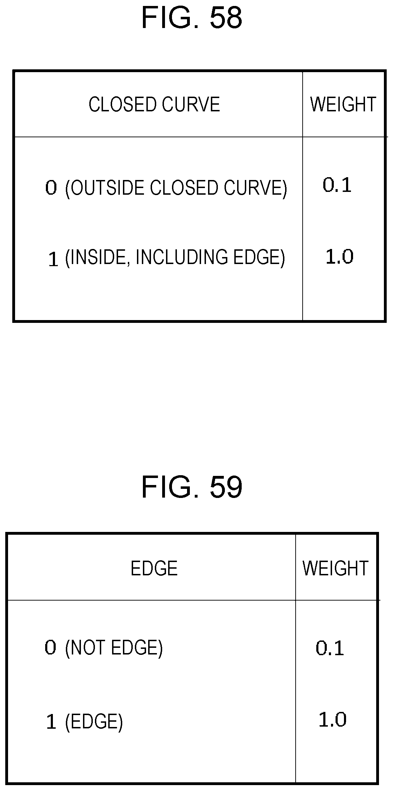

The processing circuit 113 determines a weight ωc on the basis of the close curve information about the vector selected in step S8634. The weight ωc may be determined according to a predetermined table or function, for example. For example, the weight ωc may be determined according to a table defining a correspondence relationship between closed curve information and weights. Fig. 58 is a diagram illustrating an example of a table defining a correspondence relationship between closed curve information and weights. In this example, a weight of 0.1 is assigned outside a closed curve and a weight of 1.0 is assigned inside a closed curve, including the edges. In this way, a larger weight is applied inside a closed curve, including the edges. Note that the numerical values in the table illustrated in Fig. 58 are a non-limiting example.

### <Step S8636>

The processing circuit 113 determines a weight ωe on the basis of the edge information about the selected vector. The weight ωe may be determined according to a predetermined table or function, for example. For example, the weight ωe may be determined according to a table defining a correspondence relationship between edge information and weights. Fig. 59 is a diagram illustrating an example of a table defining a correspondence relationship between edge information and weights. In this example, a weight of 0.1 is assigned to a vector corresponding to a pixel not on an edge and a weight of 1.0 is assigned to a vector corresponding to a pixel on an edge. In this way, a larger weight is applied to a vector corresponding to a pixel on an edge. Note that the numerical values in the table illustrated in Fig. 59 are a non-limiting example.

### <Step S8637>

The processing circuit 113 determines the weight of the vector by multiplying the weight ωc determined in step S8635 by the weight ωe determined in step S8636. After the operations in step S8637, the flow returns to step S8633.

By repeating steps S8633 to S8637, weights are calculated for all of the vectors inside the empty areas recorded in the storage device 114.

### <Step S8638>

The processing circuit 113 calculates the relative priority of the selected empty area by adding up and averaging the weights of all of the vectors inside the empty area and records the relative priority in the storage device 114, in association with the empty area.

By repeating the operations in steps S8631 to S8638, the relative priority can be calculated for all of the empty areas recorded in the storage device 114.

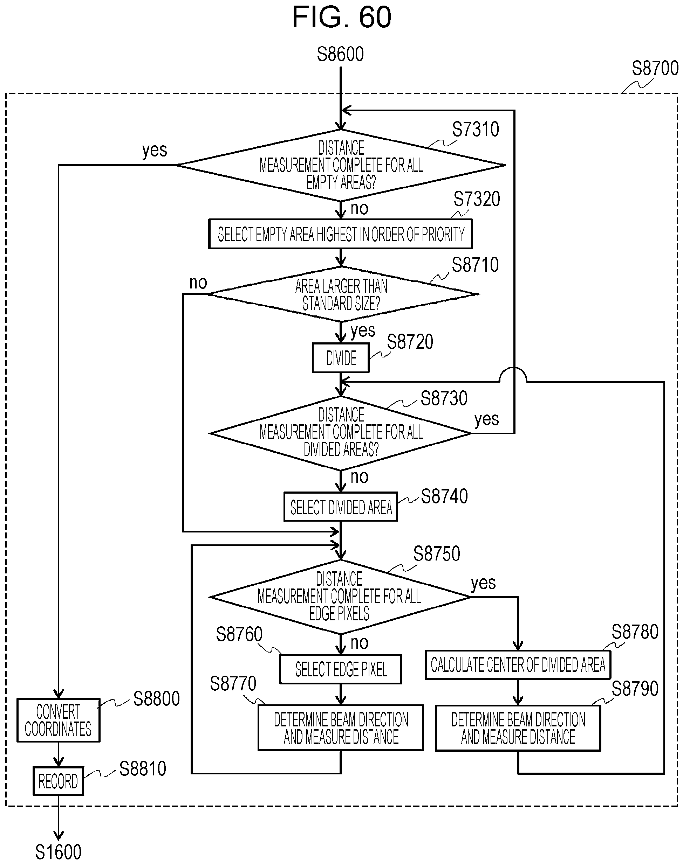

Fig. 60 is a flowchart illustrating details of the distance measurement operations in step S8700 illustrated in Fig. 54.

In Embodiment 4, the distance is measured in the direction of a pixel on an edge for which no correspondence is found between the two images acquired by the stereo camera 120. In contrast, in the present modification, the distance measurement is measured not only on the edges of an empty area but also in a direction inside the empty area. Hereinafter, the operations in each step will be described.

### <Step S7310>

The processing circuit 113 determines whether distance measurement is complete for all of the empty areas recorded in the storage device 114. If distance measurement is complete for all of the empty areas, the flow proceeds to step S1600. If there is an empty area for which distance measurement is still incomplete, the flow proceeds to step S7320.

### <Step S7320>

The processing circuit 113 selects the empty area highest in the order of priority from among the empty areas in which the distance measurement process is not finished.

### <Step S8710>

The processing circuit 113 determines whether the selected area is larger than a predetermined standard size. If the area is larger than the standard size, the flow proceeds to step S8720. If the area is the same size or smaller than the standard size, the flow proceeds to step S8750. The size of an area may be assessed by comparing the angle range in each of the x-axis direction and y-axis direction to a threshold value. For example, if the angle range in the x-axis direction is greater than 2 degrees and the angle range in the y-axis direction is greater than 2 degrees, the area may be determined to be larger than the standard size.

### <Step S8720>

The processing circuit 113 divides the empty area into partial areas. The division may be performed in units of a predetermined angle in each of the x-axis direction and the y-axis direction. For example, the division may be performed in units of 2 degrees in the x-axis direction and 2 degrees in the y-axis direction.

### <Step S8730>

The processing circuit 113 determines whether distance measurement is complete for all of the divided areas divided in step S8720. If distance measurement is complete for all of the divided areas, the flow returns to step S7310. If there is a divided area for which distance measurement is not finished, the flow proceeds to step S8740.

### <Step S8740>

The processing circuit 113 selects a divided area for which distance measurement is not finished from among the divided areas divided in step S8720.

### <Step S8750>

The processing circuit 113 determines whether distance measurement is finished for the pixels on all edges in the selected divided area. If distance measurement is not finished for pixels on all edges in the divided area, the flow proceeds to step S8770. If there is an edge for which distance measurement is not finished in the divided area, the flow proceeds to step S8760.

### <Step S8760>

The processing circuit 113 selects a pixel for which distance measurement is not finished from among the pixels on an edge in the selected divided area.

### <Step S8770>

The processing circuit 113 sets the direction to the edge selected in step S8760 as the emission direction of a beam and transmits control signals to the beam scanner 111 and the light-receiving device 112 to execute distance measurement. After the operations in step S8770, the flow returns to step S8750.

By repeating the operations in steps S8750 to S8770, the distance can be measured in the directions of the pixels on all edges in a divided area.

### <Step S8780>

The processing circuit 113 calculates an angle ϕc of the center of the angle range in the x-axis direction and an angle θc of the center of the angle range in the y-axis direction of the divided area.

### <Step S8790>

The processing circuit 113 sets the direction of the angles ϕc and θc calculated in step S8780 as the beam emission direction and transmits control signals to the beam scanner 111 and the light-receiving device 112 to execute distance measurement. After the operations in step S8790, the flow returns to step S8730.

By repeating the operations in steps S8730 to S8790, the distance can be measured in the directions of the pixels on edges in the empty area selected in step S7320 and in the center direction of the empty area. Note that in this example, the distance is measured in the center direction in an empty area, but any one or more directions in an empty area may be determined in an empty area to measure the distance in the one or more directions.

By repeating the series of operations in steps S7310 to S8790, the distance can be measured for all of the empty areas recorded in the storage device 114.

### <Step S8800>

The processing circuit 113 converts the coordinates of the data points of which the distance was measured in all empty areas recorded in the storage device 114 into values in the coordinate system of the point cloud data 131.

### <Step S8810>

The processing circuit 113 transmits the data points of which the coordinates were converted in step S8800 to the storage device 130 and updates the point cloud data 131.

As above, according to the present modification, distance measurement can be prioritized for empty areas inside a closed curve. With this arrangement, distance measurement can be prioritized not for the background but for empty areas where adequate distance measurement data was not obtained even though there is a high probability that an important object exists, and the point cloud data can be complemented.

### (Modification 2 of Embodiment 4)

In Embodiment 4, the order of priority for distance measurement is determined on the basis of the number of pixels on an edge associated with an empty area. Also, in Modification 1 of Embodiment 4, a high relative priority is set for empty areas inside a closed curve in an image captured by the stereo camera 120, and distance measurement is prioritized for areas enclosed by edges. In contrast, in Modification 2 of Embodiment 4, a high relative priority is set for areas of lower-confidence stereo matching that occur when edges overlap with epipolar lines, or empty areas arising therefrom, in an image captured by the stereo camera 120, and distance measurement is prioritized for areas on a line segment connecting a pixel of interest and the camera center.

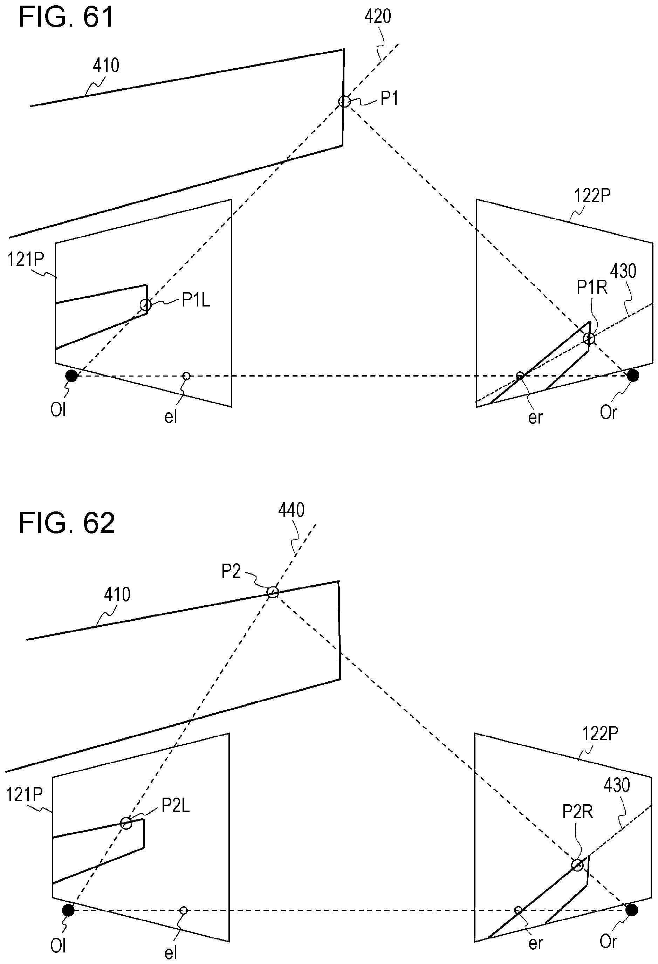

Fig. 61 is a diagram for explaining a three-dimensional measurement method for an edge portion based on the left camera 121 of the stereo camera 120. The following describes an example of a method for obtaining the three-dimensional location of a point P1 on an object 410, such as a fence, that is formed from edges. To calculate the three-dimensional location of the point P1, it is necessary to search for a corresponding point P1R on a projection plane 122P of the right camera 122 that corresponds to a projected point P1L of the point P1 projected onto a projection plane 121P of the left camera 121. However, since there are multiple similar patterns on the edges, if a matching process is performed as in step S5600 (see Fig. 45) in Embodiment 4, it may be difficult to achieve sufficiently high matching accuracy at the edges. Even in such cases, the corresponding point can be obtained accurately by using a constraint referred to as the epipolar constraint of a stereo camera. Specifically, a pre-calculated rotation matrix R and translation vector T of the left and right cameras 121 and 122 can be used to calculate a point P2R as a point on an epipolar line 430 passing through a projection location er of the left camera 121 on the projection plane 122P of the right camera 122. Since the point P1R lies on the epipolar line 430, if the matching process is performed only on the epipolar line 430, the location of the point P1R can be identified. If the angle of intersection between the edge on which the point P1 lies and the epipolar line 430 is greater than a certain value, the point P1R can be obtained with high accuracy.

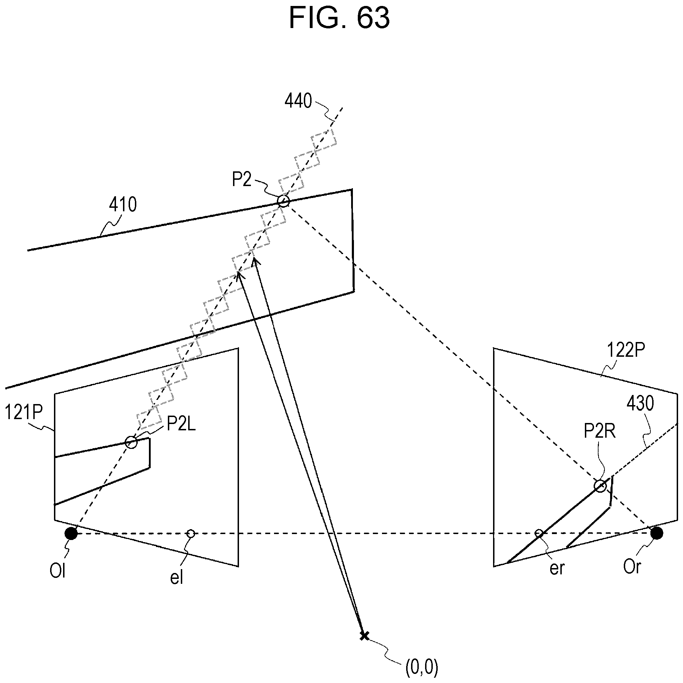

However, if the angle of intersection between the edge and the epipolar line 430 is small, that is, if the edge and the epipolar line 430 are nearly parallel like in the example illustrated in Fig. 62, many similar patterns will also occur in the matching process on the epipolar line 430. Consequently, problems occur in which the matching accuracy is lowered and the three-dimensional location accuracy of the point P2 is lowered or cannot be calculated. In this case, it is known that the point P2 lies on a line segment 440 connecting the camera center Ol of the left camera 121 and a projected point P2L of the point P2. Therefore, as illustrated in Fig. 63, the three-dimensional location of the point P2 can be calculated with high accuracy by prioritizing distance measurement by the LiDAR sensor in the area corresponding to the blocks that lie on the line segment 440 ahead of the projection plane 121P of the left camera 121.

As above, by selecting a pixel where the epipolar line and the edge overlap and using the LiDAR sensor to measure the distance in the blocks that lie on a line segment connecting the selected pixel and the camera center, the distance can be measured efficiently in empty areas and accurate three-dimensional measurement is possible.

The configuration of the moving body control system 10 and the distance measurement system 100 in the present modification is similar to the configuration in Embodiment 4. Hereinafter, the points that differ from Embodiment 4 will be described mainly.

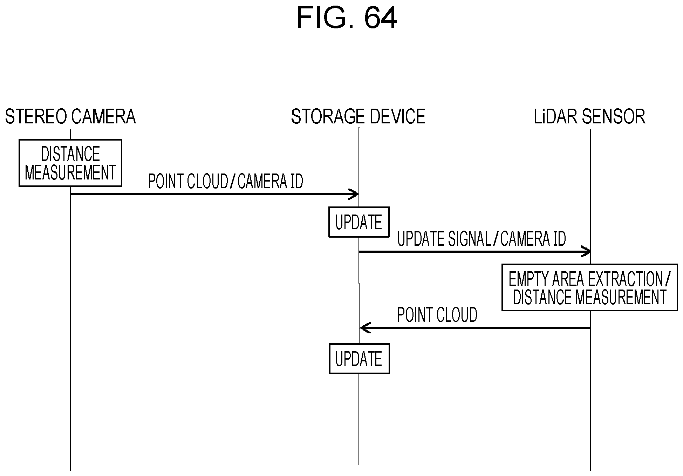

Fig. 64 is a diagram illustrating an overview of operations by the distance measurement system 100 in Modification 2 of Embodiment 4. In the present modification, the distance measurement device other than the LiDAR sensor 110 is the stereo camera 120.

The stereo camera 120 performs distance measurement, generates and transmits data points to the storage device 130, and updates the point cloud data 131. The stereo camera 120 transmits the data points together with a camera ID identifying the stereo camera 120 to the storage device 130. After the update of the point cloud data 131, the storage device 130 transmits an update signal indicating that the point cloud data 131 has been updated, together with the camera ID indicating the stereo camera 120 that acquired the data points, to the LiDAR sensor 110. The LiDAR sensor 110, upon receiving the update signal, extracts empty areas and measures the distance in the empty areas. The LiDAR sensor 110 obtains, on the basis of the camera ID, the angle of intersection between an edge and an epipolar line on the projection plane of the stereo camera 120, and estimates and extracts empty areas on the basis of the angle.

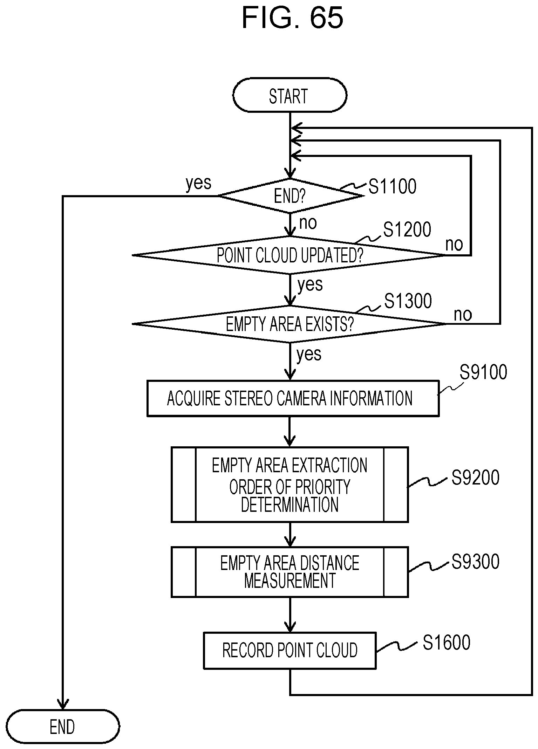

Fig. 65 is a flowchart illustrating operations by the LiDAR sensor 110 in the present modification. In this flowchart, steps S8500 to S8700 in the flowchart illustrated in Fig. 54 are replaced with steps S9100 to S9300. However, in the present modification, in step S1200, information on the camera ID, that is, an identification code of the stereo camera 120, is received in addition to the update signal indicating that the point cloud data 131 has been updated. Hereinafter, the points that differ from the operations illustrated in Fig. 54 will be described.

### <Step S9100>

The processing circuit 113 acquires, on the basis of the camera ID acquired in step S1200, the camera center coordinates of the stereo camera 120 recorded in advance in the storage device 114.

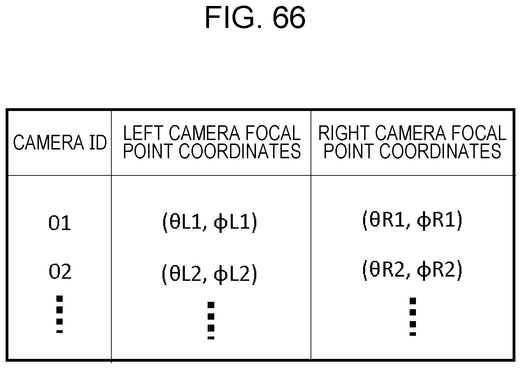

Fig. 66 is a diagram illustrating an example of information indicating the camera center coordinates of the stereo camera 120 which are recorded in the storage device 114. The camera center coordinates correspond to the coordinates of the points Ol and Or illustrated in Fig. 63. In the example in Fig. 66, the camera ID identifying the stereo camera 120, the camera center coordinates of the left camera 121 and the camera center coordinates of the right camera 122 of each stereo camera 120 are expressed in the coordinate system of the point cloud data 131. This information is used to identify the epipolar plane of the stereo camera 120.

### <Step S9200>

The processing circuit 113 references the point cloud data 131 recorded in the storage device 130, and as illustrated in the example in Fig. 63, extracts as empty areas one or more areas which lie on the line segment 440 connecting the point Ol at the center coordinates of the left camera 121 of the stereo camera 120 acquired in step S9100 and the point P2L and which are ahead of the projection plane 121P of the left camera 121. Furthermore, an order of priority is determined for the empty areas on the basis of the sizes of the empty areas in the same epipolar plane. Details of the method for extracting empty areas will be described later.

### <Step S9300>

The processing circuit 113 measures the distance in each empty area recorded in the storage device 114. Details of the method for determining the distance measurement direction will be described later.

### <Step S1600>

The processing circuit 113 converts the coordinates of the data points measured in step S9300 to the same coordinate system as the point cloud data 131, and transmits the converted coordinates to the storage device 130. At this time, the empty areas in the storage device 114 are deleted. After the operations in step S1600, the flow returns to step S1100.

By repeating the operations in steps S1100 to S1600, if the point cloud data 131 is updated on the basis of a distance measurement result from the stereo camera 120, the LiDAR sensor 110 can prioritize distance measurement in empty areas where a correspondence was not found between the left and right images and data points were not acquired because the left and right images like on the same epipolar line in the stereo camera 120, and efficiently complement the information in the point cloud data 131.

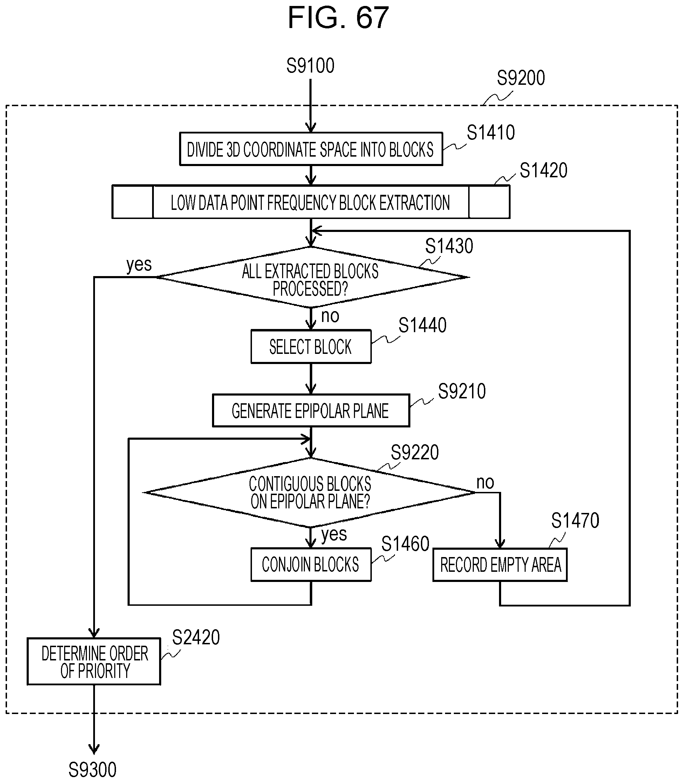

Fig. 67 is a flowchart illustrating details of the operations in step S9200. In the flowchart, the operations in steps S1410 to S1440 and step S2420 are the same as the operations in the corresponding steps illustrated in Fig. 55. Hereinafter, the points that differ from the operations in Fig. 55 will be described.

### <Step S9210>

The processing circuit 113 generates an epipolar plane passing through the block selected in step S1440. The processing circuit 113 generates, as the epipolar plane for the block, the plane passing through a straight line passing through the focal point coordinates of the left and right cameras 121 and 122 acquired in step S9100 and the center point of the block.

### <Step S9220>

From among the blocks extracted in step S1420, a block which is adjacent to the selected block and which lies on the epipolar plane generated in step S9210 is selected. If an appropriate block exists, the flow proceeds to step S1460. If an appropriate block does not exist, the flow proceeds to step S1470.

### <Step S1460>

The processing circuit 113 conjoins the selected block with the adjacent block or an area containing the adjacent block to form a unified area. After step S1460, the flow returns to step S9220.

By repeating steps S9220 and S1460, adjacent blocks which lie on the same epipolar plane and which have a low frequency of valid data points can be conjoined to generate the largest possible empty area.

### <Step S1470>

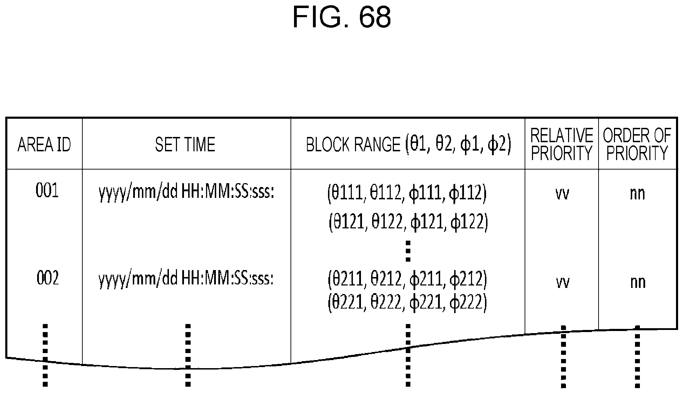

The processing circuit 113 records the contiguous area formed from one or more blocks in the storage device 114 as an empty area. Fig. 68 is a diagram illustrating an example of information recorded in the storage device 114. In this example, for each empty area, an area ID, the time when the area was set, and the coordinate ranges of all of the conjoined blocks are recorded. After step S1470, the flow returns to step S1430.

By repeating the operations in steps S1430 to S1470, adjacent blocks are unified as a single empty area and information on each area is stored for all of the blocks extracted in step S1420.

### <Step S2420>

The processing circuit 113 sets an order of priority for distance measurement with respect to the one or more empty areas recorded in the storage device 114. The order of priority may be determined by largest number of conjoined blocks, for example. Since blocks that lie on the same epipolar plane are conjoined, empty areas having a high probability of containing many data points that could not be acquired by the stereo camera 120 are prioritized.

In the above operations, the polar coordinate space of the point cloud data 131 is divided into blocks, and in step S1420, a blocks in which the frequency of data points is less than a certain number are extracted from the divided blocks. The operations are not limited to the above, and for example, the above processing may also be limited to within the distance measurement range of the stereo camera 120 identified by the camera ID.

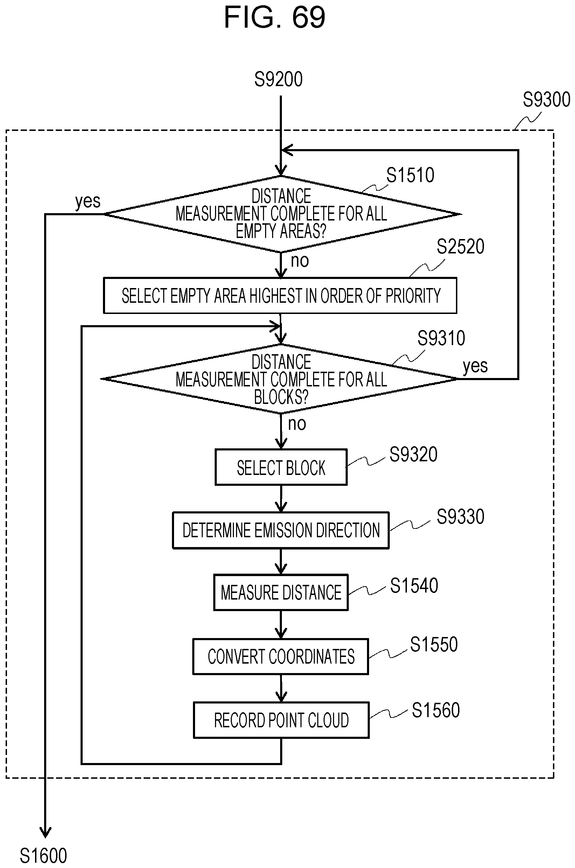

Fig. 69 is a flowchart illustrating details of the empty area distance measurement operations by the LiDAR sensor 110 in step S9300 illustrated in Fig. 65. Hereinafter, the operations in each step will be described.

### <Step S1510>

The processing circuit 113 determines whether distance measurement is complete for all of the empty areas recorded in the storage device 114. If the distance measurement operations are finished for all of the empty areas, the flow proceeds to step S1600. If an unmeasured empty area remains, the flow proceeds to step S2520.

### <Step S2520>

The processing circuit 113 selects the empty area highest in the order of priority from among the empty areas in which the distance has not been measured.

### <Step S9310>

The processing circuit 113 determines whether distance measurement is complete for all of the blocks included in the empty area selected in step S2520. If the distance measurement operations are finished for all of the blocks included in the empty area, the flow returns to step S1510. If there is an unmeasured block among the blocks included in the empty area, the flow proceeds to step S9320.

### <Step S9320>

The processing circuit 113 selects one unmeasured block from among the blocks included in the empty area recorded in the storage device 114.

### <Step S9330>

The processing circuit 113 determines the center of the range of the block selected in step S9320 as the emission direction of a beam.

### <Step S1540>

The processing circuit 113 outputs control signals causing the beam scanner 111 and the light-receiving device 112 to execute distance measurement. The control signal to the beam scanner 111 includes a signal designating the emission direction. The emission direction designated by the signal is the direction determined in step S9330.

### <Step S1550>

The processing circuit 113 converts the three-dimensional coordinates of the data points obtained from the distance data acquired in step S1540 and the information on the emission direction of the beam from values in the coordinate system of the LiDAR sensor 110 into values in the coordinate system of the point cloud data 131.

### <Step S1560>

The processing circuit 113 outputs information on the data points of which the coordinates were converted in step S1550 to the storage device 130. The storage device 130 stores the information on the data points in addition to the point cloud data 131. After the operations in step S1560, the flow returns to step S9310.

By repeating steps S9310 to S1560, the distance of a representative point is measured for all of the blocks included in the empty area, and the data on the acquired points is added to the point cloud data 131 in the storage device 130. Furthermore, by repeating steps S1510 to S1560, the distance is measured in units of blocks included in an empty area for all of the empty areas recorded in the storage device 114, and the data on the acquired points is added to the point cloud data 131.

Through the above operations, data points can be complemented efficiently by prioritizing distance measurement for areas that lie on a line segment connecting the camera center in real space and a target pixel, even for objects for which it is difficult to generate data points because three-dimensional measurement is difficult, such as with pixels where an edge in an image acquired by a stereo camera overlaps with the epipolar line.

### (Modification 3 of Embodiment 4)

Embodiment 4 is an example in which the distance measurement sensor other than the LiDAR sensor measures distance according to a multi-camera method. Furthermore, with regard to distance measurement of an object for which it is difficult to obtain definite features with a stereo camera, such as a wall or other flat plane with no edges, for example, in Modification 1 of Embodiment 4, distance measurement is prioritized for empty areas inside a closed curve detected from an image captured by the stereo camera.

On the other hand, when the distance measurement sensor other than the LiDAR sensor is a monocular camera that estimates the distance to an object using blur in the image, similar difficulties to those of distance measurement device using a stereo camera occur with respect to objects for which blur is measured and objects for which it is difficult to acquire the edges of color patterns, such as walls, for example. The present modification is an example in which the stereo camera in Modification 1 of Embodiment 4 is replaced with a monocular camera with a distance measurement function.

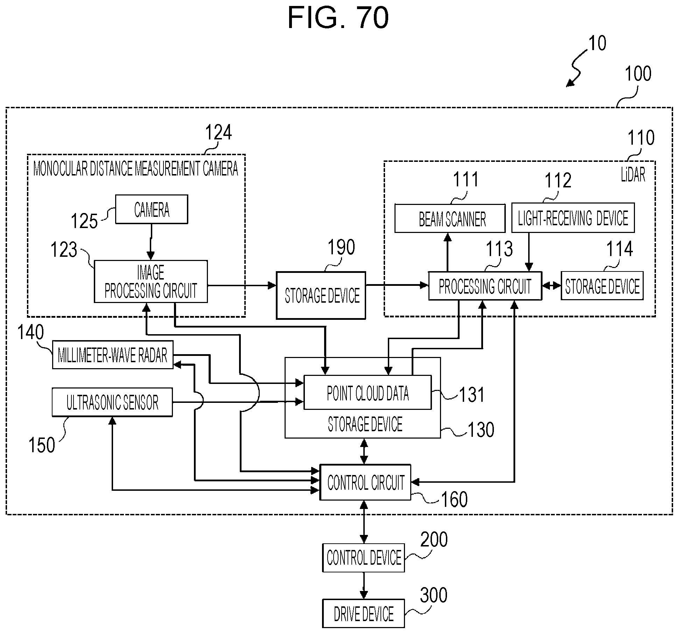

Fig. 70 is a block diagram of the distance measurement system 10 for explaining Modification 3 of Embodiment 4. Fig. 70 is similar to Fig. 43 except that the stereo camera 120 in Fig. 43 is replaced with a monocular distance measurement camera 124.

The monocular distance measurement camera 124 includes a camera 125 and an image processing circuit 123.
The camera 125 is a camera which is provided with a lens and an image sensor and which acquires images.

The image processing circuit 123 processes image information acquired by the camera 125 to estimate distance. The estimation of distance from an image is performed according to, for example, the method utilizing the blur of edges which is used for camera autofocus.

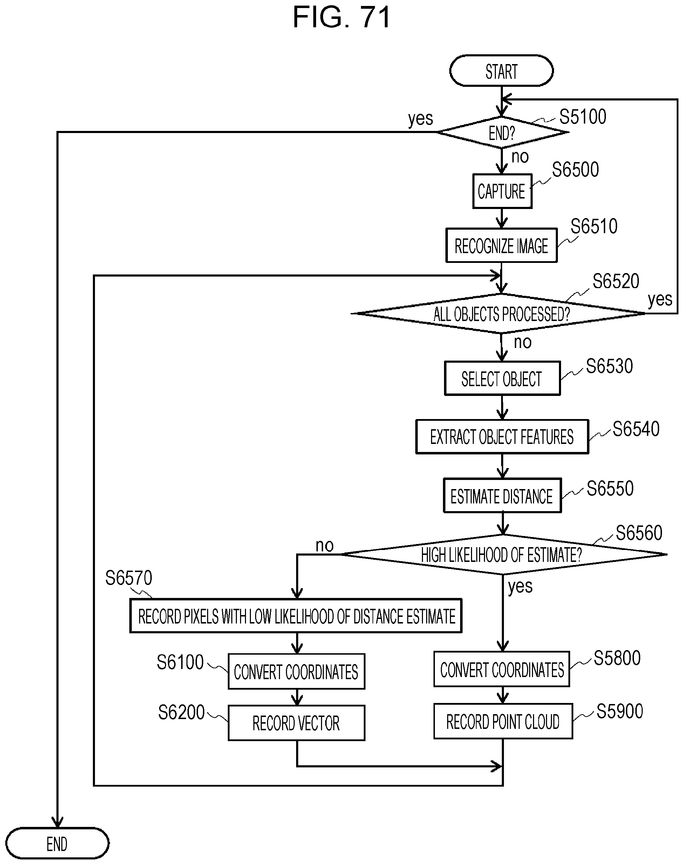

Fig. 71 is an example of a flowchart illustrating operations by the monocular distance measurement camera 124 in the present modification. The monocular distance measurement camera 124 starts operations on the basis of a start signal from the control circuit 160 and executes the operations illustrated in Fig. 71. Hereinafter, the operations in each step will be described.

### <Step S6500>

The camera 125 captures a target scene on the basis of capture control information outputted by the image processing circuit 123.

### <Step S6510>

The image processing circuit 123 performs image recognition processing on the image captured in step S6500. The image recognition processing may be performed according to a common method, such as machine learning, for example. Through image recognition, objects in the image are identified, and pixels included in the objects and pixels not included in the objects are divided.

### <Step S6520>

The image processing circuit 123 determines whether the processing is finished for all objects recognized in step S6510. If the processing is finished for all of the recognized objects, the flow returns to step S5100. If the processing is not finished, the flow proceeds to step S6530.

### <Step S6530>

The image processing circuit 123 selects a pixel area included in an object for which the processing is not finished among the objects recognized in step S6510.

### <Step S6540>

The image processing circuit 123 extracts, for the object selected in step S6530, features such as edges and textures, for example, that can be used to determine blur in a pixel area included in the object.

<Step S6550>

The image processing circuit 123 estimates the distance to the object on the basis of the degree of blur. The method of estimation may be performed according to an aberration map distance measurement technique using a point spread function (PSF), for example.

### <Step S6560>

The image processing circuit 123 determines whether the likelihood of estimate for the estimation result in step S6550 is higher than a predetermined value. If the likelihood of estimate is higher than a predetermined value, the flow proceeds to step S5800. If the likelihood of estimate is lower than the predetermined value, the flow proceeds to step S6570. The method for determining the likelihood of estimate may be, for example, a calculation using the variation of estimated distance values in the object.

### <Step S6570>

The image processing circuit 123 obtains pixels that form edges of the object and a pixel area included in the object for which the likelihood of distance estimate is determined to be low in step S6560 as pixels with a low likelihood of distance estimate, and stores the obtained pixels in the storage device 190.

The operations in steps S5800 and S5900 and steps S6100 and S6200 that follow are similar to Fig. 45 of Embodiment 4. By repeating the operations from steps S6520 to S5900 and the operations from steps S6520 to S6200, the distance is estimated for all of the objects recognized in the image.

Through the operations illustrated in Fig. 71, the distance is estimated for all of the objects detected by the monocular distance measurement camera 124, and pixels with a low likelihood of distance measurement can be recorded in the storage device 190 as empty areas and subjected to distance measurement processing by the LiDAR sensor.

The operations by the LiDAR sensor 110 are similar to Fig. 47 of Embodiment 4. With this arrangement, distance measurement is prioritized for the empty areas.

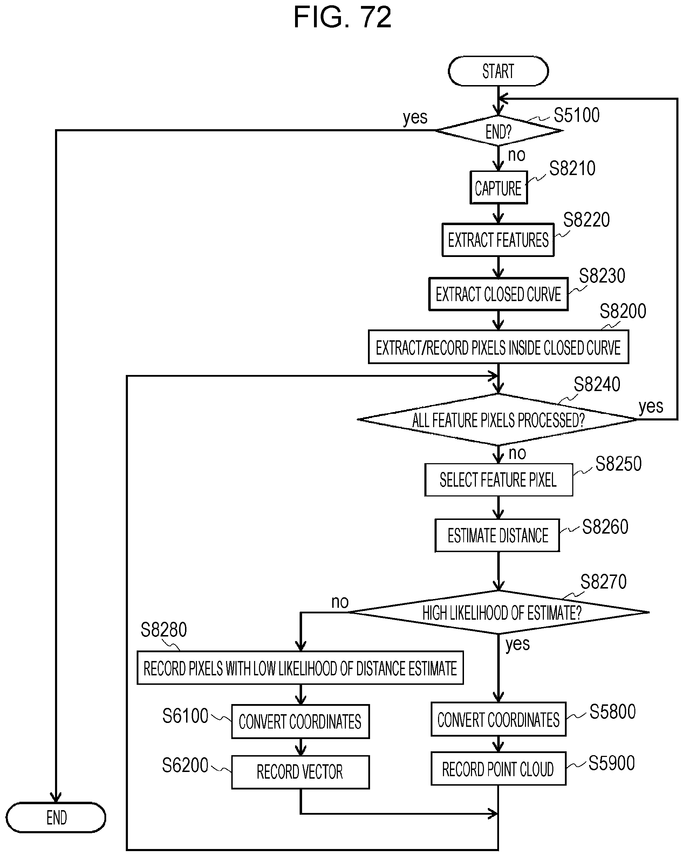

Note that the camera 125 may also operate according to the flowchart illustrated in Fig. 72. In this flowchart, steps S5100, S8200, S5800, S5900, S6100, and S6200 are similar to Fig. 52. Hereinafter, the operations in the steps that differ from Fig. 52 will be described.

### <Step S8210>

The camera 125 captures a target scene on the basis of capture control information outputted by the image processing circuit 123.

### <Step S8220>

The image processing circuit 123 extracts features such as edges and textures, for example, that can be used to determine blur in the pixel area.

### <Step S8230>

The image processing circuit 123 extracts edges forming a closed curve from the features extracted in step S8220, and assigns an ID to the extracted closed curve.
The method for determining a closed curve is, for example, a method of fitting a closed curve model or connecting edge endpoints that are close in distance.

### <Step S8240>

The image processing circuit 123 determines whether all of the feature pixels in the pixel area have been processed. If all of the feature pixels in the pixel area have been processed, the flow returns to step S5100. If there is an unprocessed feature pixel in the pixel area, the flow proceeds to step S8250.

### <Step S8250>

The image processing circuit 123 selects an unprocessed feature pixel from among the feature pixels in the pixel area.

### <Step S8260>

The image processing circuit 123 estimates the distance for the feature selected in step S8250. For example, distance measurement of an edge pixel is performed using the blur of the edge.

### <Step S8270>

The image processing circuit 123 determines whether the likelihood of estimate for the estimation result in step S8260 is higher than a predetermined value. If the likelihood of estimate is higher than a predetermined value, the flow proceeds to step S5800. If the likelihood of estimate is lower than the predetermined value, the flow proceeds to step S8280.

### <Step S8280>

The image processing circuit 123 stores information on pixels with a low likelihood of estimate in the storage device 190.

The operations in steps S5800 and S5900 and steps S6100 and S6200 that follow are similar to Fig. 45 of Embodiment 4.

Through the operations illustrated in Fig. 72, the distance is estimated for all of the features inside a closed curve detected by the monocular distance measurement camera 124, and pixels with a low likelihood of distance measurement can be recorded in the storage device 190 as empty areas and subjected to distance measurement processing by the LiDAR sensor.

The operations by the LiDAR sensor 110 are similar to Fig. 54 in Modification 1 of Embodiment 4. With this arrangement, distance measurement is prioritized for empty areas inside a closed curve.

As above, according to the present modification, the distance can also be measured with respect to objects for which distance measurement is difficult due to the characteristics of the monocular camera with a distance measurement function, and the point cloud data can be complemented.

Note that in Embodiment 4 and the modifications thereof, a method for prioritizing the directions of non-corresponding edges, a method for prioritizing areas inside a closed curve, and a method for prioritizing empty areas corresponding to pixels where an edge overlaps with the epipolar line are each described as the method for determining an order of priority for the distance measurement by the LiDAR sensor. These conditions may also be combined to configure a LiDAR sensor that executes operations different from the above. For example, if no edge is detected or if an edge is on the epipolar line and an empty area is inside a closed curve, that is, inside the area of an object, the relative priority may be raised so that the empty area is prioritized for distance measurement by the LiDAR sensor.

The various features described in relation to the foregoing embodiments and modifications thereof can be combined, as appropriate, to obtain new embodiments.

### Industrial Applicability

The technology according to the present disclosure is broadly usable in devices and systems that measure distance. For example, the technology according to the present disclosure is applicable to a moving body such as a vehicle equipped with a LiDAR system. Reference Signs List

10 system
22 light source
25 electric motor
26 mirror
27 half mirror
30 object
50 vehicle
60 light beam
70 reflected light
100 distance measurement system
110 LiDAR sensor
111 beam scanner
112 light-receiving device
113 processing circuit
114, 130, 172, 190 storage device
120 stereo camera
121 left camera
122 right camera
123 image processing circuit
131 point cloud data
140 millimeter-wave radar
150 ultrasonic sensor
160 control circuit
170 image recognition device
171 image recognition circuit
180 map acquisition device
181 receiving device
182 matching device
200 control device
220 phase shifter
280 optical waveguide element
230 beam splitter
240 substrate
300 actuating device
410 object
420 line segment
430 epipolar line

## Claims

1. A distance measurement system comprising:
multiple distance measurement devices, including a LiDAR sensor and at least one other distance measurement device; and
a storage device storing three-dimensional point cloud data based on distance measurement data acquired by each of the multiple distance measurement devices,
the LiDAR sensor comprising:
a light-emitting device that can change an emission direction of a light beam;
a light-receiving device that detects reflected light from the light beam and outputs a signal indicating a detection result; and
a processing circuit that controls the light-emitting device and the light-receiving device to generate the distance measurement data on a basis of the signal outputted from the light-receiving device, wherein
the processing circuit references the point cloud data to determine at least one empty area in the point cloud data, and measures distance in the empty area by causing the light-emitting device to emit the light beam toward the empty area.

2. The distance measurement system according to claim 1, wherein the processing circuit
determines multiple empty areas in the point cloud data and
sets a priority sequence for the multiple empty areas and measures distance in the multiple empty areas sequentially according to the set priority sequence by causing the light-emitting device to emit the light beam in a direction of each of the empty areas.

3. The distance measurement system according to claim 2, wherein the processing circuit
determines, on a basis of an image acquired by a camera, whether a specific type of object exists in the multiple empty areas and
causes an empty area where the specific type of object exists to be higher in the order of priority than another empty area among the multiple empty areas.

4. The distance measurement system according to claim 3, wherein
the at least one other distance measurement device includes a stereo camera and
the camera is one of two cameras provided in the stereo camera.

5. The distance measurement system according to claim 3 or 4, wherein the processing circuit detects at least one closed curve in the image and causes a relative priority of an empty area corresponding to the inside of the closed curve to be higher than the relative priority of another empty area.

6. The distance measurement system according to any of claims 3 to 5, wherein
the at least one other distance measurement device includes a stereo camera provided with two cameras and
the processing circuit causes a relative priority of an empty area corresponding to a feature from among features identified from a first image acquired by one of the two cameras for which a corresponding point is not detected in a second image acquired by the other of the two cameras to be higher than the relative priority of another empty area.

7. The distance measurement system according to any of claims 2 to 6, wherein the processing circuit acquires map data including structure location information and matches the map data to the point cloud data to thereby extract at least one empty area corresponding to a location of a specific structure from the multiple empty areas, and causes a relative priority of the extracted empty area to be higher than a relative priority of another empty area.

8. The distance measurement system according to any of claims 2 to 7, wherein the processing circuit sets a higher relative priority with respect to a larger empty area among the multiple empty areas.

9. The distance measurement system according to any of claims 1 to 8, wherein the processing circuit sets a representative point inside the empty area and causes the light-emitting device to emit the light beam toward the representative point.

10. The distance measurement system according to claim 9, wherein the representative point is a center of the empty area.

11. The distance measurement system according to any of claims 1 to 10, wherein if the empty area is larger than a predetermined size, the processing circuit divides the empty area into multiple partial areas and causes the light-emitting device to sequentially emit the light beam in a direction of each of the divided partial areas.

12. The distance measurement system according to any of claims 1 to 11, wherein the LiDAR sensor measures distance asynchronously with the at least one other distance measurement device.

13. The distance measurement system according to any of claims 1 to 12, wherein the processing circuit executes the determination of the empty area and the distance measurement in the empty area if the point cloud data in the storage device is updated.

14. The distance measurement system according to claim 13, wherein if the point cloud data is updated while the determination of the empty area and/or the distance measurement in the empty area is in operation, the processing circuit re-executes the determination of the empty area and/or the distance measurement in the empty area.

15. The distance measurement system according to claim 13 or 14, wherein the storage device updates the point cloud data when new distance measurement data is acquired from the at least one other distance measurement device or if a location and/or an orientation of the distance measurement system changes.

16. The distance measurement system according to any of claims 2 to 8, wherein if a location and/or an orientation of the distance measurement system changes, the storage device updates the point cloud data by performing a coordinate conversion, and when the storage device updates the point cloud data by performing the coordinate conversion, the processing circuit re-sets a relative priority of the multiple empty areas.

17. A moving body comprising the distance measurement system according to any of claims 1 to 16.

18. A LiDAR sensor used in a distance measurement system comprising multiple distance measurement devices, including the LiDAR sensor and at least one other distance measurement device, and a storage device storing three-dimensional point cloud data based on distance measurement data acquired by each of the multiple distance measurement devices, the LiDAR sensor comprising:
a light-emitting device that can change an emission direction of a light beam;
a light-receiving device that detects reflected light from the light beam and outputs a signal indicating a detection result; and
a processing circuit that controls the light-emitting device and the light-receiving device to generate the distance measurement data on a basis of the signal outputted from the light-receiving device, wherein
the processing circuit references the point cloud data to determine at least one empty area in the point cloud data, and measures distance in the empty area by causing the light-emitting device to emit the light beam toward the empty area.

19. A method for controlling a LiDAR sensor used in a distance measurement system comprising multiple distance measurement devices, including the LiDAR sensor and at least one other distance measurement device, and a storage device storing three-dimensional point cloud data based on distance measurement data acquired by each of the multiple distance measurement devices, the method comprising:
referencing the point cloud data to determine at least one empty area in the point cloud data; and
causing the LiDAR sensor to execute distance measurement in the empty area by causing a light beam to be emitted toward the empty area.

20. A computer program used in a distance measurement system comprising multiple distance measurement devices, including a LiDAR sensor and at least one other distance measurement device, and a storage device storing three-dimensional point cloud data based on distance measurement data acquired by each of the multiple distance measurement devices, the computer program causing a computer to execute a process comprising:
referencing the point cloud data to determine at least one empty area in the point cloud data; and
causing the LiDAR sensor to execute distance measurement in the empty area by causing a light beam to be emitted toward the empty area.
